(19) Europäisches Patentamt / European Patent Office / Office européen des brevets

(11) **EP 3 635 459 B1**

(12) **EUROPEAN PATENT SPECIFICATION**

(45) Date of publication and mention of the grant of the patent:
**20.11.2024 Bulletin 2024/47**

(21) Application number: **18813857.2**

(22) Date of filing: **07.06.2018**

(51) International Patent Classification (IPC):
**G02B 6/30** (2006.01)  **G02B 6/02** (2006.01)
**G02B 6/04** (2006.01)  **G02B 6/28** (2006.01)
**G02B 6/024** (2006.01)

(52) Cooperative Patent Classification (CPC):
**G02B 6/2843; G02B 6/2821;** G02B 6/02042;
G02B 6/04; G02B 6/30

(86) International application number:
**PCT/US2018/036539**

(87) International publication number:
**WO 2018/227008 (13.12.2018 Gazette 2018/50)**

(54) **OPTICAL COUPLER ARRAYS**

OPTISCHE KOPPLERARRAYS

RÉSEAUX DE COUPLEURS OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2017  US 201715617684**
**27.09.2017  US 201762564178 P**
**13.11.2017  US 201715811462**

(43) Date of publication of application:
**15.04.2020  Bulletin 2020/16**

(73) Proprietor: **Chiral Photonics, Inc.**
**Pine Brook, NJ 07058 (US)**

(72) Inventors:
• **KOPP, Victor, Il'ich**
**Pine Brook, NJ 07058 (US)**
• **PARK, Jongchul**
**Pine Brook, NJ 07058 (US)**
• **SINGER, Jonathan**
**Pine Brook, NJ 07058 (US)**

• **NEUGROSCHL, Daniel**
**Pine Brook, NJ 07058 (US)**

(74) Representative: **f & e patent**
**Braunsberger Feld 29**
**51429 Bergisch Gladbach (DE)**

(56) References cited:
**WO-A1-2005/111680    WO-A1-2017/053479**
**US-A1- 2007 280 597    US-A1- 2008 209 952**
**US-A1- 2015 212 274    US-A1- 2016 245 992**
**US-B2- 8 184 363**

• **FONTAINE NICOLAS K: "Photonic lantern spatial multiplexers in space-division multiplexing", 2013 IEEE PHOTONICS SOCIETY SUMMER TOPICAL MEETING SERIES, IEEE, 8 July 2013 (2013-07-08), pages 97 - 98, XP032491822, DOI: 10.1109/PHOSST.2013.6614504**

EP 3 635 459 B1

**Description**

The present invention refers to an optical coupler array for optical coupling of a plurality of optical fibers to an optical device as defined in the claims. The disclosure of the application further describes embodiments of optical coupler arrays not falling under the definition of the claims, said embodiments are not part of the invention.

BACKGROUND

Field

PART I

The present disclosure relates generally to couplers for providing optical coupling between a plurality of optical fibers (or other optical devices) and an optical device having a plurality of waveguide interfaces, and more particularly to a configurable optical fiber polarization mode coupler device comprising an array of multiple optical fiber waveguides, configured to provide, at each of its ends, a set of high optical coupling coefficient interfaces with configurable numerical apertures (which may be the same, or may vary between coupler ends), where the channel-to-channel spacing at the coupler second end is smaller than the channel-to-channel spacing at the coupler first end, thus enabling advantageous coupling between a predetermined number of optical devices (including optical fibers) at the coupler first end, and at least one optical waveguide device with at least a corresponding number of closely-spaced waveguide interfaces at the coupler second end, that are preferably optimized for dense optical input/output interfaces, and that further addresses polarization-related applications.

PART II

The present disclosure relates generally to an optical coupler array, e.g., a multichannel optical coupler array, for coupling, e.g., a plurality of optical fibers to at least one optical device. Some embodiments can relate to coupling light to and from a plurality of fibers, such as to and from one or more single mode fibers, few-mode fibers, multimode fibers, multicore single mode fibers, multicore few-mode fibers, and/or multicore multimode fibers. Some embodiments can relate to coupling light to and from photonic integrated circuits (PICs) and to and from multicore fibers (MCFs). Some embodiments can relate generally to high power single mode laser sources, and to devices for coherent combining of multiple optical fiber lasers to produce multi-kilowatt single mode laser sources. Some embodiments may relate to phase locked optical fiber components of a monolithic design that may be fabricated with a very high degree of control over precise positioning (e.g. transverse or cross-sectional positioning) of even large quantities of plural waveguides, and that may potentially be configurable for increasing or optimization of the components' fill factor (which can be related to the ratio of the mode field diameter of each waveguide at the "output" end thereof, to the distance between neighboring waveguides).

Description of the Related Art

PART I

Optical waveguide devices are indispensable in various high technology industrial applications, and especially in telecommunications. In recent years, these devices, including planar waveguides, and two or three dimensional photonic crystals are being used increasingly in conjunction with conventional optical fibers. In particular, optical waveguide devices based on high refractive index contrast or high numerical aperture (NA) waveguides are advantageous and desirable in applications in which conventional optical fibers are also utilized. However, there are significant challenges in interfacing optical high NA waveguide devices, including chiral optical fiber devices, with conventional low index contrast optical fibers. Typically, at least two major obstacles must be dealt with: (1) the difference between the sizes of the optical waveguide device and the conventional fiber (especially with respect to the differences in core sizes), and (2) the difference between the NAs of the optical waveguide device and the conventional fiber. Failure to properly address these obstacles results in increased insertion losses and a decreased coupling coefficient at each interface.

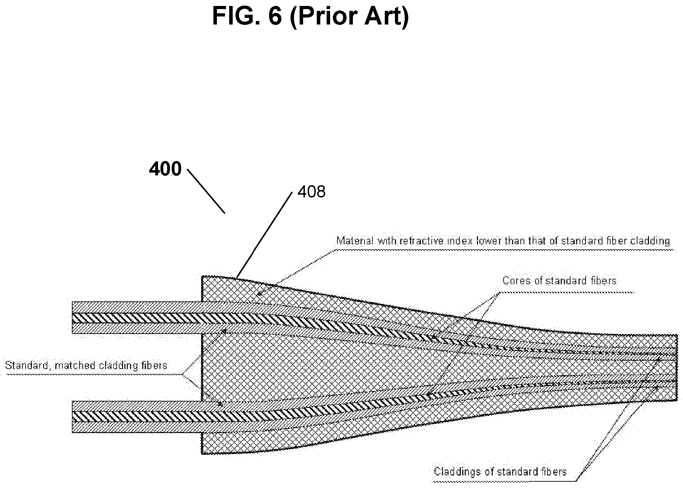

For example, conventional optical fiber based optical couplers, such as shown in FIG. 6 (Prior Art) are typically configured by inserting standard optical fibers (used as input fibers) into a capillary tube comprised of a material with a refractive index lower than the cladding of the input fibers. There are a number of significant disadvantages to this approach. For example, a fiber cladding-capillary tube interface becomes a light guiding interface of a lower quality than interfaces inside standard optical fibers and, therefore, can be expected to introduce optical loss. Furthermore, the capillary tube must be fabricated using a costly fluorine-doped material, greatly increasing the expense of the coupler.

A commonly assigned U.S. Patent No. 7,308,173, entitled "OPTICAL FIBER COUPLER WITH LOW LOSS AND HIGH COUPLING COEFFICIENT AND METHOD OF FABRICATION THEREOF", advantageously addressed all of the above issues by providing various embodiments of a novel optical fiber coupler capable of providing a low-loss, high-coupling coefficient interface between conventional optical fibers and optical waveguide devices.

Nevertheless, a number of challenges still remained. With the proliferation of optical devices with multiple waveguide interfaces (e.g., waveguide arrays), establishing low-loss high-accuracy connections to arrays of low or high NA waveguides often provide problematic, especially because the spacing between the waveguides is very small making coupling thereto all the more difficult. The commonly assigned U.S. Patent No. 8,326,099, entitled "OPTICAL FIBER COUPLER ARRAY", issued December 4, 2012, addressed the above challenge by providing, in at least a portion of the embodiments thereof, an optical fiber coupler array that provides a high-coupling coefficient interface with high accuracy and easy alignment between an optical waveguide device having a plurality of closely spaced high NA waveguide interfaces, and a plurality of optical fibers each having low numerical apertures separated by at least a fiber diameter. While the '099 Patent already teaches the coupler, which is capable to independently control waveguide NAs and channel-to-channel spacing, it did not specifically address the full extent of configurability with respect to interfacing with plurality of optical fibers, possible use of its disclosed novel structures and inventive methodologies for fabrication thereof.

However, while the '865 Application effectively and advantageously addresses various techniques for optimizing the coupler array with regard to reduction of coupling loss at both first and second ends thereof, for many practical applications of the coupler array, the back reflection (or return loss) of light traveling therethrough, at one of, or at both first and second end(s) of the novel coupler array is very important.

For example, optimization to reduce back reflection is critical for telecommunication and for sensing applications (i.e. when light inserted into the coupler array is used for sensing), because back reflections can undesirably distort the characteristics of the light being sensed and thus negatively impact sensor performance.

Accordingly, it would be advantageous, if the refractive indices and sizes of both inner and outer core, and/or other characteristics of vanishing core waveguides in the novel optical coupler array would be optimized to reduce the back reflection for light propagating from the plurality of the optical fibers at the coupler first end to the optical device at the coupler second end, and/or vice versa.

Furthermore, it would also be useful to provide a configurable optical fiber polarization mode coupler device that addresses applications requiring optical waveguides with polarization maintaining or polarizing properties, especially where high power handling is desirable (including, but not limited to, in-fiber polarizers, in-fiber polarization combiners, in-fiber polarization splitters).


## PART II

Optical waveguide devices are useful in various high technology industrial applications, and especially in telecommunications. In recent years, these devices, including planar waveguides, two or three dimensional photonic crystals, multi-mode fibers, multicore single-mode fibers, multicore few-mode fibers, and multicore multi-mode fibers are being employed increasingly in conjunction with conventional optical fibers. In particular, optical waveguide devices based on refractive index contrast or numerical aperture (NA) waveguides that are different from that of conventional optical fibers and multichannel devices are advantageous and desirable in applications in which conventional optical fibers are also utilized. However, there are significant challenges in interfacing dissimilar NA waveguide devices and multichannel devices with channel spacing less than a diameter of conventional fibers, with conventional optical fibers. For example, in some cases, at least some of the following obstacles may be encountered: (1) the difference between the sizes of the optical waveguide device and the conventional fiber (especially with respect to the differences in core sizes), (2) the difference between the NAs of the optical waveguide device and the conventional fiber, and (3) the channel spacing smaller than the diameter of conventional fibers. Failure to properly address these obstacles can result in increased insertion losses and a decreased coupling coefficient at each interface.

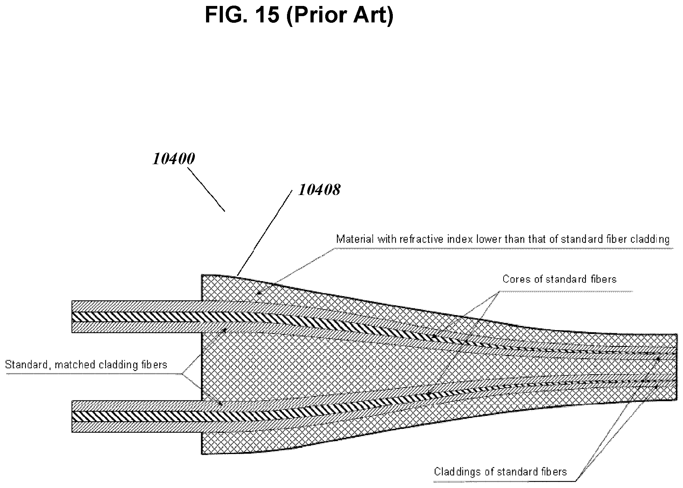

For example, conventional optical fiber based optical couplers, such as shown in FIG. 15 (Prior Art) can be configured by inserting standard optical fibers (used as input fibers) into a capillary tube comprised of a material with a refractive index lower than the cladding of the input fibers. However, there are a number of disadvantages to this approach. For example, a fiber cladding- capillary tube interface becomes a light guiding interface of a lower quality than interfaces inside standard optical fibers and, therefore, can be expected to introduce optical loss. Furthermore, the capillary tube must be fabricated using a costly fluorine-doped material, greatly increasing the expense of the coupler.

U.S. Patent No. 7,308,173, entitled "OPTICAL FIBER COUPLER WITH LOW LOSS AND HIGH COUPLING COEFFICIENT AND METHOD OF FABRICATION THEREOF", advantageously addressed some of the issues discussed above by providing various embodiments of an optical fiber coupler capable of providing a low-loss, high-coupling coefficient interface between conventional optical fibers and optical waveguide devices.

Nevertheless, a number of challenges still remained. With the proliferation of multichannel optical devices (e.g., waveguide arrays), establishing low-loss high-accuracy connections to arrays of low or high NA waveguides often was problematic, especially because the spacing between the waveguides is very small making coupling thereto all the more difficult. U.S. Patent No. 8,326,099, entitled "OPTICAL FIBER COUPLER ARRAY", issued December 4, 2012, endeavors to address the above challenge by providing, in at least a portion of the embodiments thereof, an optical fiber coupler array that provides a high-coupling coefficient interface with high accuracy and easy alignment between an optical waveguide device having a plurality of closely spaced waveguides, and a plurality of optical fibers separated by at least a fiber diameter.

U.S. Patent Application 8,712,199, entitled "CONFIGURABLE PITCH REDUCING OPTICAL FIBER ARRAY", discusses the importance of cross sectional or transverse positioning accuracy (precise cross sectional positioning in some cases) of the individual waveguides, whereas US2016/0245992 A1 relates to arrangements of the cores inside of optical devices having tapered diameters. Improved cross sectional positioning accuracy of the waveguides remains desirable.

It is also desirable to improve and/or optimize optical coupling between a set of isolated fibers (e.g., single mode fibers) at one end and individual modes (e.g of a few-mode or multimode fiber) and/or cores (e.g., of a multicore fiber) at another end.

SUMMARY

Example embodiments described herein have innovative features, no single one of which is indispensable or solely responsible for their desirable attributes. Some of the advantageous features will be described, however, the invention is only defined by the combination of features as defined in the claims. Accordingly, the invention refers to

1. An optical coupler array for optical coupling of a plurality of optical fibers to an optical device, comprising:

an elongated optical element having a first end operable to optically couple with said plurality of optical fibers, an intermediate cross section, and a second end operable to optically couple with said optical device, and comprising:
a common single coupler housing structure; a plurality of longitudinal waveguides each positioned at a predetermined spacing from one another, each having a capacity for at least one optical mode of a predetermined mode field profile, each embedded in said common single housing structure proximally to said second end, wherein at least two of said plurality of longitudinal waveguides are vanishing core waveguides, each one of said at least two vanishing core waveguides comprising:
an inner vanishing core, having a first refractive index, N-I), and having a first inner core size, ICS-1, at said first end, an intermediate inner core size, ICS-IN, at said intermediate cross section, and a second inner core size, ICS-2, at said second end; an outer core, longitudinally surrounding said inner vanishing core, having a second refractive index, N-2, and having a first outer core size, OCS-1, at said first end, an intermediate outer core size, OCS-IN, at said intermediate cross section, and a second outer core size, OCS-2, at said second end, and an outer cladding, longitudinally surrounding said outer core, having a third refractive index, N-3, a first cladding size at said first end, and a second cladding size at said second end; and wherein said common single coupler housing structure comprises a transversely contiguous medium having a fourth refractive index, N-4, surrounding said plurality of longitudinal waveguides, wherein a predetermined relative magnitude relationship between said first, second, and third refractive indices, N-I, N-2 and N-3, respectively, comprises the following magnitude relationship:, N-1 > N- 2 > N-3, wherein a total volume of said medium of said common single coupler housing structure is greater than a total volume of all said inner vanishing cores and said outer cores of the vanishing core waveguides confined within said common single coupler housing structure, and wherein said first inner core size, ICS-1, said first outer core size, OCS-1, and said predetermined spacing between said plurality of longitudinal waveguides, are simultaneously and gradually reduced, in accordance with a predetermined reduction profile, between said first end and said second end along said optical element, until said second inner core size, ICS-2, and said second outer core size, OCS-2, are reached, wherein said intermediate inner core size, ICS-IN, is selected to be insufficient to guide light therethrough, and said intermediate outer core size, OCS-IN, is selected to be sufficient to guide at least one optical mode, characterized in that said second outer core size, OCS-2, is selected to be insufficient to guide light therethrough such that:

light traveling from said first end to said second end escapes from said inner vanishing core into said corresponding outer core proximally to said intermediate cross section, and escapes from said outer core into a combined waveguide formed by at least two neighboring outer cores of the at least two vanishing core waveguides proximally to said second end, and
at least one waveguide mode of light traveling from said second end to said first end moves from the combined waveguide formed by the at least two neighboring outer cores into said outer core proximally to said intermediate cross section, and moves from said outer core into said corresponding inner vanishing core proximally to said first end.

2. The optical coupler array as mentioned under item 1, wherein said common single coupler housing structure proximally to said first end has a cross sectional configuration comprising a transversely contiguous structure with at least one hole, wherein the at least one hole contains at least one of said plurality of longitudinal waveguides creating a gap between the coupler housing structure and the at least one of said plurality of longitudinal waveguides.
3. The optical coupler array of item 1 or 2, wherein the at least one waveguide mode comprises at least one spatial mode.
4. The optical coupler array of item 1 or 2, wherein the at least two vanishing core waveguides comprise at least two polarization maintaining vanishing core waveguides, and wherein the at least one waveguide mode comprises a first polarization mode and a second polarization mode.
5. The optical coupler array of item 1 or 2,

wherein said at least two vanishing core waveguides are polarization maintaining vanishing core waveguides comprising a non-circular outer core, each operable to guide at least one optical polarization mode, and wherein for said at least two polarization maintaining vanishing core waveguides, the following parameters:

cross sectional shape of the first non-circular outer core,

cross sectional shape of the second non-circular outer core,

are selected to provide polarization maintaining properties to said at least two polarization maintaining vanishing core waveguides, and wherein said second outer core sizes, OCS-2, of said polarization maintaining vanishing core waveguides and said predetermined spacing between waveguides at said second end, are selected to be sufficient to guide at least two optical polarization modes, first and second polarization modes, in said combined waveguide formed by said two outer cores, such that:

at least one of said polarization modes of light traveling from said first end to said second end escapes from said inner vanishing core into said corresponding outer core and then is coupled into said combined waveguide formed by said two outer cores proximally to said second end, and

said first polarization mode of light traveling from said second end to said first end moves from said combined waveguide formed by said two outer cores into a first outer core and then into said corresponding inner vanishing core proximally to said first end, and

said second polarization mode of light traveling from said second end to said first end moves from said combined waveguide formed by said two outer cores into a second outer core and then into said corresponding inner vanishing core proximally to said first end.

BRIEF DESCRIPTION OF THE DRAWINGS

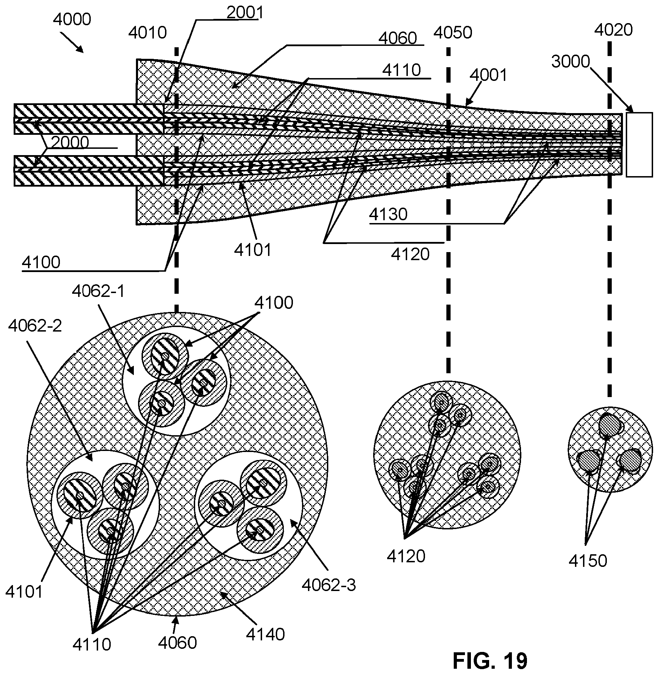

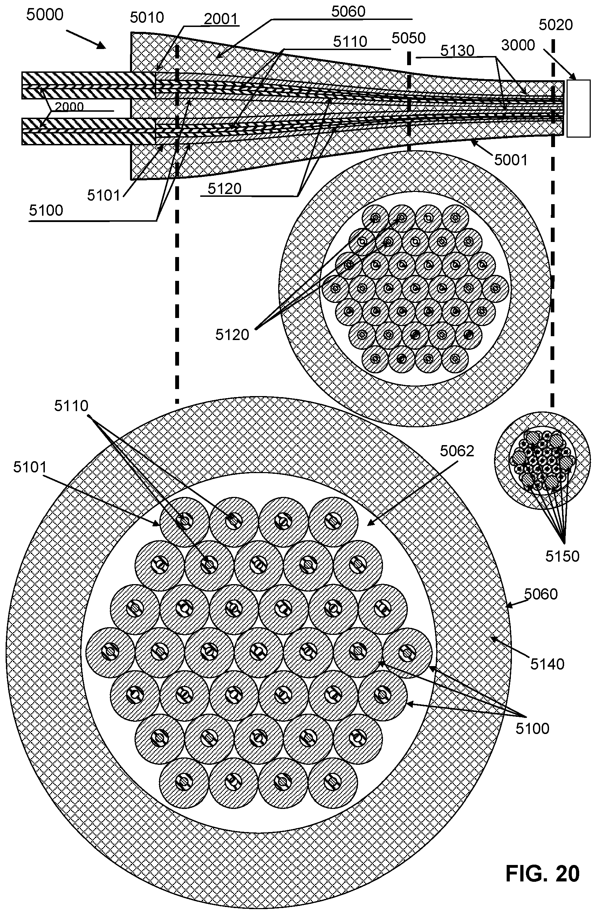

In the drawings, wherein like reference characters denote corresponding or similar elements throughout the various figures, only FIG. 19 and FIG. 20 are according to the invention. All the other FIGs are illustrative:

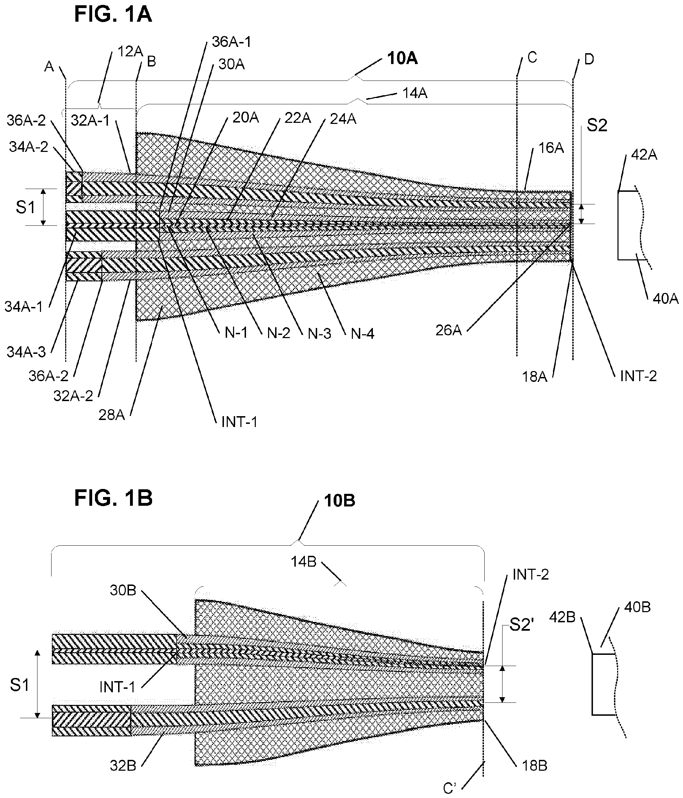

FIG. 1A is a schematic diagram of a side view of a first exemplary embodiment of the optical fiber coupler array, which comprises at least one vanishing core waveguide (VC waveguide), illustrated therein by way of example as a single VC waveguide, and at least one Non-VC waveguide, illustrated therein by way of example as a plurality of Non-VC waveguides, disposed symmetrically proximally to the exemplary single VC waveguide;
FIG. 1B is a schematic diagram of a side view of a second exemplary embodiment of the optical fiber coupler array, which comprises at least one vanishing core waveguide (VC waveguide), illustrated therein by way of example as a single VC waveguide, and at least one Non-VC waveguide, illustrated therein by way of example as a single Non-VC waveguide, disposed in parallel proximity to the exemplary single VC waveguide, where a portion of the optical fiber coupler array has been configured to comprise a higher channel-to-channel spacing magnitude at its second (smaller) end than the corresponding channel-to-channel spacing magnitude at the second end of the optical fiber coupler array of FIG. 1A;

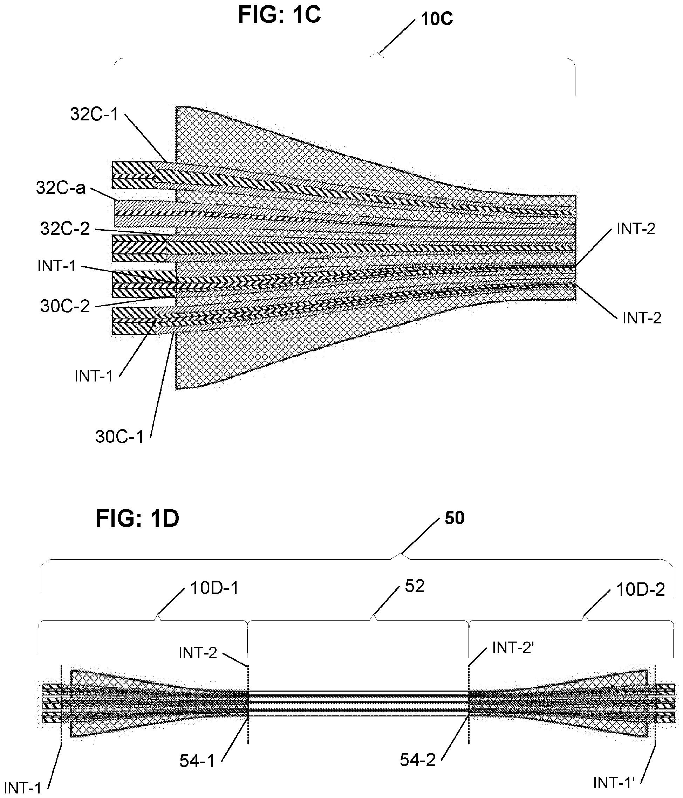

FIG. 1C is a schematic diagram of a side view of a third exemplary embodiment of the optical fiber coupler array, which comprises a plurality of VC waveguides, and a plurality of Non-VC waveguides, disposed longitudinally and asymmetrically to one another, and where at least a portion of the plural Non-VC waveguides are of different types and/or different characteristics;

FIG. 1D is a schematic diagram of a side view of a fourth exemplary embodiment of the optical fiber coupler array, configured for fan-in and fan-out connectivity and comprising a pair of novel optical fiber coupler components with a multi-core optical fiber element connected between the second (smaller sized) ends of the two optical fiber coupler components;

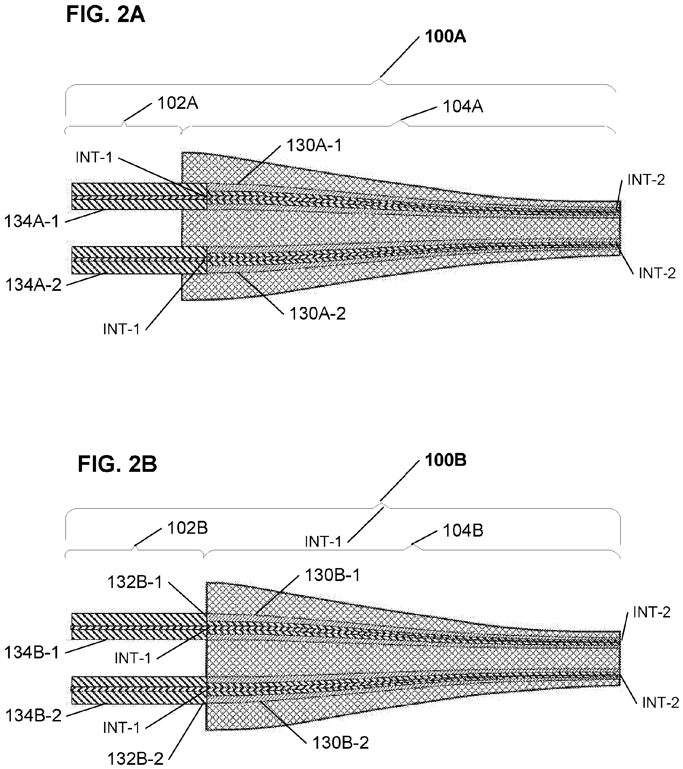

FIG. 2A is a schematic diagram of a side view of a fifth exemplary embodiment of the optical fiber coupler array, which comprises a plurality of longitudinally proximal VC waveguides at least partially embedded in a single common housing structure, wherein each plural VC waveguide is spliced, at a particular first splice location, to a corresponding elongated optical device (such as an optical fiber), at least a portion of which extends outside the single common housing structure by a predetermined length, and wherein each particular first splice location is disposed within the single common housing structure;

FIG. 2B is a schematic diagram of a side view of a sixth exemplary embodiment of the optical fiber coupler array, which comprises a plurality of longitudinally proximal VC waveguides at least partially embedded in a single common housing structure, wherein each plural VC waveguide is spliced, at a particular second splice location, to a corresponding elongated optical device (such as an optical fiber), at least a portion of which extends outside the single common housing structure by a predetermined length, and wherein each particular second splice location is disposed at an outer cross-sectional boundary region of the single common housing structure;

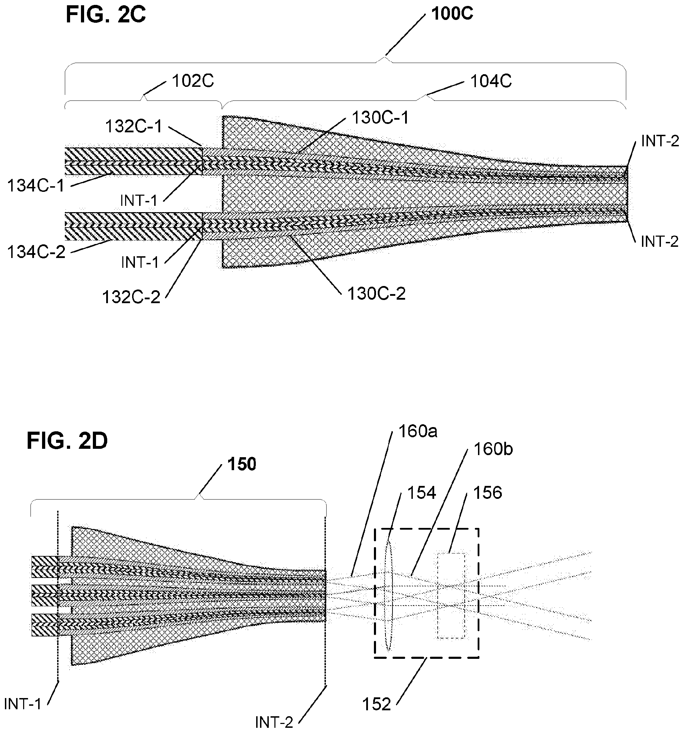

FIG. 2C is a schematic diagram of a side view of a seventh exemplary embodiment of the optical fiber coupler array, which comprises a plurality of longitudinally proximal VC waveguides at least partially embedded in a single common housing structure, wherein each plural VC waveguide is spliced, at a particular third splice location, to a corresponding elongated optical device (such as an optical fiber), at least a portion of which extends outside the single common housing structure by a predetermined length, and wherein each particular third splice location is disposed outside the single common housing structure;

FIG. 2D is a schematic diagram of a side view of an alternative embodiment of the optical fiber coupler array, comprising a plurality of longitudinally proximal VC waveguides at least partially embedded in a single common housing structure, that is configured at its second end, to optimize optical coupling to a free-space-based optical device;

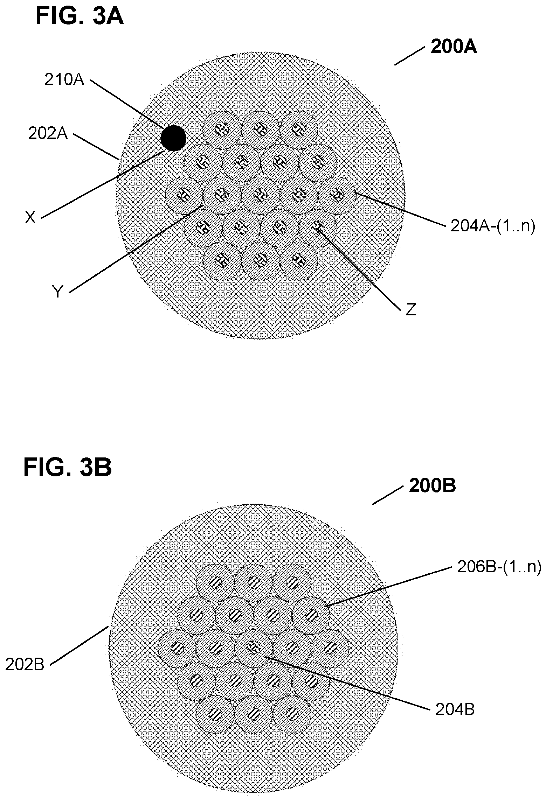

FIG. 3A is a schematic diagram of a cross-sectional view of a first alternative embodiment of the optical fiber coupler arrays of FIGs. 1D to 2D, above, and optionally comprising a fiducial element operable to provide a visual identification of waveguide arrangement / characteristics (such as alignment), which may be disposed in one of several categories of cross-sectional regions;

FIG. 3B is a schematic diagram of a cross-sectional view of a first alternative embodiment of the optical fiber coupler array of FIG. 1A, above, in which at least one VC waveguide, illustrated therein by way of example as a single VC waveguide, is positioned along a central longitudinal axis of the single common housing structure, and surrounded by a plurality of parallel proximal symmetrically positioned Non-VC waveguides;

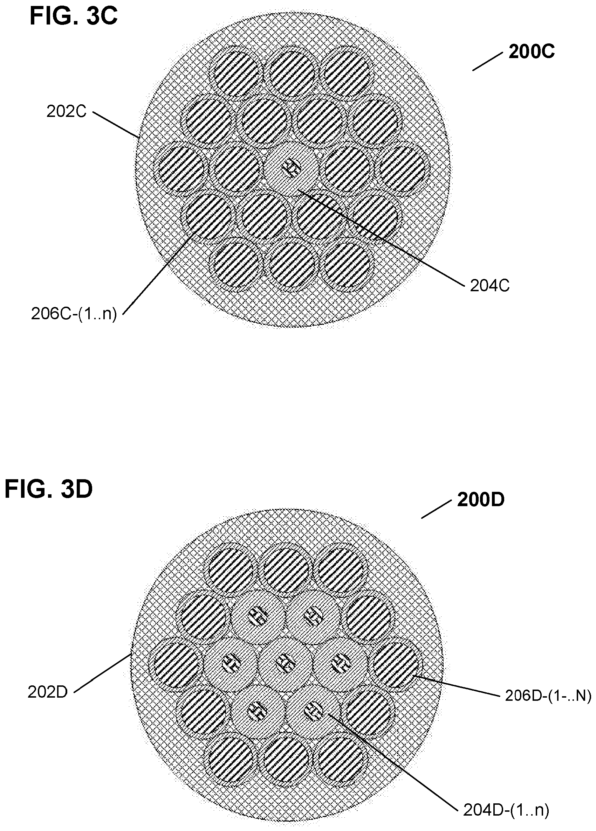

FIG. 3C is a schematic diagram of a cross-sectional view of a first alternative embodiment of the optical fiber coupler array of FIG. 3B above, in which a volume of the single common housing structure medium surrounding the sections of all of the waveguides embedded therein, exceeds a total volume of the inner and outer cores of the section of the VC waveguide that is embedded within the single common housing structure;

FIG. 3D is a schematic diagram of a cross-sectional view of a second alternative embodiment of the optical fiber coupler array of FIG. 3B above, in which the at least one VC waveguide positioned along the central longitudinal axis of the single common housing structure comprises a plurality of VC waveguides, and in a volume of the single common housing structure medium surrounding the sections of all of the waveguides embedded therein, exceeds a total volume of the inner and outer cores of the sections of the plural VC waveguides that are embedded within the single common housing structure;

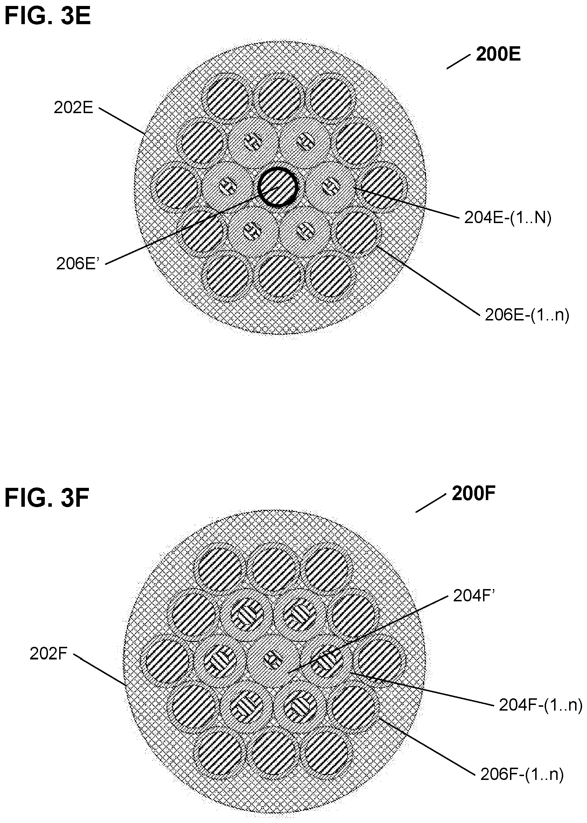

FIG. 3E is a schematic diagram of a cross-sectional view of a first alternative embodiment of the optical fiber coupler array of FIG. 3D, further comprising a central waveguide channel operable to provide optical pumping functionality therethrough;

FIG. 3F is a schematic diagram of a cross-sectional view of a second alternative embodiment of the optical fiber coupler array of FIG. 3D, in which the plural VC waveguide that is positioned along the central longitudinal axis of the single common housing structure, is of a different type, and/or comprises different characteristics from the remaining plural VC waveguides, which, if selected to comprise enlarged inner cores, may be advantageously utilized for optimizing optical coupling to different types of optical pump channels of various optical devices;

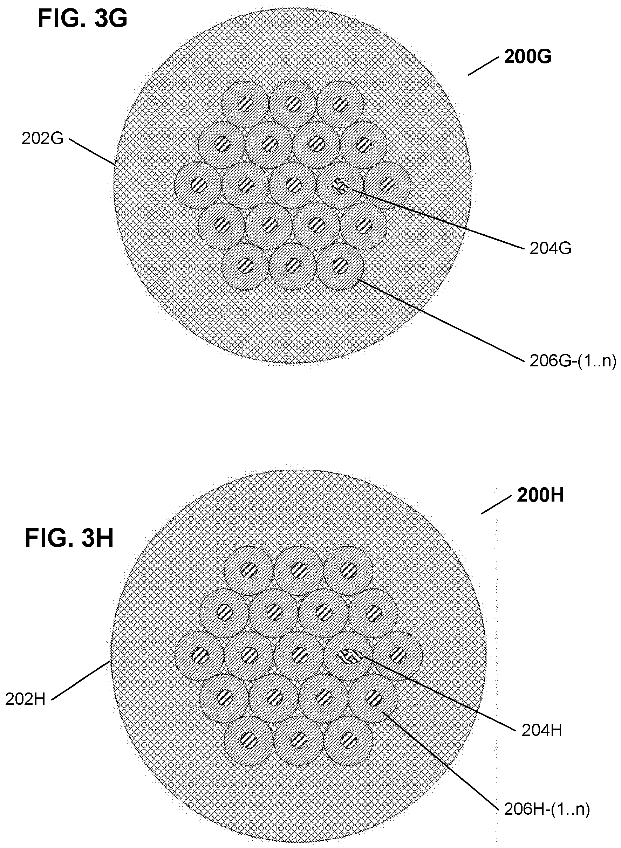

FIG. 3G is a schematic diagram of a cross-sectional view of a third alternative embodiment of the optical fiber coupler array of FIG. 3B above, in which at least one VC waveguide, illustrated therein by way of example as a single VC waveguide, is positioned as a side-channel, off-set from the central longitudinal axis of the single common housing structure, such that this embodiment of the optical fiber coupler array may be readily used as a fiber optical amplifier and or a laser, when spliced to a double-clad optical fiber having a non-concentric core for improved optical pumping efficiency;

FIG. 3H is a schematic diagram of a cross-sectional view of a first alternative embodiment of the optical fiber coupler array of FIG. 3G, above, in which the at least one VC waveguide, illustrated therein by way of example as a side-channel off-center positioned single VC waveguide, comprises polarization maintaining properties and comprises a polarization axis that is aligned with respect to its transverse off-center location;

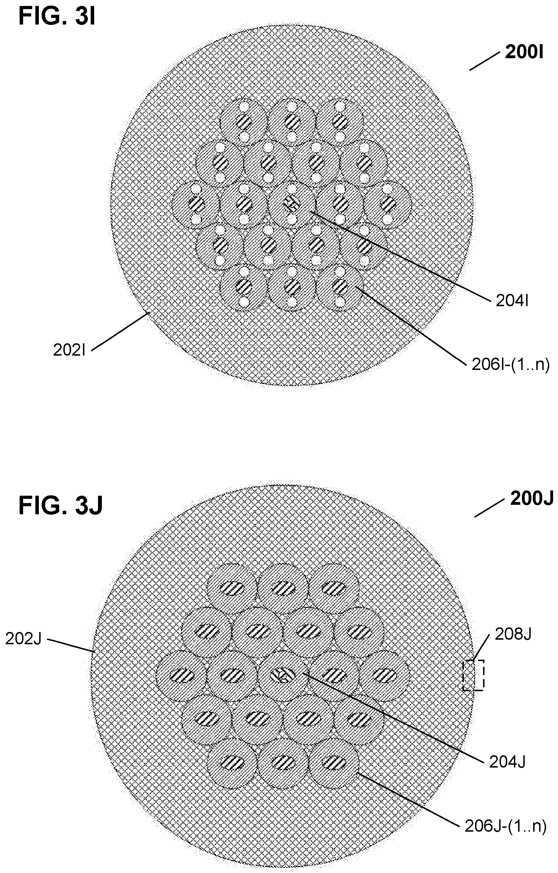

FIG. 3I is a schematic diagram of a cross-sectional view of a fourth alternative embodiment of the optical fiber coupler array of FIG. 3B, above, wherein each of the centrally positioned single VC waveguide, and the plural Non-VC waveguides, comprises polarization maintaining properties (shown by way of example only as being induced by rod stress members (and which may readily and alternately be induced by various other stress or equivalent means)), and a corresponding polarization axis, where all of the polarization axes are aligned to one another;

FIG. 3J is a schematic diagram of a cross-sectional view of a first alternative embodiment of the optical fiber coupler array of FIG. 3I, above, in which the polarization maintaining properties of all of the waveguides result only from a non-circular cross-sectional shape of each waveguide's core (or outer core in the case of the VC waveguide), shown by way of example only as being at least in part elliptical, and optionally comprising at least one waveguide arrangement indication element, positioned on an outer region of the single common housing structure, representative of the particular cross-sectional geometric arrangement of the optical coupler array's waveguides, such that a particular cross-sectional geometric waveguide arrangement may be readily identified from at least one of a visual and physical inspection of the single common coupler housing structure, the waveguide arrangement indication element being further operable to facilitate passive alignment of a second end of the optical coupler array to at least one optical device;

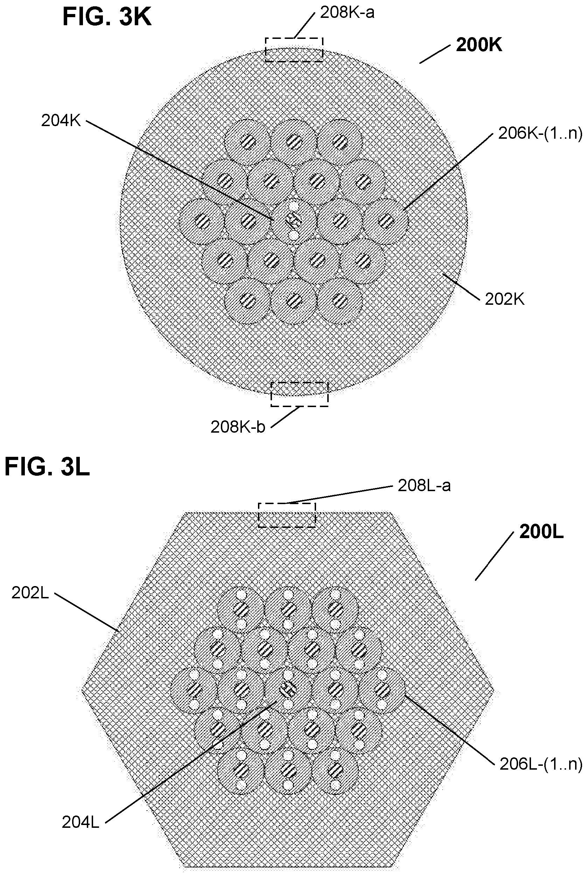

FIG. 3K is a schematic diagram of a cross-sectional view of a fifth alternative embodiment of the optical fiber coupler array of FIG. 3B, above, wherein the centrally positioned single VC waveguide, comprises polarization maintaining properties (shown by way of example only as being induced by rod stress members (and which may readily and alternately be induced by various other stress or equivalent means), and a corresponding polarization axis, and optionally comprising a plurality of optional waveguide arrangement indication elements of the same or of a different type, as described in greater detail in connection with FIG. 3J;

FIG. 3L is a schematic diagram of a cross-sectional view of a second alternative embodiment of the optical fiber coupler array of FIG. 3I, above, in which the single common housing structure comprises a cross section having a non-circular geometric shape (shown by way of example as a hexagon), and in which the polarization axes of the waveguides are aligned to one another and to the single common housing structure cross-section's geometric shape, and optionally further comprises a waveguide arrangement indication element, as described in greater detail in connection with FIG. 3J;

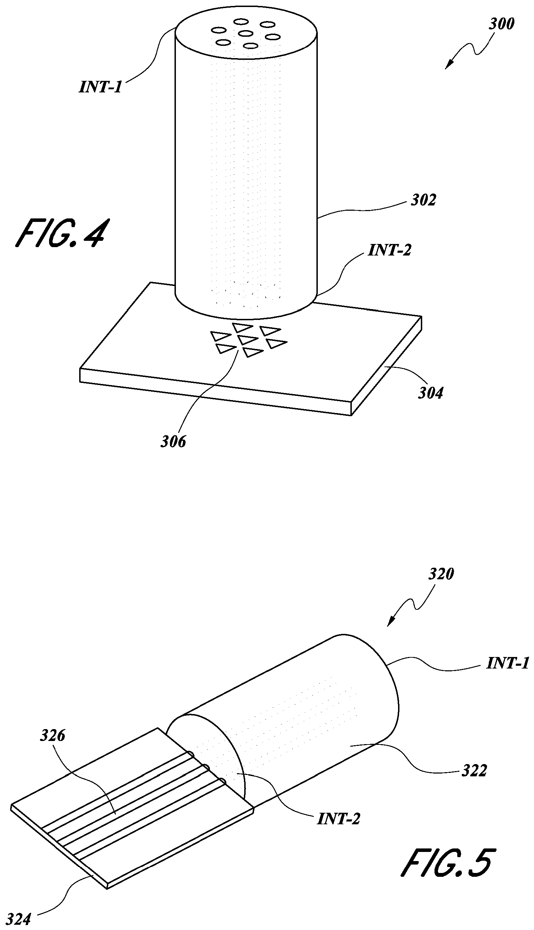

FIG. 4 is a schematic isometric view diagram illustrating an exemplary connection of a second end (i.e. "tip") of the optical fiber coupler array, in the process of connecting to plural vertical coupling elements of an optical device in a proximal open air optical coupling alignment configuration, that may be readily shifted into a butt-coupled configuration through full physical contact of the optical fiber coupler array second end and the vertical coupling elements;

FIG. 5 is a schematic isometric view diagram illustrating an exemplary connection of a second end (i.e. "tip") of the optical fiber coupler array connected to plural edge coupling elements of an optical device in a butt-coupled configuration, that may be readily shifted into one of several alternative coupling configuration, including a proximal open air optical coupling alignment configuration, and or an angled alignment coupling configurati on;

FIG. 6 is a schematic diagram of a cross-sectional view of a previously known optical fiber coupler having various drawbacks and disadvantages readily overcome by the various embodiments of the optical fiber coupler array of FIGs. 1A to 5;

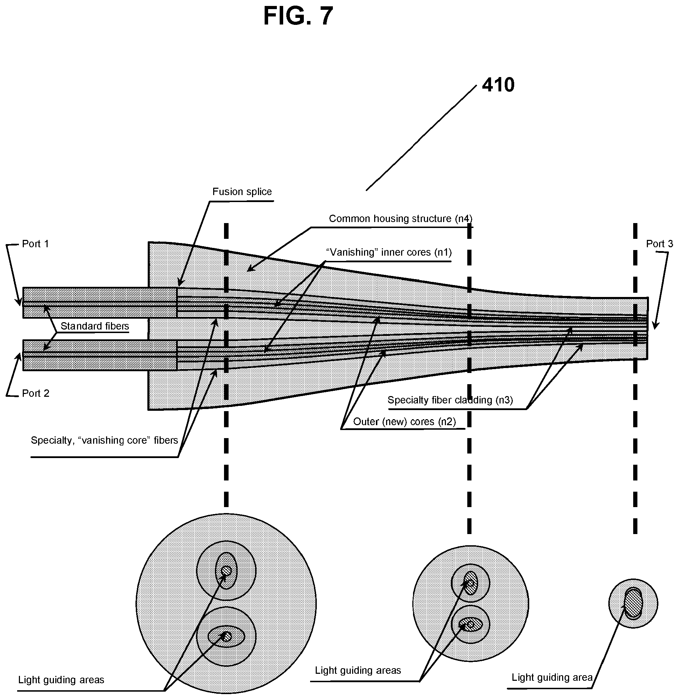

FIG. 7 schematically illustrates an example optical fiber polarization mode coupler;

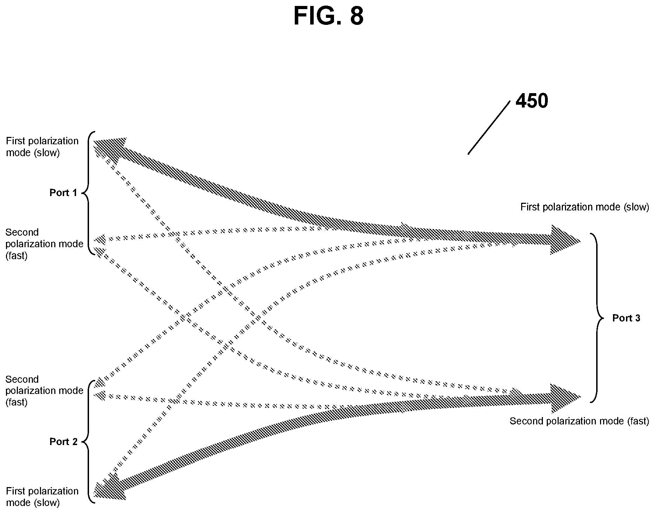

FIG. 8 schematically illustrates an example optical fiber polarization mode coupler configured to increase desirable polarization mode coupling (shown by solid lines), and to decrease undesirable polarization mode coupling (shown by dashed lines);

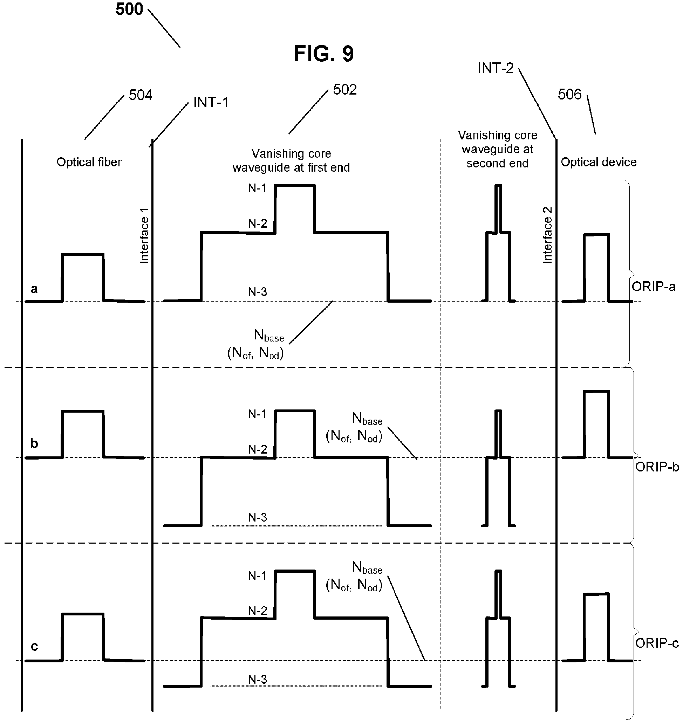

FIG. 9 is a schematic graph diagram showing various exemplary refractive index profiles, each comprising a different back reflection loss reduction scenario corresponding to a particular novel coupler array configuration;

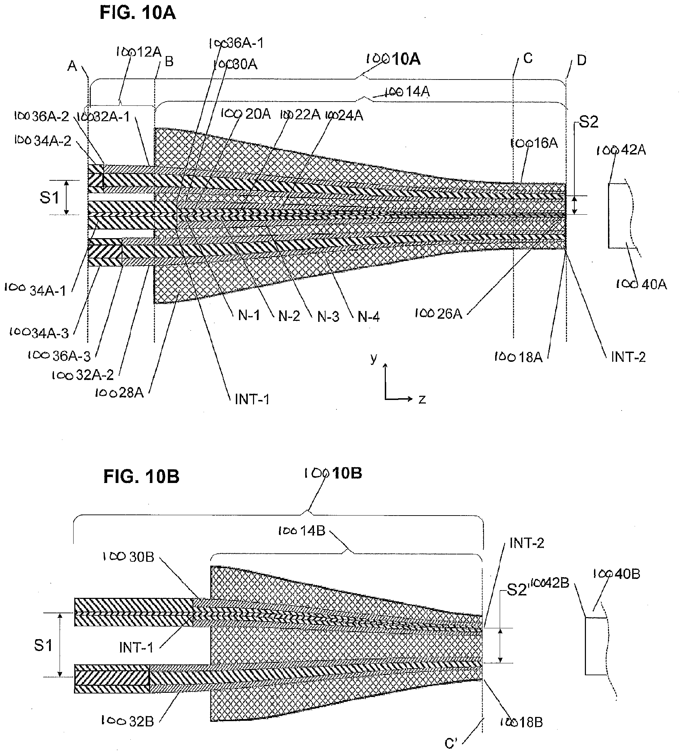

FIG. 10A is a schematic diagram of a side view of a first example embodiment of an optical fiber coupler array, which comprises at least one vanishing core waveguide (VC waveguide), illustrated therein by way of example as a single VC waveguide, and at least one Non-VC waveguide, illustrated therein by way of example as a plurality of Non-VC waveguides, disposed symmetrically proximally to the example single VC waveguide;

FIG. 10B is a schematic diagram of a side view of a second example embodiment of an optical fiber coupler array, which comprises at least one vanishing core waveguide (VC waveguide), illustrated therein by way of example as a single VC waveguide, and at least one Non-VC waveguide, illustrated therein by way of example as a single Non-VC waveguide, disposed in parallel proximity to the example single VC waveguide, where a portion of the optical fiber coupler array has been configured to comprise a higher channel-to-channel spacing magnitude at its second (smaller) end than the corresponding channel-to-channel spacing magnitude at the second end of the optical fiber coupler array of FIG. 10A;

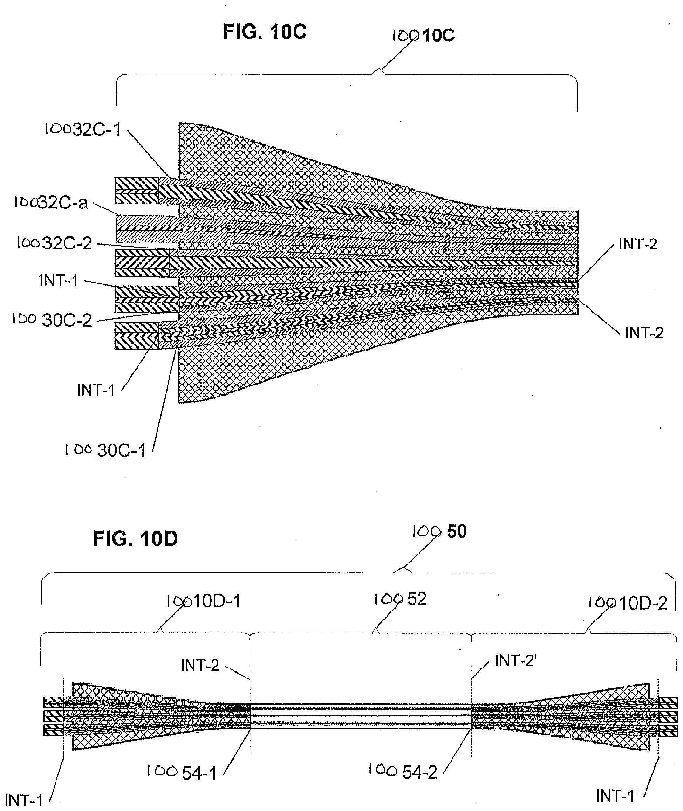

FIG. 10C is a schematic diagram of a side view of a third example embodiment of an optical fiber coupler array, which comprises a plurality of VC waveguides, and a plurality of Non-VC waveguides, disposed longitudinally and asymmetrically to one another, and where at least a portion of the plural Non-VC waveguides are of different types and/or different characteristics;

FIG. 10D is a schematic diagram of a side view of a fourth example embodiment of an optical fiber coupler array, configured for fan-in and fan-out connectivity and comprising a pair of optical fiber coupler components with a multi-core optical fiber element connected between the second (smaller sized) ends of the two optical fiber coupler components;

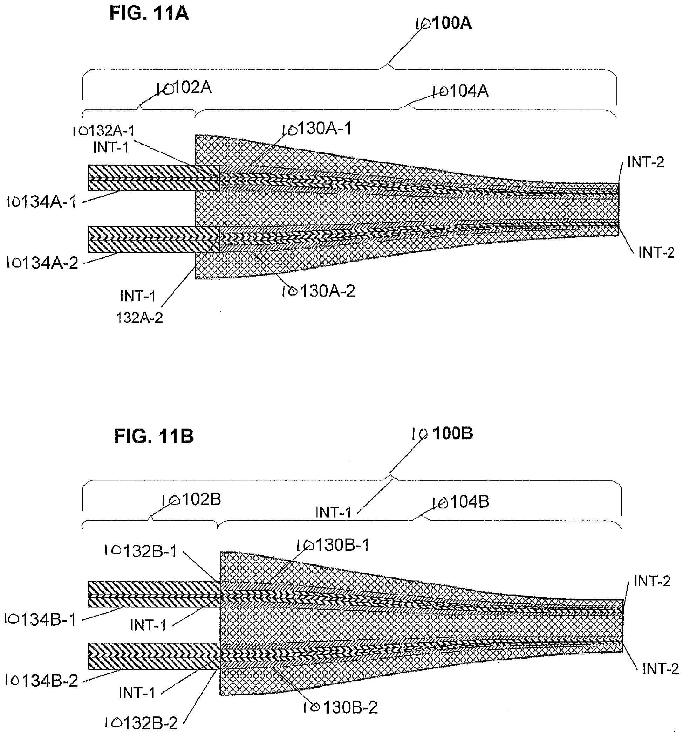

FIG. 11A is a schematic diagram of a side view of a fifth example embodiment of an optical fiber coupler array, which comprises a plurality of longitudinally proximal VC waveguides at least partially embedded in a single common housing structure, wherein each plural VC waveguide is spliced, at a particular first splice location, to a corresponding elongated optical device (such as an optical fiber), at least a portion of which extends outside the single common housing structure by a predetermined length, and wherein each particular first splice location is disposed within the single common housing structure;

FIG. 11B is a schematic diagram of a side view of a sixth example embodiment of an optical fiber coupler array, which comprises a plurality of longitudinally proximal VC waveguides at least partially embedded in a single common housing structure, wherein each plural VC waveguide is spliced, at a particular second splice location, to a corresponding elongated optical device (such as an optical fiber), at least a portion of which extends outside the single common housing structure by a predetermined length, and wherein each particular second splice location is disposed at an outer cross-sectional boundary region of the single common housing structure;

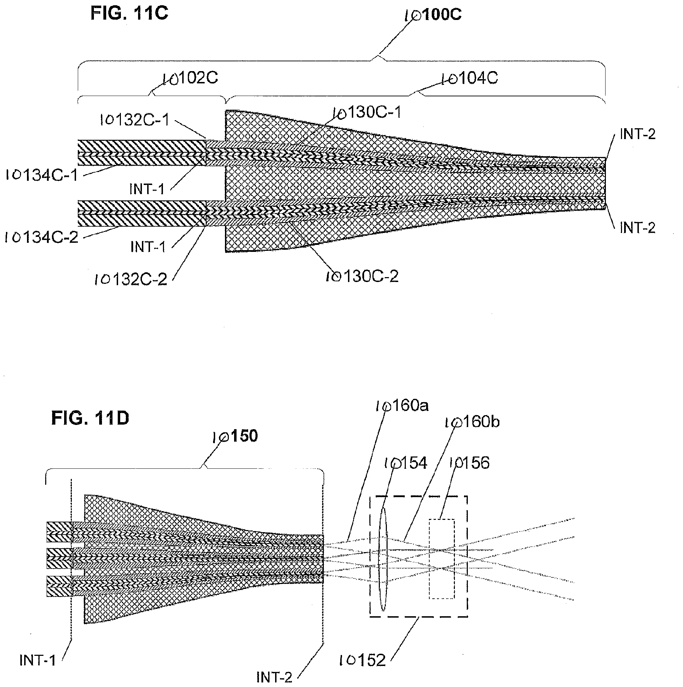

FIG. 11C is a schematic diagram of a side view of a seventh example embodiment of an optical fiber coupler array, which comprises a plurality of longitudinally proximal VC waveguides at least partially embedded in a single common housing structure, wherein each plural VC waveguide is spliced, at a particular third splice location, to a corresponding elongated optical device (such as an optical fiber), at least a portion of which extends outside the single common housing structure by a predetermined length, and wherein each particular third splice location is disposed outside the single common housing structure;

FIG. 11D is a schematic diagram of a side view of an alternative embodiment of an optical fiber coupler array, comprising a plurality of longitudinally proximal VC waveguides at least partially embedded in a single common housing structure, that is configured at its second end, to increase, improve, and/or optimize optical coupling to a free-space-based optical device, wherein a free-space-based device may include (1) a standalone device, e.g., a lens followed by other optical components as shown in FIG. 11D, or (2) a device, which is fusion spliceable to the second coupler's end, e.g. a coreless glass element, which can serve as an end cup for power density redaction at the glass-air interface, or as a Talbot mirror for phase synchronization of coupler's waveguides in a Talbot cavity geometry;

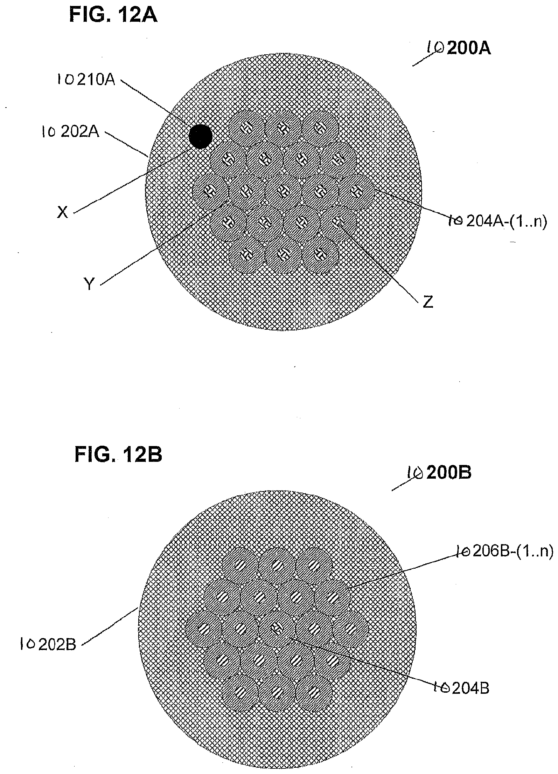

FIG. 12A is a schematic diagram of a cross-sectional view of a first alternative embodiment of the optical fiber coupler arrays of FIGs. 10D to 11D, above, and optionally comprising a fiducial element operable to provide a visual identification of waveguide arrangement / characteristics (such as alignment), which may be disposed in one of several categories of cross-sectional regions;

FIG. 12B is a schematic diagram of a cross-sectional view of a first alternative embodiment of the optical fiber coupler array of FIG. 10A, above, in which at least one VC waveguide, illustrated therein by way of example as a single VC waveguide, is positioned along a central longitudinal axis of the single common housing structure, and surrounded by a plurality of parallel proximal symmetrically positioned Non-VC waveguides;

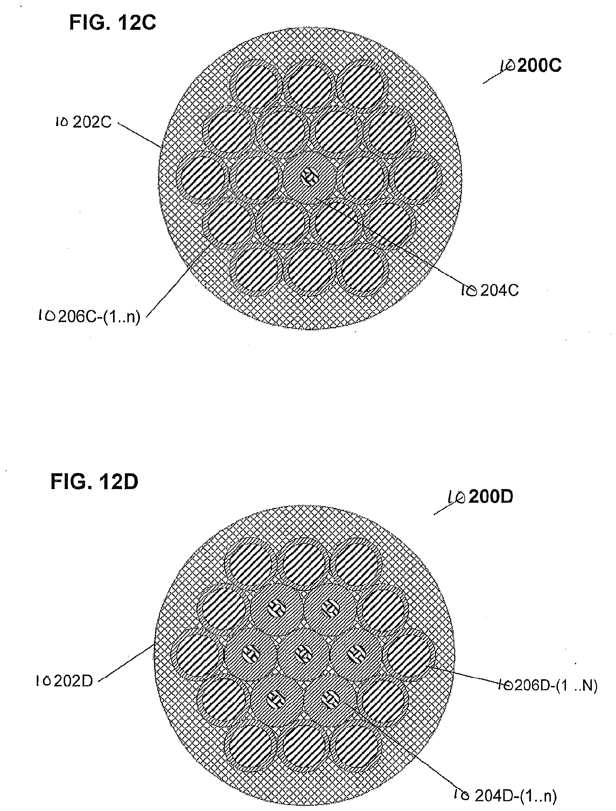

FIG. 12C is a schematic diagram of a cross-sectional view of a first alternative embodiment of the optical fiber coupler array of FIG. 12B above, in which a volume of the single common housing structure medium surrounding the sections of all of the waveguides embedded therein, exceeds a total volume of the inner and outer cores of the section of the VC waveguide that is embedded within the single common housing structure;

FIG. 12D is a schematic diagram of a cross-sectional view of a second alternative embodiment of the optical fiber coupler array of FIG. 12B above, in which the at least one VC waveguide positioned along the central longitudinal axis of the single common housing structure comprises a plurality of VC waveguides, and wherein a volume of the single common housing structure medium surrounding the sections of all of the waveguides embedded therein, exceeds a total volume of the inner and outer cores of the sections of the plural VC waveguides that are embedded within the single common housing structure;

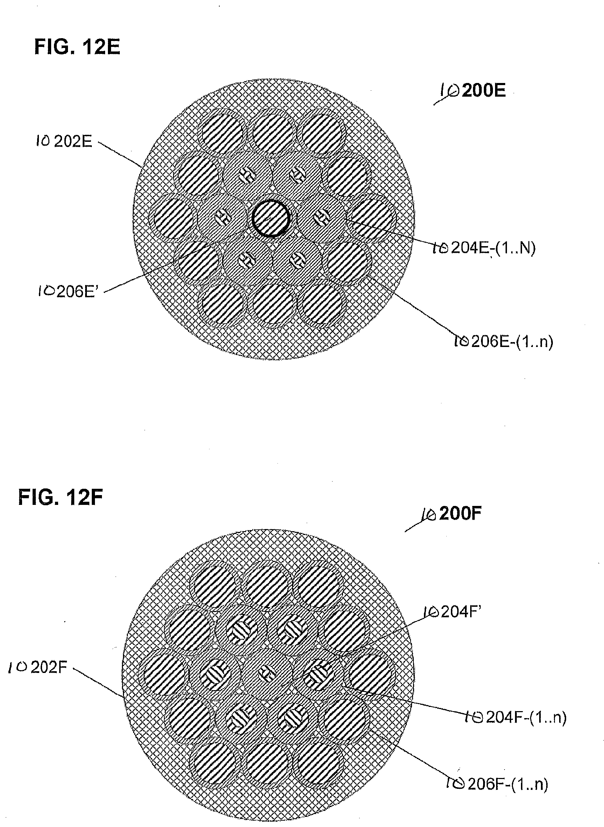

FIG. 12E is a schematic diagram of a cross-sectional view of a first alternative embodiment of the optical fiber coupler array of FIG. 12D, further comprising a central waveguide channel operable to provide optical pumping functionality therethrough;

FIG. 12F is a schematic diagram of a cross-sectional view of a second alternative embodiment of the optical fiber coupler array of FIG. 12D, in which the VC waveguide that is positioned along the central longitudinal axis of the single common housing structure, is of a different type, and/or comprises different characteristics from the remaining plural VC waveguides, which, if selected to comprise enlarged inner cores, may be advantageously utilized for increasing or optimizing optical coupling to different types of optical pump channels of various optical devices;

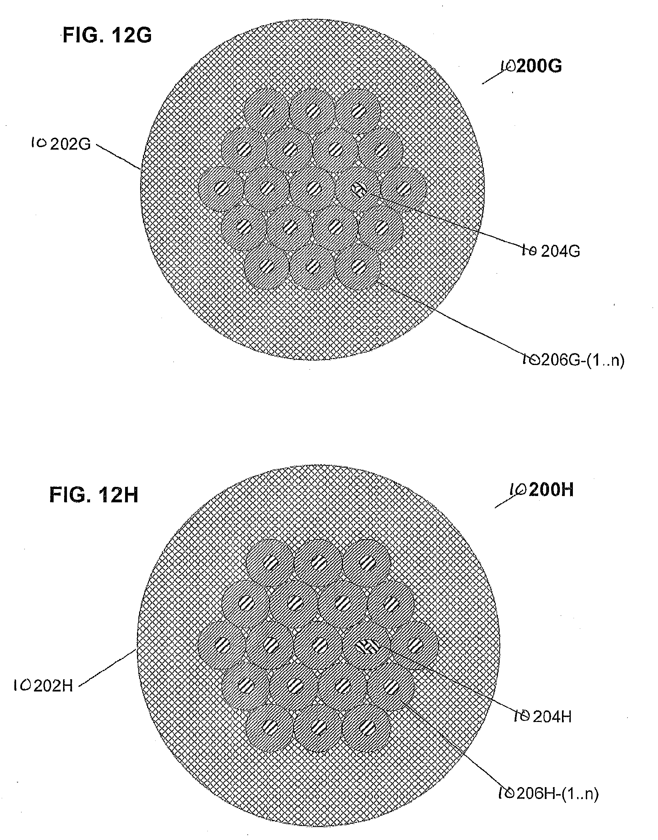

FIG. 12G is a schematic diagram of a cross-sectional view of a third alternative embodiment of the optical fiber coupler array of FIG. 12B above, in which at least one VC waveguide, illustrated therein by way of example as a single VC waveguide, is positioned as a side-channel, off-set from the central longitudinal axis of the single common housing structure, such that this embodiment of the optical fiber coupler array may be readily used as a fiber optical amplifier and or a laser, when spliced to a double-clad optical fiber having a non-concentric core for improved optical pumping efficiency;

FIG. 12H is a schematic diagram of a cross-sectional view of a first alternative embodiment of the optical fiber coupler array of FIG. 12G, above, in which the at least one VC waveguide, illustrated therein by way of example as a side-channel off-center positioned single VC waveguide, comprises polarization maintaining properties and comprises a polarization axis that is aligned with respect to its transverse off-center location;

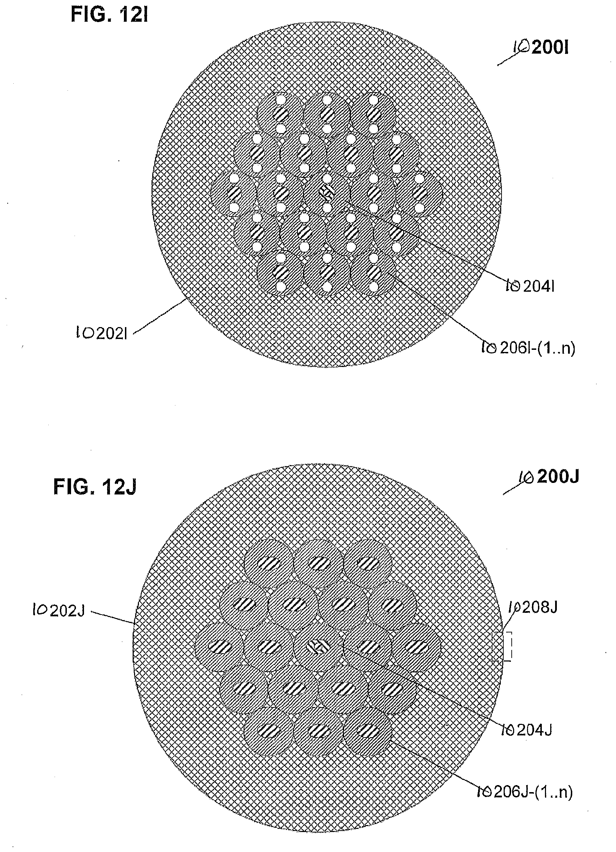

FIG. 12I is a schematic diagram of a cross-sectional view of a fourth alternative embodiment of the optical fiber coupler array of FIG. 12B, above, wherein each of the centrally positioned single VC waveguide, and the plural Non-VC waveguides, comprises polarization maintaining properties (shown by way of example only as being induced by rod stress members and which may readily and alternately be induced by various other stress or equivalent designs), and a corresponding polarization axis, where all of the polarization axes are aligned to one another;

FIG. 12J is a schematic diagram of a cross-sectional view of a first alternative embodiment of the optical fiber coupler array of FIG. 12I, above, in which the polarization maintaining properties of all of the waveguides result only from a non-circular cross-sectional shape of each waveguide's core (or outer core in the case of the VC waveguide), shown by way of example only as being at least in part elliptical, and optionally comprising at least one waveguide arrangement indication element, positioned on an outer region of the single common housing structure, representative of the particular cross-sectional geometric arrangement of the optical coupler array's waveguides, such that a particular cross-sectional geometric waveguide arrangement may be readily identified from at least one of a visual and physical inspection of the single common coupler housing structure, the waveguide arrangement indication element being further operable to facilitate passive alignment of a second end of the optical coupler array to at least one optical device;

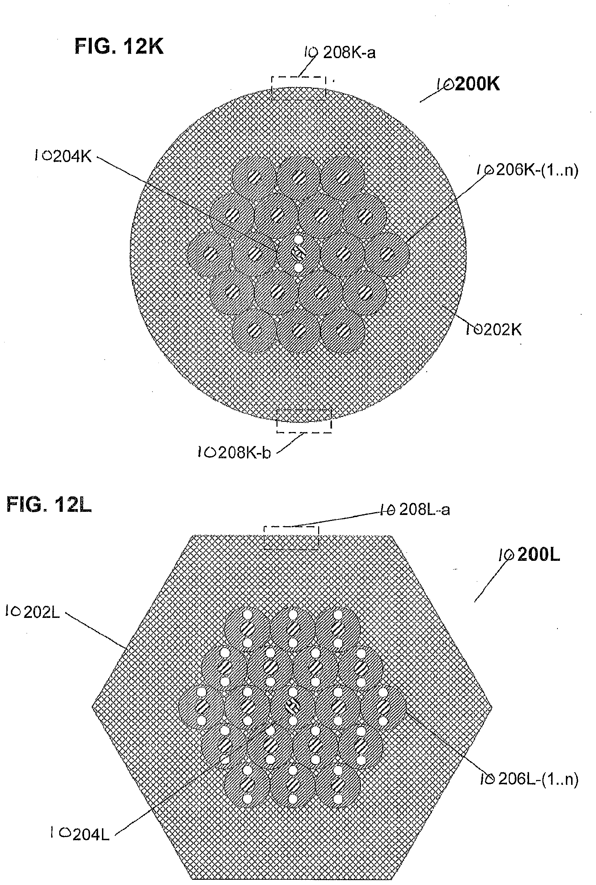

FIG. 12K is a schematic diagram of a cross-sectional view of a fifth alternative embodiment of the optical fiber coupler array of FIG. 12B, above, wherein the centrally positioned single VC waveguide, comprises polarization maintaining properties (shown by way of example only as being induced by rod stress members and which may readily and alternately be induced by various other stress or equivalent designs), and a corresponding polarization axis, and optionally comprising a plurality of optional waveguide arrangement indication elements of the same or of a different type, as described in connection with FIG. 12J;

FIG. 12L is a schematic diagram of a cross-sectional view of a second alternative embodiment of the optical fiber coupler array of FIG. 12I, above, in which the single common housing structure comprises a cross section having a non-circular geometric shape (shown by way of example as a hexagon), and in which the polarization axes of the waveguides are aligned to one another and to the single common housing structure cross-section's geometric shape, and optionally further comprises a waveguide arrangement indication element, as described in connection with FIG. 12J;

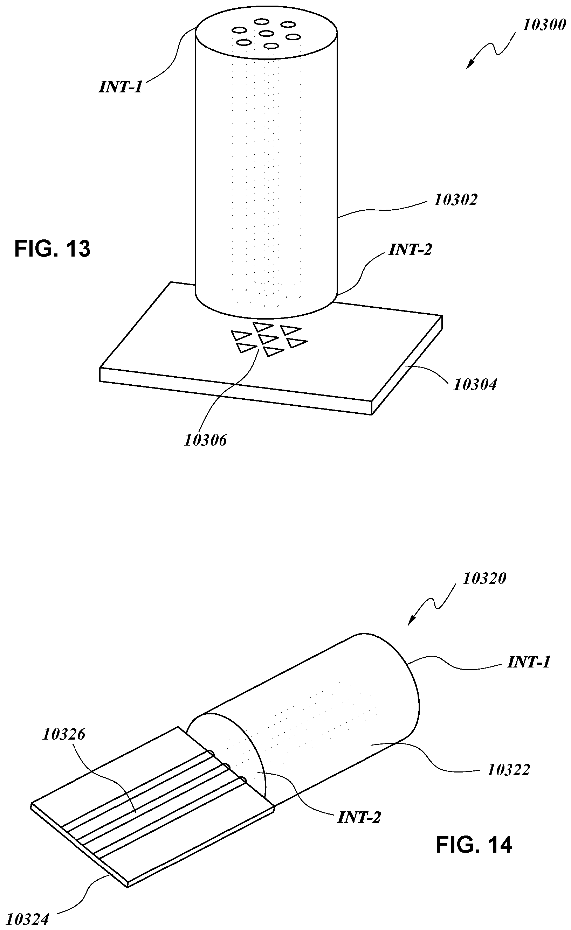

FIG. 13 is a schematic isometric view diagram illustrating an example connection of a second end (i.e. "tip") of the optical fiber coupler array, in the process of connecting to plural vertical coupling elements of an optical device in a proximal open air optical coupling alignment configuration, that may be readily shifted into a butt-coupled configuration through full physical contact of the optical fiber coupler array second end and the vertical coupling elements;

FIG. 14 is a schematic isometric view diagram illustrating an example connection of a second end (i.e. "tip") of the optical fiber coupler array connected to plural edge coupling elements of an optical device in a butt-coupled configuration, that may be readily shifted into one of several alternative coupling configurations, including a proximal open air optical coupling alignment configuration, and or an angled alignment coupling configurati on;

FIG. 15 is a schematic diagram of a cross-sectional view of a previously known optical fiber coupler having various drawbacks and disadvantages readily overcome by the various embodiments of the optical fiber coupler array of FIGs. 10A to 14;

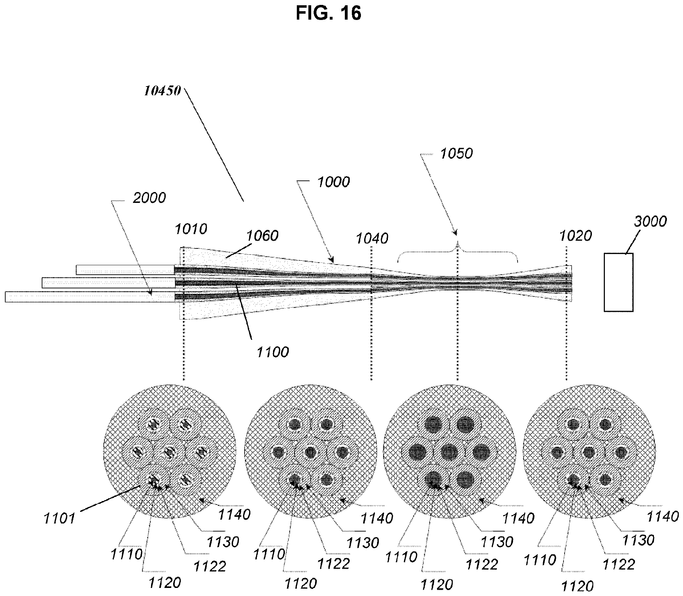

FIG. 16 is a schematic diagram, in various views, of a flexible pitch reducing optical fiber array (PROFA);

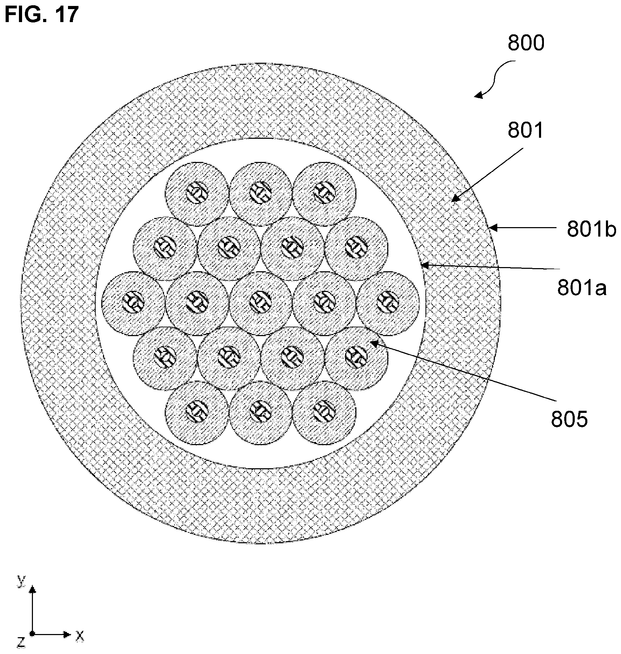

FIG. 17 is a schematic diagram of a cross-sectional view of an example configuration of the housing structure at a proximity to a first end of the optical coupler array. The cross-sectional view is orthogonal to the longitudinal direction or length of the optical coupler array;

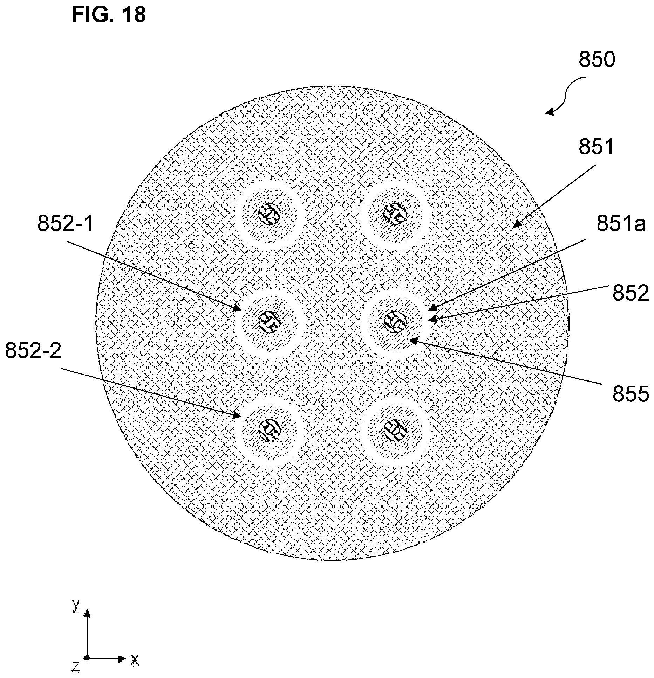

FIG. 18 is a schematic diagram of a cross-sectional view of another example configuration of the housing structure at a proximity to a first end of the optical coupler array; and

FIG. 19 and FIG. 20 are schematic diagrams, in various views, of inventive optical coupler arrays.

DETAILED DESCRIPTION

**PART I**

The present invention is directed to an optical fiber coupler array capable of providing a low-loss, high-coupling coefficient interface with high accuracy and easy alignment between a plurality of optical fibers (or other optical devices) with a first channel-to-channel spacing, and an optical device having a plurality of waveguide interfaces with a second, smaller channel-to-channel spacing as defined in the claims. Advantageously, each of a larger size end and a smaller size end of the optical fiber coupler array is configurable to have a correspondingly different (i.e., larger vs. smaller) channel-to-channel spacing, where the respective channel-to-channel spacing at each of the novel optical coupler array's larger and smaller ends may be readily matched to a corresponding respective first channel-to-channel spacing of the plural optical fibers at the larger optical coupler array end, and to a second channel-to-channel spacing of the optical device plural waveguide interfaces at the smaller optical coupler array end.

The novel optical coupler array includes a plurality of waveguides (at least one of which may optionally be polarization maintaining), that comprises at least two gradually reduced "vanishing core fibers", embedded within a common housing structure. Alternatively, the novel coupler array may be configured for utilization with at least one of an optical fiber amplifier and an optical fiber laser.

Each of the various embodiments of the optical coupler array advantageously comprises at least one "vanishing core" (VC) fiber waveguide, described in greater detail below in connection with a VC waveguide 30A of the optical coupler array 10A of FIG. 1A. The claimed optical coupler array comprises at least two vanishing core waveguides.

It should also be noted that the term "optical device" as generally used herein, applies to virtually any single channel or multi-channel optical device, or to any type of optical fiber, including, but not being limited to, standard / conventional optical fibers. For example, optical devices with which the coupler array may advantageously couple may include, but are not limited to, one or more of the following:

- a free-space-based optical device,
- an optical circuit having at least one input/output edge coupling port,
- an optical circuit having at least one optical port comprising vertical coupling elements,
- a multi-mode (MM) optical fiber,
- a double-clad optical fiber,
- a multi-core (MC) optical fiber,
- a large mode area (LMA) fiber,
- a double-clad multi-core optical fiber,
- a standard / conventional optical fiber,
- a custom optical fiber, and/or
- an additional optical coupler array.

In addition, while the term "fusion splice" is utilized in the various descriptions of the exemplary embodiments of the novel coupler array provided below, in reference to interconnections between various novel optical coupler array components, and connections between various novel optical coupler array components and optical device(s), it should be noted, that any other form of waveguide or other coupler array component connectivity technique or methodology may be readily selected and utilized as a matter of design choice or necessity, , including but not limited to mechanical connections.

Referring now to FIG. 1 A, a first exemplary embodiment not being part of the claimed invention of an optical fiber coupler array is shown as an optical coupler array 10A, which comprises a common housing structure 14A (described in greater detail below), at least one VC waveguide, shown in FIG. 1A by way of example, as a single VC waveguide 30A, and at least one Non-VC waveguide, shown in FIG. 1A by way of example, as a pair of Non-VC waveguides 32A-1, 32A-2, each positioned symmetrically proximally to one of the sides of of the exemplary single VC waveguide 30A, wherein the section of the VC waveguide 30A, located between positions B and D of FIG. 1A is embedded in the common housing structure 14A.

Before describing the coupler array 10A and its components in greater detail, it would be useful to provide a detailed overview of the VC waveguide 30A, the exemplary embodiments and alternative embodiments of which, are advantageously utilized in each of the various embodiments not being part of the claimed invention of the coupler arrays of FIGs. 1A to 5.

The VC waveguide 30A has a larger end (proximal to position B shown in FIG. 1A), and a tapered, smaller end (proximal to position C shown in FIG. 1A), and comprises an inner core 20A (composed of a material with an effective refractive index of N-1), an outer core 22A (composed of a material with an effective refractive index of N-2, smaller than N-1), and a cladding 24A (composed of a material with an effective refractive index of N-3, smaller than N-2).

Advantageously, the outer core 22A serves as the effective cladding at the VC waveguide 30A large end at which the VC waveguide 30A supports "M1" spatial propagating modes within the inner core 20A, where M1 is larger than 0. The indices of refraction N-1 and N-2, are preferably chosen so that the numerical aperture (NA) at the VC waveguide 30A large end matches the NA of an optical device (e.g. an optical fiber) to which it is connected (such as an optical device 34A-1, for example, comprising a standard / conventional optical fiber connected to the VC waveguide 30A at a connection position 36A-1 (e.g., by a fusion splice, a mechanical connection, or by other fiber connection means), while the dimensions of the inner and outer cores (20A, 22A), are preferably chosen so that the connected optical device (e.g., the optical device 34A-1), has substantially the same mode field dimensions (MFD). Here and below we use mode field dimensions instead of commonly used mode field diameter (also MFD) due to the case that the cross section of the VC or Non-VC waveguides may not be circular, resulting in a non-circular mode profile. Thus, the mode field dimensions include both the mode size and the mode shape and equal to the mode field diameter in the case of a circularly symmetrical mode.

During fabrication of the coupler array 10A from an appropriately configured preform (comprising the VC waveguide 30A preform having the corresponding inner and outer cores 20A, 22A, and cladding 24A), as the coupler array 10A preform is tapered in accordance with at least one predetermined reduction profile, the inner core 20A becomes too small to support all M1 modes. The number of spatial modes, supported by the inner core at the second (tapered) end is M2, where M2 < M1. In the case of a single mode waveguide, where M1 = 1 (corresponding to 2 polarization modes), M2 = 0, meaning that inner core is too small to support light propagation. The VC waveguide 30A then acts as if comprised a fiber with a single core of an effective refractive index close to N-2, surrounded by a cladding of lower index N-3.

During fabrication of the coupler array 10A, a channel-to-channel spacing S-1 at the coupler array 10A larger end (at position B, FIG. 1A), decreases in value to a channel-to-channel spacing S-2 at the coupler array 10A smaller end (at position C, FIG. 1A), in proportion to a draw ratio selected for fabrication, while the MFD value (or the inversed NA value of the VC waveguide 30A) can be either reduced, increased or preserved depending on a selected differences in refractive indices, (N-1 - N-2) and (N-2 - N-3), which depends upon the desired application for the optical coupler array 10A, as described in greater detail below.

The capability of independently controlling the channel-to-channel spacing and the MFD values at each end of the optical coupler array is a unique and highly advantageous feature. Additionally, the capability to match MFD and NA values through a corresponding selection of the sizes and shapes of inner 20A and outer 22A cores and values of N-1, N-2, and N-3, makes it possible to utilize the novel optical coupler array to couple to various waveguides without the need to use a lens.

In various embodiments thereof, the property of the VC waveguide permitting light to continue to propagate through the waveguide core along the length thereof when its diameter is significantly reduced, advantageously, reduces optical loss from interfacial imperfection or contamination, and allows the use of a wide range of materials for a medium 28A of the common housing structure 14A (described in greater detail below), including, but not limited to:

(a) non-optical materials (since the light is concentrated inside the waveguide core),
(b) absorbing or scattering materials or materials with refractive index larger than the refractive index of standard / conventional fibers for reducing or increasing the crosstalk between the channels, and
(c) pure-silica (e.g., the same material as is used in most standard / conventional fiber claddings, to facilitate splicing to multi-core, double-clad, or multi-mode fiber.

Preferably, the desired relative values of NA-1 and NA-2 (each at a corresponding end of the coupler array 10A, for example, NA-1 corresponding to the coupler array 10A large end, and NA-2 corresponding to the coupler array 10A small end), and, optionally, the desired value of each of NA-1 and NA-2), may be determined by selecting the values of the refractive indices N1, N2, and N3 of the coupler array 10A, and configuring them in accordance with at least one of the following relationships, selected based on the desired relative numerical aperture magnitudes at each end of the coupler array 10A :

**Desired NA-1/NA-2**

| Relative Magnitude | Corresponding Relationship bet. N1. N2, N3 |
|---|---|
| NA-1 (lrg. end) > NA-2 (sm. end) | (N1 - N2 > N2 - N3) |
| NA-1 (lrg. end) = NA-2 (sm. end) | (N1 - N2 = N2 - N3) |
| NA-1 (lrg. end) < NA-2 (sm. end) | (N1 - N2 < N2 - N3) |

Commonly the NA of any type of fiber is determined by the following expression:

$$ \mathrm{NA} = \sqrt{n_{\mathrm{core}}^2 - n_{\mathrm{clad}}^2}, $$

where $n_{\mathrm{core}}$ and $n_{\mathrm{clad}}$ are the refractive indices of fiber core and cladding respectively.

It should be noted that when the above expression is used, the connection between the NA and the acceptance angle of the fiber is only an approximation. In particular, fiber manufacturers often quote "NA" for single-mode (SM) fibers based on the above expression, even though the acceptance angle for a single-mode fiber is quite different and cannot be determined from the indices of refraction alone.

As used herein, the various NA values are preferably determined utilizing **effective** indices of refraction for both $n_{\mathrm{core}}$ and $n_{\mathrm{cladding}}$, because the effective indices determine the light propagation and are more meaningful in the case of structured waveguides utilized in various embodiments. Also, a transverse refractive index profile inside a waveguide may not be flat, but rather varying around the value N1, N2, N3, or N4. In addition, the transition between regions having refractive indices N1, N2, N3, and N4 may not be as sharp as a step function due to dopant diffusion or some other intentional or non-intentional factors, and may be a smooth function, connecting the values of N1, N2, N3, and N4. Coupling optimization requires to change both the values of N1, N2, N3, and N4 and the sizes and shapes of the regions having respective indices.

Returning now to FIG. 1A, the common coupling structure 14A, comprises the medium 28A, in which the section of the VC waveguide 30A located between positions B and D of FIG. 1A is embedded, and which may include, but is not limited to, at least one of the following materials:

- a material, having properties prohibiting propagation of light therethrough,

- a material having light-absorbing optical properties,

- a material having light scattering optical properties,

- a material having optical properties selected such that said fourth refractive index (N-4) is greater than said third refractive index (N-3), and/or

- a material having optical properties selected such that said fourth refractive index (N-4) is substantially equal to said third refractive index (N-3).

At the optical coupler array 10A large end (proximally to position B in FIG. 1A), the VC waveguide 30A is spliced, at a particular splice location 36A-1 (shown by way of example as positioned inside the common housing structure 14A), to a corresponding respective elongated optical device 34A-1 (for example, such as an optical fiber), at least a portion of which extends outside the common housing structure 14A by a predetermined length 12A, while the Non-VC waveguides 32A-1, 32A-2 are spliced, at particular splice locations 36A-2, 36A-3, respectively (disposed outside of the common housing structure 104C), to corresponding respective elongated optical devices 34A-2, 34A-3 (such as optical fibers), and extending outside the common housing structure 14A by a predetermined length 12A.

Optionally, the novel coupler array 10A may also include a substantially uniform diameter tip 16A (shown between positions C and D in FIG. 1) for coupling, at an array interface 18A with the interface 42A of an optical waveguide device 40A. The uniform diameter tip 16A may be useful in certain interface applications, such as for example shown in FIGs. 1D, 4 and 5. Alternatively, the novel coupler array 10A may be fabricated without the tip 16A (or have the tip 16A removed after fabrication), such that coupling with the optical device interface 42A, occurs at a coupler array 10A interface at position C of FIG. 1A.

If the optical device 40A comprises a double-clad fiber, when the small end of the coupler array 10A is coupled (for example, fusion spliced) to the optical device interface 42A, at least a portion of the common housing structure 14A proximal to the splice position (such as at least a portion of the tip 16A), may be coated with a low index medium (not shown), extending over the splice position and up to the double-clad fiber optical device 40A outer cladding (and optionally extending over a portion of the double-clad fiber optical device 40A outer cladding that is proximal to the splice position).

Referring now to FIG. 1B, a second exemplary embodiment not being part of the claimed invention of the optical fiber coupler array, is shown as a coupler array 10B. The coupler array 10B comprises a common housing structure 14B, at least one VC waveguide, shown in FIG. 1B by way of example, as a single VC waveguide 30B, and at least one Non-VC waveguide, shown in FIG. 1B by way of example, as a single Non-VC waveguide 32B, disposed in parallel proximity to the VC waveguide 30B, where a portion of the optical coupler array 10B, has been configured to comprise a larger channel-to-channel spacing value S2' at its small end, than the corresponding channel-to-channel spacing value S2 at the small end of the optical coupler array 10A, of FIG. 1A. This configuration may be readily implemented by transversely cutting the optical fiber array 10A at a position C', thus producing the common housing structure 14B that is shorter than the common housing structure 14A and resulting in a new, larger diameter array interface 18B, having the larger channel-to-channel spacing value S2'.

Referring now to FIG. 1C, a third exemplary embodiment not being part of the claimed invention of the optical fiber coupler array, is shown as a coupler array 10C. The coupler array 10C comprises a plurality of VC waveguides, shown in FIG. 1C as VC waveguides 30C-1, and 30C-2, and a plurality of Non-VC waveguides, shown in FIG. 1C as Non-VC waveguides 32C-1, 32C-2, and 32C-a, all disposed longitudinally and asymmetrically to one another, wherein at least a portion of the plural Non-VC waveguides are of different types and/or different characteristics (such as singlemode or multimode or polarization maintaining etc) - for example, Non-VC waveguides 32C-1, 32C-2 are of a different type, or comprise different characteristics from the Non-VC waveguide 32C-a. Additionally, any of the VC or Non-VC waveguides (such as, for example, the Non-VC waveguide 32C-a) can readily extend beyond the coupler array 10C common housing structure by any desired length, and need to be spliced to an optical device proximally thereto.

Referring now to FIG. 1D, a fourth exemplary embodiment not being part of the claimed invention of the optical fiber coupler array that is configured for multi-core fan-in and fan-out connectivity, and shown as a coupler array 50. The coupler array 50 comprises a pair of novel optical fiber coupler array components (10D-1 and 10D-2), with a multi-core optical fiber element 52 connected (e.g., by fusion splicing at positions 54-1 and 54-2) between the second (smaller sized) ends of the two optical fiber coupler array components (10D-1, 10D-2). Preferably, at least one of the VC waveguides in each of the coupler array components (10D-1, 10D-2) is configured to maximize optical coupling to a corresponding selected core of the multi-core optical fiber element 52, while minimizing optical coupling to all other cores thereof.

Referring now to FIG. 2A, a fifth exemplary embodiment not being part of the claimed invention of the optical fiber coupler array, is shown as a coupler array 100A. The coupler array 100A comprises a plurality of longitudinally proximal VC waveguides at least partially embedded in a single common housing structure 104A, shown by way of example only, as plural VC waveguides 130A-1, 130A-2. Each plural VC waveguide 130A-1, 130A-2 is spliced, at a particular splice location 132A-1, 132A-2, respectively, to a corresponding respective elongated optical device 134A-1, 134A-2 (such as an optical fiber), at least a portion of which extends outside the common housing structure 104A by a predetermined length 102A, and wherein each particular splice location 132A-1, 132A-2 is disposed within the common housing structure 104A.

Referring now to FIG. 2B, a sixths exemplary embodiment not being part of the claimed invention of the optical fiber coupler array, is shown as a coupler array 100B. The coupler array 100B comprises a plurality of longitudinally proximal VC waveguides at least partially embedded in a single common housing structure 104B, shown by way of example only, as plural VC waveguides 130B-1, 130B-2. Each plural VC waveguide 130B-1, 130B-2 is spliced, at a particular splice location 132B-1, 132B-2, respectively, to a corresponding respective elongated optical device 134B-1, 134B-2 (such as an optical fiber), at least a portion of which extends outside the common housing structure 104B by a predetermined length 102B, and wherein each particular splice location 132B-1, 132B-2 is disposed at an outer cross-sectional boundary region of the common housing structure 104B.

Referring now to FIG. 2C, a seventh exemplary embodiment not being part of the claimed invention of the optical fiber coupler array, is shown as a coupler array 100C.

The coupler array 100C comprises a plurality of longitudinally proximal VC waveguides at least partially embedded in a single common housing structure 104C, shown by way of example only, as plural VC waveguides 130C-1, 130C-2. Each plural VC waveguide 130C-1, 130C-2 is spliced, at a particular splice location 132C-1, 132C-2, respectively, to a corresponding respective elongated optical device 134C-1, 134C-2 (such as an optical fiber), at least a portion of which extends outside the common housing structure 104C by a predetermined length 102C, and wherein each particular splice location 132C-1, 132C-2 is disposed outside of the common housing structure 104C.

Referring now to FIG. 2D, an alternative embodiment not being part of the claimed invention of the optical fiber coupler array, is shown as a coupler array 150. The coupler array 150 comprises a plurality of longitudinally proximal VC waveguides at least partially embedded in a single common housing structure, that is configured at its second end, to optimize optical coupling to a free-space-based optical device 152. The free-space-based optical device 152 may comprise a lens 154 followed by an additional optical device component 156, which may comprise, by way of example, a MEMS mirror or volume Bragg grating. The combination of the coupler and the free-space-based optical device 152 may be used as an optical switch or WDM device for spectral combining or splitting of light signals 160b (representative of the light coupler array 150 output light signals 160a after they have passed through the lens 154.) In this case, one of the fibers may be used as an input and all others for an output or vise versa.

Prior to describing the various embodiments not being part of the claimed invention shown in FIGs. 3A to 3L in greater detail, it should be understood that whenever a "plurality" or "at least one" coupler component/element is indicated below, the specific quantity of such coupler components/elements that may be provided in the corresponding embodiment of the novel coupler array, may be selected as a matter of necessity, or design choice (for example, based on the intended industrial application of the coupler array). Accordingly, in the various FIGs. 3A to 3L, single or individual coupler array components/elements are identified by a single reference number, while each plurality of the coupler component/elements is identified by a reference number followed by a "(1 ..n)" designation, with "n" being a desired number of plural coupler elements/components (and which may have a different value in any particular coupler array embodiment described below).

Also, all the waveguides VC and Non-VC are shown with a circular cross-section of the inner and outer core and cladding only by example. Other shapes of the cross-sections of the inner and outer core and cladding (for example, hexagonal, rectangular or squared) may be utilized. The specific choice of shape is based on various requirements, such as channel shape of the optical device, channel positional geometry (for example, hexagonal, rectangular or square lattice), or axial polarization alignment mode.

Similarly, unless otherwise indicated below, as long as various relationships / requirements set forth below (for example, the relative volume relationship requirement set forth below with respect to optical coupler arrays 200C and 200D of FIGs. 3C and 3D, respectively, and the requirement, set forth below in connection with the coupler array 200H of FIG. 3H, that the PM VC waveguide 204H be positioned longitudinally off-centered transversely from the coupler array 200H central longitudinal axis), are adhered to, the sizes, relative sizes, relative positions and choices of composition materials, are not limited to the exemplary sizes, relative sizes, relative positions and choices of composition materials, indicated bellow in connection with the detailed descriptions of the novel coupler array embodiments of FIGs. 3A to 3L, but rather they may be selected by one skilled in the art as a matter of convenience or design choice.

Finally, it should be noted that each of the various single common housing structure components 202A to 202L, of the various coupler arrays 200A to 200L of FIGs. 3A to 3L, respectively, may be composed of a medium having the refractive index N-4 value in accordance with an applicable one of the above-described relationships with the values of other coupler array component refractive indices N-1, N-2, and N-3, and having properties and characteristics selected from the various contemplated exemplary medium composition parameters described above in connection with medium 28A of FIG. 1A.

Referring now to FIG. 3A, a first alternative embodiment of the novel optical fiber coupler array embodiments of FIGs. 1D to 2D, is shown as a coupler array 200A in which all waveguides are VC waveguides. The coupler array 200A comprises a single common housing 202A, and plurality of VC waveguides 204A-(1..n), with n being equal to 19 by way of example only, disposed centrally along the central longitudinal axis of the housing 202A. The coupler array 200A may also comprise an optional at least one fiducial element 210A, operable to provide one or more useful properties to the novel coupler array, including, but not limited to:

- enabling visual identification (at at least one of the coupler array's ends) of the coupler array waveguide arrangement; and

- facilitate passive alignment of at least one of the coupler array ends to at least one optical device.

Furthermore, when deployed in optical coupler array embodiments that comprise at least one polarization maintaining VC waveguide (such as the optical coupler array embodiments described below in connection with FIGs. 3H - 3L), a fiducial element is further operable to:

- enable visual identification of the optical coupler array's particular polarization axes alignment mode (described in greater detail below in connection with FIGs. 3H - 3L); and

- serve as a geometrically positioned reference point for alignment thereto, of one or more polarization axis of PM waveguides in a particular optical coupler array.

The fiducial element 210A may comprise any of the various types of fiducial elements known in the art, selected as a matter of design choice or convenience- for example, it may be a dedicated elongated element positioned longitudinally within the common housing structure 202A in one of various cross-sectional positions (such as positions X or Y, shown in FIG. 3A. Alternatively, the fiducial element 210A may comprise a dedicated channel not used for non-fiducial purposes, for example, replacing one of the waveguides 204A-(1..n), shown by way of example only at position Z in FIG. 3A.

Referring now to FIG. 3B, a first alternative embodiment of the novel optical fiber coupler array 10A of FIG. 1A, above, is shown as a coupler array 200B, that comprises a single housing structure 202B, and at least one VC waveguide, shown in FIG. 3B by way of example as a VC waveguide 204B, and a plurality of Non-VC waveguides 206B-(1..n), with n being equal to 18 by way of example only. The VC waveguide 204B is positioned along a central longitudinal axis of the common housing structure 202B, and circumferentially and symmetrically surrounded by proximal parallel plural Non-VC waveguides 206B-(1..n).

Referring now to FIG. 3C, a first alternative embodiment of the novel optical fiber coupler array 200B of FIG. 3B, above, is shown as a coupler array 200C that comprises a single housing structure 202C, a VC waveguide 204C, and a plurality of Non-VC waveguides 206C-(1..n), with n being equal to 18 by way of example only. The VC waveguide 204C is positioned along a central longitudinal axis of the common housing structure 202C, and circumferentially and symmetrically surrounded by proximal parallel plural Non-VC waveguides 206C-(1..n). The coupler array 200C is configured such that a volume of the common housing structure 202C medium, surrounding the sections of all of the waveguides embedded therein (i.e., the VC waveguide 204C and the plural Non-VC waveguides 206C-(1..n)), exceeds a total volume of the inner and outer cores of the section of the VC waveguide 204C that is embedded within the single common housing structure 202C.

Referring now to FIG. 3D, a first alternative embodiment of the novel optical fiber coupler array 200C of FIG. 3C, above, is shown as a coupler array 200D that comprises a single housing structure 202D, a plurality of VC waveguides 204D-(1-N), with N being equal to 7 by way of example only, and a plurality of Non-VC waveguides 206D-(1..n), with n being equal to 12 by way of example only. The plural VC waveguides 204D-(1-N) are positioned along a central longitudinal axis of the common housing structure 202D, and circumferentially and symmetrically surrounded by proximal parallel plural Non-VC waveguides 206D-(1..n). The coupler array 200D is configured such that a volume of the common housing structure 202D medium, surrounding the sections of all of the waveguides embedded therein (i.e., the plural VC waveguides 204D-(1-N), and the plural Non-VC waveguides 206D-(1..n)), exceeds a total volume of the inner and outer cores of the section of the plural VC waveguides 204D-(1-N) that are embedded within the single common housing structure 202D.

Referring now to FIG. 3E, a first alternative embodiment of the novel optical fiber coupler array 200D of FIG. 3D, above, is shown as a coupler array 200E, that comprises a single housing structure 202E, a plurality of VC waveguides 204E-(1-N), with N being equal to 7 by way of example only, a plurality of Non-VC waveguides 206E-(1..n), with n being equal to 11 by way of example only, and a separate single Non-VC waveguide 206E'. The Non-VC waveguide 206E', is preferably operable to provide optical pumping functionality therethrough, and is positioned along a central longitudinal axis of the common housing structure 202E and circumferentially and symmetrically surrounded by proximal parallel plural VC waveguides 204E-(1-N), that are in turn circumferentially and symmetrically surrounded by proximal parallel plural Non-VC waveguides 206E-(1..n).

Referring now to FIG. 3F, a second alternative embodiment of the novel optical fiber coupler array 200B of FIG. 3B, above, is shown as a coupler array 200F, that comprises a single housing structure 202F, a plurality of VC waveguides 204F-(1-N), with N being equal to 6 by way of example only, a separate single VC waveguide 204F', and a plurality of Non-VC waveguides 206F-(1..n), with n being equal to 12 by way of example only, that preferably each comprise enlarged inner cores of sufficient diameter to optimize optical coupling to different types of optical pump channels of various optical devices, to which the coupler array 200F may be advantageously coupled. The VC waveguide 204F', is positioned along a central longitudinal axis of the common housing structure 202F, and circumferentially and symmetrically surrounded by proximal parallel plural VC waveguides 204F-(1-N), that are in turn circumferentially and symmetrically surrounded by proximal parallel plural Non-VC waveguides 206F-(1..n).

Referring now to FIG. 3G, a third alternative embodiment of the novel optical fiber coupler array 200B of FIG. 3B, above, is shown as a coupler array 200G, that comprises a single housing structure 202G, and at least one VC waveguide, shown in FIG. 3G by way of example as a VC waveguide 204G, and a plurality of Non-VC waveguides 206G-(1..n), with n being equal to 18 by way of example only. The VC waveguide 204G is positioned as a side-channel, off-set from the central longitudinal axis of the single common housing structure 202G, such that optical fiber coupler array 200G may be readily used as a fiber optical amplifier and or a laser, when spliced to a double-clad optical fiber (not shown) having a non-concentric core for improved optical pumping efficiency. It should be noted that because a double-clad fiber is a fiber in which both the core and the inner cladding have light guiding properties, most optical fiber types, such as SM, MM, LMA, or MC (multi-core), whether polarization maintaining or not, and even standard (e.g., conventional) single mode optical fibers, can be converted into a double-clad fiber by coating (or recoating) the fiber with a low index medium (forming the outer cladding).

Optionally, when the second end of the coupler array 200G is spliced to a double-clad fiber (non shown), at least a portion of the common housing structure 202G proximal to the splice point with the double-clad fiber (not-shown), may be coated with a low index medium extending over the splice point and up to the double-clad fiber's outer cladding (and optionally extending over a portion of the outer cladding that is proximal to the splice point).

Referring now to FIGs. 3H to 3L, in various alternative exemplary embodiments of the optical coupler, at least one of the VC waveguides utilized therein, and, in certain embodiments, optionally at least one of the Non-VC waveguides, may comprise a polarization maintaining (PM) property. By way of example, the PM property of a VC waveguide may result from a pair of longitudinal stress rods disposed within the VC waveguide outside of its inner core and either inside, or outside, of the outer core (or through other stress elements), or the PM property may result from a noncircular inner or outer core shape, or from other PM-inducing optical fiber configurations (such as in bow-tie or elliptically clad PM fibers). In various embodiments of the optical fiber in which at least one PM waveguide (VC and/or Non-VC) is utilized, an axial alignment of the PM waveguides (or waveguide), in accordance with a particular polarization axes alignment mode may be required.

A a polarization axes alignment mode may comprise, but is not limited to, at least one of the following:

- axial alignment of a PM waveguide's polarization axis to the polarization axes of other PM waveguides in the optical coupler;

- when a PM waveguide is positioned off-center: axial alignment of a PM waveguide's polarization axis to its transverse cross-sectional (geometric) position within the optical coupler;

- when the single common housing structure of the optical coupler comprises a non-circular geometric shape (such as shown by way of example in FIG. 3L): axial alignment of a PM waveguide's polarization axis to a geometric feature of the common housing structure outer shape;

- in optical coupler embodiments comprising one or more waveguide arrangement indicators, described in greater detail below, in connection with FIGs. 3J-3L: axial alignment of a PM waveguide's polarization axis to at least one geometric characteristic thereof;

- in optical coupler embodiments comprising at least one fiducial element 210A, as described in greater detail above in connection with FIG. 3A: axial alignment of a PM waveguide's polarization axis to a geometric position of the at least one fiducial element 210A;

The selection of a specific type of polarization axes alignment mode for the optical coupler is preferably governed by at least one axes alignment criterion, which may include, but which is not limited to: alignment of PM waveguides' polarization axes in a geometric arrangement that maximizes PM properties thereof; and/or satisfying at least one requirement of one or more intended industrial application for the novel coupler array.

Referring now to FIG. 3H, a first alternative embodiment of the novel optical fiber coupler array 200G of FIG. 3G, above, is shown as a coupler array 200H, that comprises a single housing structure 202H, and at least one VC waveguide, shown in FIG. 3H by way of example as a PM VC waveguide 204H having polarization maintaining properties, and a plurality of Non-VC waveguides 206H-(1..n), with n being equal to 18 by way of example only. The PM VC waveguide 204H is positioned as a side-channel, off-set from the central longitudinal axis of the single common housing structure 202H, and comprises a polarization axis that is aligned, by way of example, with respect to the transverse off-center location of the PM VC waveguide 204H.

Referring now to FIG. 3I, a fourth alternative embodiment of the novel optical fiber coupler array 200B of FIG. 3B, above, is shown as a coupler array 200I, that comprises a single housing structure 202I, and at least one VC waveguide, shown in FIG. 3I by way of example as a PM VC waveguide 204I having polarization maintaining properties, and a plurality of PM Non-VC waveguides 206I-(1..n), with n being equal to 18 by way of example only, each also having polarization maintaining properties. The PM VC waveguide 204I is positioned along a central longitudinal axis of the common housing structure 202I, and circumferentially and symmetrically surrounded by proximal parallel plural PM Non-VC waveguides 206I-(1..n). By way of example, the coupler array 200I comprises a polarization axes alignment mode in which the polarization axes of each of the PM VC waveguide 204I and of the plural PM Non-VC waveguides 206I-(1..n) are aligned to one another. The PM properties of the PM VC waveguide 204I and of the plural PM Non-VC waveguides 206I-(1..n) are shown, by way of example only, as being induced by rod stress members (and which may readily and alternately be induced by various other stress, or equivalent means).

Referring now to FIG. 3J, a first alternative embodiment of the novel optical fiber coupler array 200I of FIG. 3I, above, is shown as a coupler array 200J, that comprises a single housing structure 202J, and at least one VC waveguide, shown in FIG. 3J by way of example as a PM VC waveguide 204J having polarization maintaining properties, and a plurality of PM Non-VC waveguides 206J-(1..n), with n being equal to 18 by way of example only, each also having polarization maintaining properties. The PM VC waveguide 204J is positioned along a central longitudinal axis of the common housing structure 202J, and circumferentially and symmetrically surrounded by proximal parallel plural PM Non-VC waveguides 206J-(1..n). The PM properties of the PM VC waveguide 204J and of the plural PM Non-VC waveguides 206J-(1..n) are shown, by way of example only, as resulting only from a non-circular cross-sectional shape (shown by way of example only as being at least in part elliptical), of each plural PM Non-VC waveguide 206J-(1..n) core (and from a non-circular cross-sectional shape of the outer core of the PM VC waveguide 204J).

The coupler array 200J optionally comprises at least one waveguide arrangement indication element 208J, positioned on an outer region of the common housing structure 202J, that is representative of the particular cross-sectional geometric arrangement of the optical coupler array 200J waveguides (i.e., of the PM VC waveguide 204J and of the plural PM Non-VC waveguides 206J-(1..n)), such that a particular cross-sectional geometric waveguide arrangement may be readily identified from at least one of a visual and physical inspection of the common coupler housing structure 202J that is sufficient to examine the waveguide arrangement indication element 208J. Preferably, the waveguide arrangement indication element 208J may be configured to be further operable to facilitate passive alignment of a second end of the optical coupler array 200J to at least one optical device (not shown).

The waveguide arrangement indication element 208J, may comprise, but is not limited to, one or more of the following, applied to the common housing structure 202J outer surface: a color marking, and/or a physical indicia (such as an groove or other modification of the common housing structure 202J outer surface, or an element or other member positioned thereon). Alternatively, the waveguide arrangement indication element 208J may actually comprise a specific modification to, or definition of, the cross-sectional geometric shape of the common housing structure 202J (for example, such as a hexagonal shape of a common housing structure 202L of FIG. 3L, below, or another geometric shape).

By way of example, the coupler array 200J may comprise a polarization axes alignment mode in which the polarization axes of each of the PM VC waveguide 204J and of the plural PM Non-VC waveguides 206J-(1..n) are aligned to one another, or to the waveguide arrangement indication element 208J.

Referring now to FIG. 3K, a fifth alternative embodiment of the novel optical fiber coupler array 200B of FIG. 3B, above, is shown as a coupler array 200K, that comprises a single housing structure 202K, and at least one VC waveguide, shown in FIG. 3K by way of example as a PM VC waveguide 204K having polarization maintaining properties, and a plurality of Non-VC waveguides 206K-(1..n), with n being equal to 18 by way of example only. The PM VC waveguide 204K is positioned along a central longitudinal axis of the common housing structure 202K, and circumferentially and symmetrically surrounded by proximal parallel plural PM Non-VC waveguides 206K-(1..n). The PM properties of the PM VC waveguide 204K are shown, by way of example only, as being induced by rod stress members (and which may readily and alternately be induced by various other stress, or equivalent means)). The coupler array 200K, may optionally comprise a plurality of waveguide arrangement indication elements -- shown by way of example only, as waveguide arrangement indication elements 208K-a and 208K-b, which may each be of the same, or of a different type, as described in greater detail above, in connection with the waveguide arrangement indication element 208J of FIG. 3J.

Referring now to FIG. 3L, a second alternative embodiment of the optical fiber coupler array 200I of FIG. 3I, above, is shown as a coupler array 200L, that comprises a single housing structure 202L comprising a cross section having a non-circular geometric shape (shown by way of example as a hexagon), and at least one VC waveguide, shown in FIG. 3L by way of example as a PM VC waveguide 204L having polarization maintaining properties, and a plurality of PM Non-VC waveguides 206L-(1..n), with n being equal to 18 by way of example only, each also having polarization maintaining properties. The PM VC waveguide 204L is positioned along a central longitudinal axis of the common housing structure 202L, and circumferentially and symmetrically surrounded by proximal parallel plural PM Non-VC waveguides 206L-(1..n).

By way of example, the coupler array 200L comprises a polarization axes alignment mode in which the polarization axes of each of the PM VC waveguide 204L and of the plural PM Non-VC waveguides 206L-(1..n) are aligned to one another, and to the common housing structure 202L cross-sectional geometric shape. The PM properties of the PM VC waveguide 204L and of the plural PM Non-VC waveguides 206L-(1..n) are shown, by way of example only, as being induced by rod stress members (and which may readily and alternately be induced by various other stress, or equivalent means)). The coupler array 200K, may optionally comprise a waveguide arrangement indication element 208L-a which may comprise any of the configurations described in greater detail above, in connection with the waveguide arrangement indication element 208J of FIG. 3J.

Referring now to FIG. 4, a second end 302 (i.e. "tip") of the optical fiber coupler array is shown, by way of example, as being in the process of connecting to plural vertical coupling elements 306 of an optical device 304 in a proximal open air optical coupling alignment configuration, that may be readily shifted into a butt-coupled configuration through full physical contact of the optical fiber coupler array second end 302 and the vertical coupling elements 306.

Referring now to FIG. 5 a second end 322 (i.e. "tip") of the optical fiber coupler array is shown, by way of example, as being in the process of connecting to plural edge coupling elements 326 of an optical device 324 in a butt-coupled configuration, that may be readily shifted into one of several alternative coupling configuration, including a proximal open air optical coupling alignment configuration, and or an angled alignment coupling configuration.

In at least one alternative embodiment, the optical coupler array (i.e., such as optical coupler arrays 200D to 200L of FIGS. 3C to 3L) may be readily configured to pump optical fiber lasers, and/or optical fiber amplifiers (or equivalent devices). In a preferred embodiment thereof, a novel pumping-enabled coupler array comprises a central channel (i.e.,

waveguide), configured to transmit a signal (i.e., serving as a "signal channel") which will thereafter be amplified or utilized to generate lasing, and further comprises at least one additional channel (i.e., waveguide), configured to provide optical pumping functionality (i.e., each serving as a "pump channel"). In various exemplary alternative embodiments thereof, the novel pumping-enabled coupler array may comprise the following in any desired combination thereof:

- at least one of the following signal channels: a single mode signal channel configured for optimum coupling to a single mode amplifying fiber at at least one predetermined signal or lasing wavelength, a multimode signal channel configured for optimum coupling to a multimode amplifying fiber at at least one predetermined signal or lasing wavelength, and
- at least one of the following pumping channels: a single mode pumping channel configured for optimum coupling to a single mode pump source at at least one predetermined pumping wavelength, a multimode pumping channel configured for optimum coupling to a multimode pump source at at least one predetermined pumping wavelength.

Optionally, to maximize pumping efficiency, the novel pumping-enabled coupler array may be configured to selectively utilize less than all the available pumping channels.

It should also be noted that, as a matter of design choice, the novel pumping-enabled coupler array may be configured to comprise:

a. At least one signal channel, each disposed in a predetermined desired position in the coupler array structure;

b. At least one pumping channel, each disposed in a predetermined desired position in the coupler array structure; and

c. Optionally - at least one additional waveguide for at least one additional purpose other than signal transmission or pumping (e.g., such as a fiducial marker for alignment, for fault detection, for data transmission, etc.)

Advantageously, the pump channels could be positioned in any transverse position within the coupler, including along the central longitudinal axis. The pump channels may also comprise, but are not limited to, at least one of any of the following optical fiber types: SM, MM, LMA, or VC waveguides. Optionally, any of the optical fiber(s) being utilized as an optical pump channel (regardless of the fiber type) in the novel coupler may comprise polarization maintaining properties.

In yet another exemplary embodiment, the novel pumping-enabled coupler array may be configured to be optimized for coupling to a double-clad fiber - in this case, the signal channel of the coupler array would be optimized for coupling to the signal channel of the double-clad fiber, while each of the at least one pumping channels would be optimized to couple to the inner cladding of the double-clad fiber.

In essence, the novel optical coupler arrays, shown by way of example in various embodiments, may also be readily implemented as high density, multi-channel, optical input/output (I/O) for fiber-to-chip and fiber-to-optical waveguides. The optical fiber couplers may readily comprise at least the following features:

- Dramatically reduced channel spacing and device footprint (as compared to previously known solutions)

- Scalable channel count

- All-glass optical path

- Readily butt-coupled or spliced at their high density face without the need of a lens, air gap, or a beam spreading medium

- May be fabricated through a semi-automated production process

- Broad range of customizable parameters: wavelength, mode field size, channel spacing, array configuration, fiber type.

The optical fiber couplers may be advantageously utilized for at least the following applications, as a matter of design choice or convenience:

- Coupling to waveguides:

    ◦ PIC or PCB-based (single-mode or multimode)

◦ Multicore fibers

◦ Chip edge (1D) or chip face (2D) coupling

◦ NA optimized for the application, factoring in:

  ▪ Packaging alignment needs

  ▪ Chip processing needs / waveguide up-tapering

◦ Polarization maintaining properties may be readily configured

• Coupling to chip-based devices: e.g. VCSELs, photodiodes, vertically coupled gratings

• Laser diode coupling

• High density equipment Input/Output (I/O)

In conclusion, when implemented, the various exemplary embodiments of the optical fiber couplers comprise at least the following advantages, as compared to currently available competitive solutions:

• Unprecedented density

• Low-loss coupling ($\leq$ 0.5 dB)

• Operational stability

• Form factor support

• Broad spectral range

• Matching NA

• Scalable channel count

• Polarization maintenance

Referring now to FIG. 7, at least one exemplary embodiment not being part of the claimed invention of the optical coupler is shown as an optical fiber polarization mode coupler 450, configured for use in applications requiring optical waveguides with polarization maintaining or polarizing properties, especially where high power handling is desirable (including, but not limited to, in-fiber polarizers, in-fiber polarization combiners, in-fiber polarization splitters).
For example, in an in-fiber polarizer application, unpolarized light enters Port 3 and only one polarization mode exits Port 1. In a polarization combiner application, a polarized mode (slow) enters Port 1 and another polarized mode (slow again) enters Port 2, and the combined light exits from Port 3. In a polarization splitter application, unpolarized light enters Port 3 and one polarization mode (slow) exits from Port 1, while the other polarization mode (fast) exits from Port 2.
As in the '865 Application, the inner core parameters (shape, size, and the refractive index) may be configured to optimize optical coupling to fusion spliced standard pigtail fibers. In a preferred embodiment, the pigtail fibers of Port 1 and 2 are polarization maintaining fibers with slow axes aligned with the slow axes of the polarization maintaining vanishing core waveguides. The outer core parameters may be configured to optimize fusion splice coupling to a standard pigtail fiber at Port 3. By way of example, this may be either a SM fiber (as required by polarization splitter or combiner applications), or a PM fiber (for polarization splitter / combiner or polarizer applications). Outer claddings of the polarization maintaining vanishing core waveguides may be separated by a pre-determined spacing as shown in FIG. 7, or they may substantially be in contact with each other, as defined by the difference between predetermined spacing between waveguides and cladding diameter.
Referring now to FIG. 8, at least one of the following parameters is preferably selected and configured to maximize desirable polarization mode coupling (shown by solid lines), and to minimize undesirable polarization mode coupling (shown by dashed lines) as illustrated schematically therein:

- predetermined reduction profile

- cross sectional shape of the first inner core,

- cross sectional shape of the second inner core,

- the first refractive index (N-1),

- the first inner core size (ICS-1),

- the second inner core size (ICS-2),

- the second refractive index (N-2),

- the first outer core size (OCS-1),

- the second outer core size (OCS-2),

- the third refractive index (N-3), and

- the fourth refractive index (N-4)

It should also be noted that at Port 3, the combined waveguide cross-section may be formed not just by the two outer cores, but by outer claddings as well.

Referring now to FIG. 9, a set 500 of exemplary refractive index profiles, each comprising a different back reflection loss reduction scenario - Optimized Refraction Index Profile "ORIP" (ORIP-a to ORIP-c), corresponding to a particular novel coupler array configuration. ORIP-a to ORIP-c are shown by way of example for a novel coupler array 502 positioned between a plural optical fiber 504 and an optical device 506, with interfaces of each with respective ends of the coupler array 502 shown as Interface 1 and Interface 2.

The profile shown as ORIP-a results in a substantial back reflection at the Interface 1 and suppressed back reflection at the Interface 2. The profile shown as ORIP-b results in a substantially no back reflection at the Interface 1 and significant back reflection at the Interface 2. The profile shown as ORIP-c results in an optimized total back reflection from both Interfaces 1 and 2, balancing the reduction of back reflection at each (for example with the goal of reducing the maximum back reflection for the higher reflection Interface of Interfaces 1, 2). It should be noted, however, that in at least some embodiments, the reflection from Interface 2 may not be important for optimization ORIP-a, because Interface 2 in many device configurations is likely to be angled with respect to the normal vanishing waveguide core.

Preferably, to achieve the result, shown in profiles ORIP-b or ORIP-c, the coupler array 502 vanishing core waveguide refractive index N-3 should be lower than the refractive index $N_{of}$ of the cladding of the plural optical fiber 504. Thus for example, if the cladding of the plural optical fiber 504 is made of pure silica, then N-3 should be lower than the refractive index of the pure silica, and the outer cladding of the vanishing core waveguide longitudinally surrounding the outer core should comprise another material, for example, fluorine doped silica.

While the baseline refractive index $N_{base}$ is shown to be the same as the refractive index $N_{of}$ of the plural optical fiber 504, and the refractive index $N_{od}$ optical device 506, it should be noted that the value of the plural optical fiber 504 refractive index $N_{of}$ can be different from the refractive index value $N_{od}$ of the optical device 506. For example, if an optional substantially transparent adhesive is positioned between the plural optical fiber 504 and the optical device 506 to minimize reflection, at Interface 2, the value of $N_{od}$ is likely be different from $N_{of}$.

The above optimization techniques can be readily and advantageously applied to various exemplary embodiments of the coupler array shown in FIGs. 1A to 2D, and in FIGs. 4, and 5 (in which the Interface-1 and Interface-2, corresponding to the Optimization Profile Set 500, are shown as INT-1, and INT-2, respectively).

## PART II

Improved cross sectional (or transverse) positioning of waveguides is desirable in many multichannel optical coupler arrays. In the present disclosure, some embodiments of the housing structure (e.g., a common single coupler housing structure in some cases) can allow for self-aligning waveguide arrangement at a close proximity to a first end (e.g., hexagonal close packed arrangement in a housing structure having circular (as shown in FIG. 17) or hexagonal inner cross section) and improved (precise or near precise in some cases) cross sectional positioning of the waveguides at a second end.

Packaging of photonic integrated circuits (PICs) with low vertical profile (perpendicular to the PIC plane) can also be desirable for a variety of applications, including optical communications and sensing. While this is easily achievable for edge couplers, surface couplers may require substantial vertical length.

Accordingly, it may be advantageous to provide various embodiments of a pitch reducing optical fiber array (PROFA)-based flexible optical fiber array component that may be configured and possibly optimized to comprise a structure that maintains all channels discretely with sufficiently low crosstalk, while providing enough flexibility to accommodate low profile packaging. It may further be desirable to provide a PROFA-based flexible optical fiber array component comprising a flexible portion to provide mechanical isolation of a "PROFA-PIC interface" from the rest of the PROF A, resulting in increased stability with respect to environmental fluctuations, including temperature variations and mechanical shock and vibration. It may be additionally desirable to provide a PROFA-based flexible optical fiber array comprising multiple coupling arrays, each having multiple optical channels, combined together to form an optical multi-port input/output (IO) interface.

Certain embodiments are directed to an optical fiber coupler array capable of providing a low-loss, high-coupling coefficient interface with high accuracy and easy alignment between a plurality of optical fibers (or other optical devices) with a first channel-to-channel spacing, and an optical device having a plurality of waveguide interfaces with a second, smaller channel-to-channel spacing. Advantageously, in various embodiments, each of a larger size end and a smaller size end of the optical fiber coupler array is configurable to have a correspondingly different (i.e., larger vs. smaller) channel-to-channel spacing, where the respective channel-to-channel spacing at each of the optical coupler array's larger and smaller ends may be readily matched to a corresponding respective first channel-to-channel spacing of the plural optical fibers at the larger optical coupler array end, and to a second channel-to-channel spacing of the optical device plural waveguide interfaces at the smaller optical coupler array end.

In various embodiments thereof, the optical coupler array includes a plurality of waveguides (at least one of which may optionally be polarization maintaining), that comprises at least one gradually reduced "vanishing core fiber" and according to the claimed invention at least two of them, embedded within a common housing structure. Alternatively, in various additional embodiments thereof, the coupler array may be configured for utilization with at least one of an optical fiber amplifier and an optical fiber laser.

Each of the various embodiments of the optical coupler array advantageously comprises at least one "vanishing core" (VC) fiber waveguide, described, for example, below in connection with a VC waveguide 10030A of the optical coupler array 10010A of FIG. 10A The claimed optical coupler array comprises at least two vanishing core waveguides.

It should also be noted that the term "optical device" as generally used herein, applies to virtually any single channel or multi-channel optical device, or to any type of optical fiber, including, but not being limited to, standard / conventional optical fibers. For example, optical devices with which the coupler array may advantageously couple may include, but are not limited to, one or more of the following:

- a free-space-based optical device,
- an optical circuit having at least one input/output edge coupling port,
- an optical circuit having at least one optical port comprising vertical coupling elements,
- a multi-mode (MM) optical fiber,
- a double-clad optical fiber,
- a multi-core (MC) optical fiber,
- a large mode area (LMA) fiber,
- a double-clad multi-core optical fiber,
- a standard / conventional optical fiber,
- a custom optical fiber, and/or
- an additional optical coupler array.

In addition, while the term "fusion splice" is utilized in the various descriptions of the example embodiments of the coupler array provided below, in reference to interconnections between various optical coupler array components, and connections between various optical coupler array components and optical device(s), it should be noted, that any other form of waveguide or other coupler array component connectivity technique or methodology may be readily selected and utilized as a matter of design choice or necessity, including but not limited to mechanical connections.

Referring now to FIG. 10A, a first example embodiment not being part of the claimed invention of an optical fiber coupler array is shown as an optical coupler array 10010A, which comprises a common housing structure 10 014A (described below), at least one VC waveguide, shown in FIG. 10A by way of example, as a single VC waveguide 10030A, and at least one Non-VC waveguide, shown in FIG. 10A by way of example, as a pair of Non-VC waveguides 1 0 0 32A-1, 100 32A-2, each positioned symmetrically proximally to one of the sides of the example single VC waveguide 10030A, wherein the section of the VC waveguide 1 0 0 30A, located between positions B and D of FIG. 10A is embedded in the common housing structure 10014A.

Before describing the coupler array 10A and its components in greater detail, it would be useful to provide a detailed overview of the VC waveguide 30A, the example embodiments and alternative embodiments of which, are advantageously utilized in each of the various embodiments not being part of the claimed invention of the coupler arrays of FIGs. 10A to 14.

The VC waveguide 10030A has a larger end (proximal to position B shown in FIG. 10A), and a tapered, smaller end (proximal to position C shown in FIG. 10A), and comprises an inner core 1 0 0 20A (comprising a material with an effective refractive index of N-1), an outer core 1 0 0 22A (comprising a material with an effective refractive index of N-2, smaller than N-1), and a cladding 100 24A (comprising a material with an effective refractive index of N-3, smaller than N- 2).

Advantageously, the outer core 10 022A serves as the effective cladding at the VC waveguide 10030A large end at which the VC waveguide 10030A supports "M1" spatial propagating modes within the inner core 10020A, where M1 is larger than 0. The indices of refraction N-1 and N-2, are preferably chosen so that the numerical aperture (NA) at the VC waveguide 10030A large end matches the NA of an optical device (e.g. an optical fiber) to which it is connected (such as an optical device 10034A-1, for example, comprising a standard / conventional optical fiber connected to the VC waveguide 10030A at a connection position 10036A-1 (e.g., by a fusion splice, a mechanical connection, or by other fiber connection designs), while the dimensions of the inner and outer cores (10020A, 1 0 0 22A), are preferably chosen so that the connected optical device (e.g., the optical device 10034A-1), has substantially the same mode field dimensions (MFD). Here and below we use mode field dimensions instead of commonly used mode field diameter (also MFD) due to the case that the cross section of the VC or Non-VC waveguides may not be circular, resulting in a non-circular mode profile. Thus, the mode field dimensions include both the mode size and the mode shape and equal to the mode field diameter in the case of a circularly symmetrical mode.

During fabrication of the coupler array 10010A from an appropriately configured preform (comprising the VC waveguide 10030A preform having the corresponding inner and outer cores 10020A, 10022A, and cladding 10024A), as the coupler array 100 10A preform is tapered in accordance with at least one predetermined reduction profile, the inner core 10020A becomes too small to support all M1 modes. The number of spatial modes, supported by the inner core at the second (tapered) end is M2, where M2 < M1. In the case of a single mode waveguide, where M1 = 1 (corresponding to 2 polarization modes), M2 = 0, meaning that inner core is too small to support light propagation. The VC waveguide 10030A then acts as if comprised a fiber with a single core of an effective refractive index close to N-2, surrounded by a cladding of lower index N-3.

During fabrication of the coupler array 10010A, a channel-to-channel spacing S-1 at the coupler array 10010A larger end (at position B, FIG. 10A), decreases in value to a channel-to-channel spacing S-2 at the coupler array 10010A smaller end (at position C, FIG. 10A), in proportion to a draw ratio selected for fabrication, while the MFD value (or the inversed NA value of the VC waveguide 10030A) can be either reduced, increased or preserved depending on a selected differences in refractive indices, (N-1 - N-2) and (N-2 - N-3), which depends upon the desired application for the optical coupler array 1010A, as described below.

The capability of independently controlling the channel-to-channel spacing and the MFD values at each end of the optical coupler array is a highly advantageous feature of certain embodiments. Additionally, the capability to match MFD and NA values through a corresponding selection of the sizes and shapes of inner 10020A and outer 10022A cores and values of N-1, N-2, and N-3, makes it possible to utilize the optical coupler array to couple to various waveguides without the need to use a lens.

In various embodiments thereof, the property of the VC waveguide permitting light to continue to propagate through the waveguide core along the length thereof when its diameter is significantly reduced, advantageously, reduces optical loss from interfacial imperfection or contamination, and allows the use of a wide range of materials for a medium 10028A of the common housing structure 10014A (described below), including, but not limited to:

(a) non-optical materials (since the light is concentrated inside the waveguide core),

(b) absorbing or scattering materials or materials with refractive index larger than the refractive index of standard / conventional fibers for reducing or increasing the crosstalk between the channels, and

(c) pure-silica (e.g., the same material as is used in most standard / conventional fiber claddings, to facilitate splicing to multi-core, double-clad, or multi-mode fiber.

Preferably, in accordance with certain embodiments, the desired relative values of NA-1 and NA-2 (each at a corresponding end of the coupler array 10010A, for example, NA-1 corresponding to the coupler array 10010A large end, and NA-2 corresponding to the coupler array 10010A small end), and, optionally, the desired value of each of NA-1 and NA-2), may be determined by selecting the values of the refractive indices N1, N2, and N3 of the coupler array 10010A, and configuring them in accordance with at least one of the following relationships, selected based on the desired relative numerical aperture magnitudes at each end of the coupler array 10010A :

**Desired NA-1/NA-2**

| Relative Magnitude | Corresponding Relationship bet. N1. N2, N3 |
|---|---|
| NA-1 (lrg. end) > NA-2 (sm. end) | (N1 - N2 > N2 - N3) |
| NA-1 (lrg. end) = NA-2 (sm. end) | (N1 - N2 = N2 - N3) |
| NA-1 (lrg. end) < NA-2 (sm. end) | (N1 - N2 < N2 - N3) |

Commonly the NA of any type of fiber is determined by the following expression:

$$\mathrm{NA} = \sqrt{n_{\mathrm{core}}^2 - n_{\mathrm{clad}}^2},$$

where $n_{\mathrm{core}}$ and $n_{\mathrm{clad}}$ are the refractive indices of fiber core and cladding respectively.

It should be noted that when the above expression is used, the connection between the NA and the acceptance angle of the fiber is only an approximation. In particular, fiber manufacturers often quote "NA" for single-mode (SM) fibers based on the above expression, even though the acceptance angle for a single-mode fiber is quite different and cannot be determined from the indices of refraction alone.

In accordance with certain embodiments, as used herein, the various NA values are preferably determined utilizing effective indices of refraction for both $n_{\mathrm{core}}$ and $n_{\mathrm{cladding}}$, because the effective indices determine the light propagation and are more meaningful in the case of structured waveguides utilized in various embodiments. Also, a transverse refractive index profile inside a waveguide may not be flat, but rather varying around the value N1, N2, N3, or N4. In addition, the transition between regions having refractive indices N1, N2, N3, and N4 may not be as sharp as a step function due to dopant diffusion or some other intentional or non-intentional factors, and may be a smooth function, connecting the values of N1, N2, N3, and N4. Coupling design or optimization may involve changing both the values of N1, N2, N3, and N4 and the sizes and shapes of the regions having respective indices.

Returning now to FIG. 10A, the common coupling structure 10014A, comprises the medium 10028A, in which the section of the VC waveguide 10030A located between positions B and D of FIG. 10A is embedded, and which may include, but is not limited to, at least one of the following materials:

- a material, having properties prohibiting propagation of light therethrough,

- a material having light-absorbing optical properties,

- a material having light scattering optical properties,

- a material having optical properties selected such that said fourth refractive index (N-4) is greater than said third refractive index (N- 3), and/or

- a material having optical properties selected such that said fourth refractive index (N-4) is substantially equal to said third refractive index (N-3).

At the optical coupler array 10010A large end (proximally to position B in FIG. 10A), the VC waveguide 1 0 0 30A is spliced, at a particular splice location 1 0 0 36A-1 (shown by way of example as positioned inside the common housing structure 10014A), to a corresponding respective elongated optical device 10034A-1 (for example, such as an optical fiber), at least a portion of which extends outside the common housing structure 10014A by a predetermined length 10012A, while the Non-VC waveguides 10032A-1, 10032A-2 are spliced, at particular splice locations 10036A-2, 10036A-3, respectively (disposed outside of the common housing structure 10014A), to corresponding respective elongated optical devices 10034A-2, 10034A-3 (such as optical fibers), and extending outside the common housing structure 100 14A by a predetermined length 10012A.

Optionally, the coupler array 10010A may also include a substantially uniform diameter tip 1 0 0 16A (shown between positions C and D in FIG. 10A) for coupling, at an array interface 10018A with the interface 10042A of an optical waveguide device 1 0 0 40A. The uniform diameter tip 100 16A may be useful in certain interface applications, such as for example shown in FIGs. 10D, 13 and 14. Alternatively, the coupler array 10 010A may be fabricated without the tip 10 016A (or have the tip 10 016A removed after fabrication), such that coupling with the optical device interface 10042A, occurs at a coupler array 10010A interface at position C of FIG. 10A.

In an alternative embodiment, if the optical device 10040A comprises a double-clad fiber, when the small end of the coupler array 10010A is coupled (for example, fusion spliced) to the optical device interface 1 0 0 42A, at least a portion of the common housing structure 1 0 0 14A proximal to the splice position (such as at least a portion of the tip 10016A), may be coated with a low index medium (not shown), extending over the splice position and up to the double-clad fiber optical device 1 0 0 40A outer cladding (and optionally extending over a portion of the double-clad fiber optical device 10040A outer cladding that is proximal to the splice position).

Referring now to FIG. 10B, a second example embodiment not being part of the claimed invention of the optical fiber coupler array, is shown as a coupler array 10010B. The coupler array 10010B comprises a common housing structure 10014B, at least one VC waveguide, shown in FIG. 10B by way of example, as a single VC waveguide 10030B, and at least one Non-VC waveguide, shown in FIG. 10B by way of example, as a single Non-VC waveguide 100 32B, disposed in parallel proximity to the VC waveguide 1 0 0 30B, where a portion of the optical coupler array 100 10B, has been configured to comprise a larger channel-to-channel spacing value S2' at its small end, than the corresponding channel-to-channel spacing value S2 at the small end of the optical coupler array 10 0 10A, of FIG. 10A. This configuration may be readily implemented by transversely cutting the optical fiber array 1 0 0 10A at a position C', thus producing the common housing structure 100 14B that is shorter than the common housing structure 10014A and resulting in a new, larger diameter array interface 10018B, having the larger channel-to-channel spacing value S2'.

Referring now to FIG. 10C, a third example embodiment not being part of the claimed invention of the optical fiber coupler array, is shown as a coupler array 10010C. The coupler array 10010C comprises a plurality of VC waveguides, shown in FIG. 10C as VC waveguides 10030C-1, and 10030C-2, and a plurality of Non-VC waveguides, shown in FIG. 10C as Non-VC waveguides 10032C-1, 10032C-2, and 10032C-a, all disposed longitudinally and asymmetrically to one another, wherein at least a portion of the plural Non-VC waveguides are of different types and/or different characteristics (such as single mode or multimode or polarization maintaining etc.) - for example, Non-VC waveguides 10032C-1, 10032C-2 are of a different type, or comprise different characteristics from the Non-VC waveguide 10032C-a. Additionally, any of the VC or Non-VC waveguides (such as, for example, the Non-VC waveguide 10032C-a) can readily extend beyond the coupler array 10010C common housing structure by any desired length, and need to be spliced to an optical device proximally thereto.

Referring now to FIG. 10D, a fourth example embodiment not being part of the claimed invention of the optical fiber coupler array that is configured for multi-core fan-in and fan-out connectivity, and shown as a coupler array 10050. The coupler array 10050 comprises a pair of optical fiber coupler array components (10010D-1 and 10010D-2), with a multi-core optical fiber element 1 0 0 52 connected (e.g., by fusion splicing at positions 10054-1 and 10054-2) between the second (smaller sized) ends of the two optical fiber coupler array components (10010D-1, 100 10D-2). Preferably, at least one of the VC waveguides in each of the coupler array components (10010D-1, 1 0 0 10D-2) is configured to increase or maximize optical coupling to a corresponding selected core of the multi-core optical fiber element 10052, while decreasing or minimizing optical coupling to all other cores thereof.

Referring now to FIG. 11A, a fifth example embodiment not being part of the claimed invention of the optical fiber coupler array, is shown as a coupler array 10100A. The coupler array 10100A comprises a plurality of longitudinally proximal VC waveguides at least partially embedded in a single common housing structure 10 104A, shown by way of example only, as plural VC waveguides 10130A-1, 10130A-2. Each plural VC waveguide 10130A-1, 10130A-2 is spliced, at a particular splice location 10132A-1, 10132A-2, respectively, to a corresponding respective elongated optical device 10 134A-1, 10 134A-2 (such as an optical fiber), at least a portion of which extends outside the common housing structure 10104A by a predetermined length 10102A, and wherein each particular splice location 10132A-1, 10132A-2 is disposed within the common housing structure 10104A.

Referring now to FIG. 11B, a sixth example embodiment not being part of the claimed invention of the optical fiber coupler array, is shown as a coupler array 10 100B.

The coupler array 10100B comprises a plurality of longitudinally proximal VC waveguides at least partially embedded in a single common housing structure 10104B, shown by way of example only, as plural VC waveguides 10130B-1, 10130B-2. Each plural VC waveguide 10130B-1, 10130B-2 is spliced, at a particular splice location 10 132B-1, 10132B-2, respectively, to a corresponding respective elongated optical device 10 134B-1, 10 134B-2 (such as an optical fiber), at least a portion of which extends outside the common housing structure 10104B by a predetermined length 10102B, and wherein each particular splice location 10132B-1, 10132B-2 is disposed at an outer cross-sectional boundary region of the common housing structure 10104B.

Referring now to FIG. 11C, a seventh example embodiment not being part of the claimed invention of the optical fiber coupler array, is shown as a coupler array 10100C.

The coupler array 10100C comprises a plurality of longitudinally proximal VC waveguides at least partially embedded in a single common housing structure 10 104C, shown by way of example only, as plural VC waveguides 10130C-1, 10130C-2. Each plural VC waveguide 10130C-1, 1 0 130C-2 is spliced, at a particular splice location 10132C-1, 10 132C-2, respectively, to a corresponding respective elongated optical device 10 134C-1, 10 134C-2 (such as an optical fiber), at least a portion of which extends outside the common housing structure 10104C by a predetermined length 10102C, and wherein each particular splice location 10132C-1, 1 0 132C-2 is disposed outside of the common housing structure 10104C.

Referring now to FIG. 11D, an alternative embodiment not being part of the claimed invention of the optical fiber coupler array, is shown as a coupler array 1 0 150. The coupler array 10150 comprises a plurality of longitudinally proximal VC waveguides at least partially embedded in a single common housing structure, that is configured at its second end, to increase or optimize optical coupling to a free-space-based optical device 1 0 152. The free-space-based optical device 10 152 may comprise a lens 10 154 followed by an additional optical device component 1 0 156, which may comprise, by way of example, a MEMS mirror or volume Bragg grating. The combination of the coupler and the free-space-based optical device 10152 may be used as an optical switch or WDM device for spectral combining or splitting of light signals 10160b (representative of the light coupler array 1 0 150 output light signals 10160a after they have passed through the lens 10154.) In this case, one of the fibers may be used as an input and all others for an output or vice versa. In another embodiment, a free-space-based device 10152 can be fusion spliceable to the second coupler's end. This device may be a coreless glass element, which can serve as an end cup for power density redaction at the glass-air interface. In another modification, the coreless element can serve as a Talbot mirror for phase synchronization of coupler's waveguides in a Talbot cavity geometry

Prior to describing the various embodiments shown in FIGs. 12A to 12L in greater detail, it should be understood that whenever a "plurality" or "at least one" coupler component/element is indicated below, the specific quantity of such coupler components/elements that may be provided in the corresponding embodiment not being part of the claimed invention of the coupler array, may be selected as a matter of necessity, or design choice (for example, based on the intended industrial application of the coupler array). Accordingly, in the various FIGs. 12A to 12L, single or individual coupler array components/elements are identified by a single reference number, while each plurality of the coupler component/elements is identified by a reference number followed by a "(1..n)" designation, with "n" being a desired number of plural coupler elements/components (and which may have a different value in any particular coupler array embodiment described below).

Also, all the waveguides VC and Non-VC are shown with a circular cross-section of the inner and outer core and cladding only by example. Other shapes of the cross-sections of the inner and outer core and cladding (for example, hexagonal, rectangular or squared) may be utilized. The specific choice of shape is based on various requirements, such as channel shape of the optical device, channel positional geometry (for example, hexagonal, rectangular or square lattice), or axial polarization alignment mode.

Similarly, unless otherwise indicated below, as long as various relationships set forth below (for example, the relative volume relationship set forth below with respect to optical coupler arrays 1 0 200C and 10200D of FIGs. 12C and 12D, respectively, and the feature, set forth below in connection with the coupler array 1 0 200H of FIG. 12H, that the PM VC waveguide 1 0 204H is positioned longitudinally off-centered transversely from the coupler array 1 0 200H central longitudinal axis), are adhered to, the sizes, relative sizes, relative positions and choices of composition materials, are not limited to the example sizes, relative sizes, relative positions and choices of composition materials, indicated below in connection with the detailed descriptions of the coupler array embodiments of FIGs. 12A to 12L, but rather they may be selected by one skilled in the art as a matter of convenience or design choice.

Finally, it should be noted that each of the various single common housing structure components 10202A to 10202L, of the various coupler arrays 10200A to 10200L of FIGs. 12A to 12L, respectively, may be composed of a medium having the refractive index N-4 value in accordance with an applicable one of the above-described relationships with the values of other coupler array component refractive indices N-1, N-2, and N-3, and having properties and characteristics selected from the various contemplated example medium composition parameters described above in connection with medium 10028A of FIG. 10A.

Referring now to FIG. 12A, a first alternative embodiment of the optical fiber coupler array embodiments of FIGs. 10D to 11D, is shown as a coupler array 10200A in which all waveguides are VC waveguides. The coupler array 10200A comprises a single common housing 1 0 202A, and plurality of VC waveguides 1 0 204A-(1..n), with n being equal to 19 by way of example only, disposed centrally along the central longitudinal axis of the housing 10202A. The coupler array 10200A may also comprise an optional at least one fiducial element 10210A, operable to provide one or more useful properties to the coupler array, including, but not limited to:

- enabling visual identification (at at least one of the coupler array's ends) of the coupler array waveguide arrangement; and

- facilitating passive alignment of at least one of the coupler array ends to at least one optical device.

Furthermore, when deployed in optical coupler array embodiments that comprise at least one polarization maintaining VC waveguide (such as the optical coupler array embodiments described below in connection with FIGs. 12H - 12L), a fiducial element is further operable to:

- enable visual identification of the optical coupler array's particular polarization axes alignment mode (such as described below in connection with FIGs. 12H - 12L); and

- serve as a geometrically positioned reference point for alignment thereto, of one or more polarization axis of PM waveguides in a particular optical coupler array.

The fiducial element 1 0 210A may comprise any of the various types of fiducial elements known in the art, selected as a matter of design choice or convenience- for example, it may be a dedicated elongated element positioned longitudinally within the common housing structure 10202A in one of various cross-sectional positions (such as positions X or Y, shown in FIG. 12A. Alternatively, the fiducial element 10210A may comprise a dedicated channel not used for non-fiducial purposes, for example, replacing one of the waveguides 10204A-(1..n), shown by way of example only at position Z in FIG. 12A.

Referring now to FIG. 12B, a first alternative embodiment of the optical fiber coupler array 10010A of FIG. 10A, above, is shown as a coupler array 10200B, that comprises a single housing structure 1 0 202B, and at least one VC waveguide, shown in FIG. 12B by way of example as a VC waveguide 10204B, and a plurality of Non-VC waveguides 10206B-(1..n), with n being equal to 18 by way of example only. The VC waveguide 10204B is positioned along a central longitudinal axis of the common housing structure 10202B, and circumferentially and symmetrically surrounded by proximal parallel plural Non-VC waveguides 10206B- (1..n).

Referring now to FIG. 12C, a first alternative embodiment of the optical fiber coupler array 1 0 200B of FIG. 12B, above, is shown as a coupler array 10200C that comprises a single housing structure 1 0 202C, a VC waveguide 1 0 204C, and a plurality of Non-VC waveguides 1 0 206C-(1..n), with n being equal to 18 by way of example only. The VC waveguide 1 0 204C is positioned along a central longitudinal axis of the common housing structure 1 0 202C, and circumferentially and symmetrically surrounded by proximal parallel plural Non-VC waveguides 10206C-(1..n). The coupler array 1 0 200C is configured such that a volume of the common housing structure 10 202C medium, surrounding the sections of all of the waveguides embedded therein (i.e., the VC waveguide 10204C and the plural Non-VC waveguides 1 0 206C-(1..n)), exceeds a total volume of the inner and outer cores of the section of the VC waveguide 1 0 204C that is embedded within the single common housing structure 10202C.

Referring now to FIG. 12D, a first alternative embodiment of the optical fiber coupler array 10200C of FIG. 12C, above, is shown as a coupler array 1 0200D that comprises a single housing structure 10202D, a plurality of VC waveguides 10204D-(1..N), with N being equal to 7 by way of example only, and a plurality of Non-VC waveguides 10206D-(1..n), with n being equal to 12 by way of example only. The plural VC waveguides 1 0 204D-(1..N) are positioned along a central longitudinal axis of the common housing structure 1 0 202D, and circumferentially and symmetrically surrounded by proximal parallel plural Non- VC waveguides 1 0 206D-(1..n). The coupler array 1 0 200D is configured such that a volume of the common housing structure 1 0202D medium, surrounding the sections of all of the waveguides embedded therein (e.g., the plural VC waveguides 10204D-(1..N), and the plural Non-VC waveguides 10206D-(1..n)), exceeds a total volume of the inner and outer cores of the section of the plural VC waveguides 1 0 204D-(1..N) that are embedded within the single common housing structure 10202D.

Referring now to FIG. 12E, a first alternative embodiment of the optical fiber coupler array 1 0200D of FIG. 12D, above, is shown as a coupler array 10200E, that comprises a single housing structure 1 0 202E, a plurality of VC waveguides 1 0 204E-(1..N), with N being equal to 6 by way of example only, a plurality of Non-VC waveguides 1 0 206E-(1..n), with n being equal to 12 by way of example only, and a separate single Non-VC waveguide 1 0 206E'. The Non-VC waveguide 1 0 206E', is preferably operable to provide optical pumping functionality therethrough, and is positioned along a central longitudinal axis of the common housing structure 1 0 202E and circumferentially and symmetrically surrounded by proximal parallel plural VC waveguides 1 0 204E-(1..N), that are in turn circumferentially and symmetrically surrounded by proximal parallel plural Non- VC waveguides 10206E-(1..n).

Referring now to FIG. 12F, a second alternative embodiment of the optical fiber coupler array 1 0 200B of FIG. 12B, above, is shown as a coupler array 1 0 200F, that comprises a single housing structure 1 0 202F, a plurality of VC waveguides 1 0 204F-(1..N), with N being equal to 6 by way of example only, a separate single VC waveguide 1 0 204F', and a plurality of Non-VC waveguides 10206F-(1..n), with n being equal to 12 by way of example only, that preferably each comprise enlarged inner cores of sufficient diameter to increase or optimize optical coupling to different types of optical pump channels of various optical devices, to which the coupler array 1 0 200F may be advantageously coupled. The VC waveguide 1 0 204F', is positioned along a central longitudinal axis of the common housing structure 1 0 202F, and circumferentially and symmetrically surrounded by proximal parallel plural VC waveguides 1 0 204F-(1..N), that are in turn circumferentially and symmetrically surrounded by proximal parallel plural Non- VC waveguides 10206F-(1..n).

Referring now to FIG. 12G, a third alternative embodiment of the optical fiber coupler array 1 0 200B of FIG. 12B, above, is shown as a coupler array 1 0 200G, that comprises a single housing structure 1 0 202G, and at least one VC waveguide, shown in FIG. 12G by way of example as a VC waveguide 1 0204G, and a plurality of Non-VC waveguides 1 0 206G-(1..n), with n being equal to 18 by way of example only. The VC waveguide 1 0 204G is positioned as a side-channel, off-set from the central longitudinal axis of the single common housing structure 1 0 202G, such that optical fiber coupler array 1 0 200G may be readily used as a fiber optical amplifier and or a laser, when spliced to a double-clad optical fiber (not shown) having a non-concentric core for improved optical pumping efficiency. It should be noted that because a double-clad fiber is a fiber in which both the core and the inner cladding have light guiding properties, most optical fiber types, such as SM, MM, LMA, or MC (multi-core), whether polarization maintaining or not, and even standard (e.g., conventional) single mode optical fibers, can be converted into a double-clad fiber by coating (or recoating) the fiber with a low index medium (forming the outer cladding).

Optionally, when the second end of the coupler array 10200G is spliced to a double-clad fiber (not shown), at least a portion of the common housing structure 10202G proximal to the splice point with the double-clad fiber (not-shown), may be coated with a low index medium extending over the splice point and up to the double-clad fiber's outer cladding (and optionally extending over a portion of the outer cladding that is proximal to the splice point).

Referring now to FIGs. 12H to 12L, in various alternative example embodiments of the optical coupler, at least one of the VC waveguides utilized therein, and, in certain embodiments, optionally at least one of the Non-VC waveguides, may comprise a polarization maintaining (PM) property. By way of example, the PM property of a VC waveguide may result from a pair of longitudinal stress rods disposed within the VC waveguide outside of its inner core and either inside, or outside, of the outer core (or through other stress elements), or the PM property may result from a noncircular inner or outer core shape, or from other PM-inducing optical fiber configurations (such as in bow-tie or elliptically clad PM fibers). In various embodiments of the optical fiber in which at least one PM waveguide (VC and/or Non-VC) is utilized, an axial alignment of the PM waveguides (or waveguide), in accordance with a particular polarization axes alignment mode may be involved.

In accordance with certain embodiments, a polarization axes alignment mode may comprise, but is not limited to, at least one of the following:

- axial alignment of a PM waveguide's polarization axis to the polarization axes of other PM waveguides in the optical coupler; when a PM waveguide is positioned off-center: axial alignment of a PM waveguide's polarization axis to its transverse cross-sectional (geometric) position within the optical coupler;

- when the single common housing structure of the optical coupler comprises a non-circular geometric shape (such as shown by way of example in FIG. 12L): axial alignment of a PM waveguide's polarization axis to a geometric feature of the common housing structure outer shape;

- in optical coupler embodiments comprising one or more waveguide arrangement indicators, described below, in connection with FIGs. 12J-12L: axial alignment of a PM waveguide's polarization axis to at least one geometric characteristic thereof;

- in optical coupler embodiments comprising at least one fiducial element 1 0 210A, as described above in connection with FIG. 12A: axial alignment of a PM waveguide's polarization axis to a geometric position of the at least one fiducial element 10210A;

The selection of a specific type of polarization axes alignment mode for the various embodiments of the optical coupler is preferably governed by at least one axes alignment criterion, which may include, but which is not limited to: alignment of PM waveguides' polarization axes in a geometric arrangement that increases or maximizes PM properties thereof; and/or satisfying at least one requirement of one or more intended industrial application for the coupler array.

Referring now to FIG. 12H, a first alternative embodiment of the optical fiber coupler array 1 0 200G of FIG. 12G, above, is shown as a coupler array 1 0 200H, that comprises a single housing structure 1 0 202H, and at least one VC waveguide, shown in FIG. 12H by way of example as a PM VC waveguide 1 0 204H having polarization maintaining properties, and a plurality of Non-VC waveguides 10206H-(1..n), with n being equal to 18 by way of example only. The PM VC waveguide 1 0 204H is positioned as a side-channel, off-set from the central longitudinal axis of the single common housing structure 10202H, and comprises a polarization axis that is aligned, by way of example, with respect to the transverse off-center location of the PM VC waveguide 10204H.

Referring now to FIG. 12I, a fourth alternative embodiment of the optical fiber coupler array 10200B of FIG. 12B, above, is shown as a coupler array 1 0 200I, that comprises a single housing structure 10202I, and at least one VC waveguide, shown in FIG. 12I by way of example as a PM VC waveguide 10 204I having polarization maintaining properties, and a plurality of PM Non-VC waveguides 1 0 206I-(1..n), with n being equal to 18 by way of example only, each also having polarization maintaining properties. The PM VC waveguide 1 0 204I is positioned along a central longitudinal axis of the common housing structure 1 0 202I, and circumferentially and symmetrically surrounded by proximal parallel plural PM Non-VC waveguides 1 0206I-(1..n). By way of example, the coupler array 10200I comprises a polarization axes alignment mode in which the polarization axes of each of the PM VC waveguide 1 0 204I and of the plural PM Non-VC waveguides 10206I-(1..n) are aligned to one another. The PM properties of the PM VC waveguide 1 0 204I and of the plural PM Non-VC waveguides 1 0 206I-(1..n) are shown, by way of example only, as being induced by rod stress members (and which may readily and alternately be induced by various other stress, or equivalent designs)).

Referring now to FIG. 12J, a first alternative embodiment of the optical fiber coupler array 10200I of FIG. 12I, above, is shown as a coupler array 10200J, that comprises a single housing structure 10202J, and at least one VC waveguide, shown in FIG. 12J by way of example as a PM VC waveguide 10204J having polarization maintaining properties, and a plurality of PM Non-VC waveguides 10206J-(1..n), with n being equal to 18 by way of example only, each also having polarization maintaining properties. The PM VC waveguide 10204J is positioned along a central longitudinal axis of the common housing structure 10202J, and circumferentially and symmetrically surrounded by proximal parallel plural PM Non-VC waveguides 10206J-(1..n). The PM properties of the PM VC waveguide 10204J and of the plural PM Non-VC waveguides 10206J-(1..n) are shown, by way of example only, as resulting only from a non-circular cross-sectional shape (shown by way of example only as being at least in part elliptical), of each plural PM Non-VC waveguide 10206J-(1..n) core (and from a non-circular cross-sectional shape of the outer core of the PM VC waveguide 10204J).

The coupler array 10200J optionally comprises at least one waveguide arrangement indication element 10208J, positioned on an outer region of the common housing structure 1 0 202J, that is representative of the particular cross-sectional geometric arrangement of the optical coupler array 1 0 200J waveguides (i.e., of the PM VC waveguide 1 0 204J and of the plural PM Non-VC waveguides 1 0 206J-(1..n)), such that a particular cross-sectional geometric waveguide arrangement may be readily identified from at least one of a visual and physical inspection of the common coupler housing structure 1 0 202J that is sufficient to examine the waveguide arrangement indication element 1 0 208J. Preferably, the waveguide arrangement indication element 10208J may be configured to be further operable to facilitate passive alignment of a second end of the optical coupler array 10200J to at least one optical device (not shown).

The waveguide arrangement indication element 1 0 208J, may comprise, but is not limited to, one or more of the following, applied to the common housing structure 1 0 202J outer surface: a color marking, and/or a physical indicia (such as an groove or other modification of the common housing structure 1 0 202J outer surface, or an element or other member positioned thereon). Alternatively, the waveguide arrangement indication element 10208J may actually comprise a specific modification to, or definition of, the cross-sectional geometric shape of the common housing structure 10202J (for example, such as a hexagonal shape of a common housing structure 10202L of FIG. 12L, below, or another geometric shape).

By way of example, the coupler array 10200J may comprise a polarization axes alignment mode in which the polarization axes of each of the PM VC waveguide 10204J and of the plural PM Non-VC waveguides 10206J-(1..n) are aligned to one another, or to the waveguide arrangement indication element 1 0 208J.

Referring now to FIG. 12K, a fifth alternative embodiment of the optical fiber coupler array 1 0 200B of FIG. 12B, above, is shown as a coupler array 10200K, that comprises a single housing structure 1 0 202K, and at least one VC waveguide, shown in FIG. 12K by way of example as a PM VC waveguide 10204K having polarization maintaining properties, and a plurality of Non-VC waveguides 1 0 206K-(1..n), with n being equal to 18 by way of example only. The PM VC waveguide 1 0 204K is positioned along a central longitudinal axis of the common housing structure 1 0 202K, and circumferentially and symmetrically surrounded by proximal parallel plural PM Non-VC waveguides 1 0 206K-(1..n). The PM properties of the PM VC waveguide 1 0 204K are shown, by way of example only, as being induced by rod stress members (and which may readily and alternately be induced by various other stress, or equivalent approaches)). The coupler array 1 0200K, may optionally comprise a plurality of waveguide arrangement indication elements -- shown by way of example only, as waveguide arrangement indication elements 1 0208K-a and 1 0208K-b, which may each be of the same, or of a different type, as described above, in connection with the waveguide arrangement indication element 10208J of FIG. 12J.

Referring now to FIG. 12L, a second alternative embodiment of the optical fiber coupler array 10200I of FIG. 12I, above, is shown as a coupler array 10200L, that comprises a single housing structure 10202L comprising a cross section having a non-circular geometric shape (shown by way of example as a hexagon), and at least one VC waveguide, shown in FIG. 12L by way of example as a PM VC waveguide 10204L having polarization maintaining properties, and a plurality of PM Non-VC waveguides 1 0 206L-(1..n), with n being equal to 18 by way of example only, each also having polarization maintaining properties. The PM VC waveguide 1 0 204L is positioned along a central longitudinal axis of the common housing structure 1 0 202L, and circumferentially and symmetrically surrounded by proximal parallel plural PM Non-VC waveguides 10206L-(1..n).

By way of example, the coupler array 10200L comprises a polarization axes alignment mode in which the polarization axes of each of the PM VC waveguide 10204L and of the plural PM Non-VC waveguides 1 0 206L-(1..n) are aligned to one another, and to the common housing structure 1 0 202L cross-sectional geometric shape. The PM properties of the PM VC waveguide 1 0 204L and of the plural PM Non-VC waveguides 1 0 206L-(1..n) are shown, by way of example only, as being induced by rod stress members (and which may readily and alternately be induced by various other stress, or equivalent designs)). The coupler array 10200K, may optionally comprise a waveguide arrangement indication element 1 0 208L-a which may comprise any of the configurations described above, in connection with the waveguide arrangement indication element 1 0 208J of FIG. 12J.

Referring now to FIG. 13, a second end 1 0 302 (i.e. "tip") of the optical fiber coupler array is shown, by way of example, as being in the process of connecting to plural vertical coupling elements 10306 of an optical device 10304 in a proximal open air optical coupling alignment configuration, that may be readily shifted into a butt-coupled configuration through full physical contact of the optical fiber coupler array second end 302 and the vertical coupling elements 10306.

Referring now to FIG. 14 a second end 1 0 322 (i.e. "tip") of the optical fiber coupler array is shown, by way of example, as being in the process of connecting to plural edge coupling elements 10326 of an optical device 10324 in a butt-coupled configuration, that may be readily shifted into one of several alternative coupling configuration, including a proximal open air optical coupling alignment configuration, and or an angled alignment coupling configuration.

In at least one alternative embodiment, the optical coupler array (i.e., such as optical coupler arrays 10200D to 10200L of FIGS. 12C to 12L) may be readily configured to pump optical fiber lasers, and/or optical fiber amplifiers (or equivalent devices). In a preferred embodiment thereof, a pumping-enabled coupler array comprises a central channel (i.e., waveguide), configured to transmit a signal (i.e., serving as a "signal channel") which will thereafter be amplified or utilized to generate lasing, and further comprises at least one additional channel (i.e., waveguide), configured to provide optical pumping functionality (i.e., each serving as a "pump channel"). In various example alternative embodiments thereof, the pumping-enabled coupler array may comprise the following in any desired combination thereof:

- at least one of the following signal channels: a single mode signal channel configured for increased or optimum coupling to a single mode amplifying fiber at at least one predetermined signal or lasing wavelength, a multimode signal channel configured for increased or optimum coupling to a multimode amplifying fiber at at least one predetermined signal or lasing wavelength, and

- at least one of the following pumping channels: a single mode pumping channel configured for increased or optimum coupling to a single mode pump source at at least one predetermined pumping wavelength, a multimode pumping channel configured for increased or optimum coupling to a multimode pump source at at least one predetermined pumping wavelength.

Optionally, to increase or maximize pumping efficiency, the pumping-enabled coupler array may be configured to selectively utilize less than all the available pumping channels. It should also be noted that, as a matter of design choice, the pumping-enabled coupler array may be configured to comprise:

   a. At least one signal channel, each disposed in a predetermined desired position in the coupler array structure;
   b. At least one pumping channel, each disposed in a predetermined desired position in the coupler array structure; and
   c. Optionally - at least one additional waveguide for at least one additional purpose other than signal transmission or pumping (e.g., such as a fiducial marker for alignment, for fault detection, for data transmission, etc.)

Advantageously, the pump channels could be positioned in any transverse position within the coupler, including along the central longitudinal axis. The pump channels may also comprise, but are not limited to, at least one of any of the following optical fiber types: SM, MM, LMA, or VC waveguides. Optionally, any of the optical fiber(s) being utilized as an optical pump channel (regardless of the fiber type) in the coupler may comprise polarization maintaining properties.

In yet another example embodiment, the pumping-enabled coupler array may be configured to be optimized for coupling to a double-clad fiber - in this case, the signal channel of the coupler array would be configured or optimized for coupling to the signal channel of the double-clad fiber, while each of the at least one pumping channels would be configured or optimized to couple to the inner cladding of the double-clad fiber.

In essence, the optical coupler arrays, shown by way of example in various embodiments, may also be readily implemented as high density, multi-channel, optical input/output (I/O) for fiber-to-chip and fiber-to-optical waveguides. The optical fiber couplers may readily comprise at least the following features:

- Dramatically reduced channel spacing and device footprint (as compared to previously known solutions)

- Scalable channel count

- All-glass optical path

- Readily butt-coupled or spliced at their high density face without the need of a lens, air gap, or a beam spreading medium

- May be fabricated through a semi-automated production process

- Broad range of customizable parameters: wavelength, mode field size, channel spacing, array configuration, fiber type.

The optical fiber couplers may be advantageously utilized for at least the following applications, as a matter of design choice or convenience:

- Coupling to waveguides:

  - PIC or PCB-based (single-mode or multimode)

  - Multicore fibers

  - Chip edge (1D) or chip face (2D) coupling

  - NA optimized for the application, factoring in:

    - Packaging alignment needs

    - Chip processing needs / waveguide up-tapering

  - Polarization maintaining properties may be readily configured

- Coupling to chip-based devices: e.g. VCSELs, photodiodes, vertically coupled gratings

- Laser diode coupling

- High density equipment Input/Output (I/O)

Accordingly, when implemented, the various example embodiments of the optical fiber couplers comprise at least the following advantages, as compared to currently available competitive solutions:

- Unprecedented density

- Low-loss coupling ($\leq 0.5$ dB)

- Operational stability

- Form factor support

- Broad spectral range

- Matching NA

- Scalable channel count

- Polarization maintenance

Referring now to FIG. 16, at least one example embodiment not being part of the claimed invention of a flexible optical coupler array is shown as a flexible pitch reducing optical fiber array (PROFA) coupler 10450. Although various features of the example PROF A coupler may be described with respect to FIG. 16, any feature described above can be implemented in any combination with a flexible PROFA coupler. For example, any of the features described with respect to FIGs. 10A-14 may be utilized in a flexible PROFA coupler. Further, any feature described with respect to FIGs. 10A-14 may be combined with any feature described with respect to FIG. 16.

With continued reference to FIG. 16, the example flexible PROFA coupler 10450 shown in FIG. 16 can be configured for use in applications where interconnections with low crosstalk and sufficient flexibility to accommodate low profile packaging are desired. The vanishing core approach, described herein and in U.S. Patent Application Publication No. 2013/0216184, entitled "CONFIGURABLE PITCH REDUCING OPTICAL FIBER ARRAY", allows for the creation of a pitch reducing optical fiber array (PROFA) coupler / interconnect operable to optically couple, for example, a plurality of optical fibers to an optical device (e.g., a PIC), which can be butt-coupled to an array of vertical grating couplers (VGCs). If the cross sectional structure of the coupler 10450 has an additional layer of refractive index, N-2A, even lower than N2, as described herein and in U.S. Patent Application Publication No. 2013/0216184, the vanishing core approach can be utilized once more to reduce the outside diameter further without substantially compromising the channel crosstalk. This further reduction can advantageously provide certain embodiments with a flexible region which has a reduced cross section between a first and second end.

In some preferred embodiments, the difference (N-2A minus N-3) is larger than the differences (N-2 minus N-2A) or (N-1 minus N-2), resulting in a high NA, bend insensitive waveguide, when the light is guided by the additional layer having refractive index N-2A. Also, in some preferred embodiments, after the outside diameter of the coupler 1 0 450 is reduced along a longitudinal length from one end to form the flexible region, the outer diameter can then be expanded along the longitudinal length toward the second end, resulting in a lower NA waveguide with larger coupling surface area at the second end.

For example, as illustrated in FIG. 16, certain embodiments of an optical coupler array 10450 can comprise an elongated optical element 1000 having a first end 1010, a second end 1020, and a flexible portion 1050 therebetween. The optical element 1000 can include a coupler housing structure 1060 and a plurality of longitudinal waveguides 1100 embedded in the housing structure 1060. The waveguides 1100 can be arranged with respect to one another in a cross-sectional geometric waveguide arrangement. In FIG. 16, the example cross-sectional geometric waveguide arrangements of the waveguides 1100 for the first end 1010, the second end 1020, and at a location within the flexible portion 1050 are shown. The cross-sectional geometric waveguide arrangement of the waveguides 1100 for an intermediate location 1040 between the first end 1010 and the flexible portion 1050 is also shown. As illustrated by the shaded regions within the cross sections and as will be described herein, light can be guided through the optical element 1000 from the first end 1010 to the second end 1020 through the flexible portion 1050. As also shown in FIG. 16, this can result in a structure, which maintains all channels discretely with sufficiently low crosstalk, while providing enough flexibility (e.g., with the flexible portion 1050) to accommodate low profile packaging.

The level of crosstalk and/or flexibility can depend on the application of the array. For example, in some embodiments, a low crosstalk can be considered within a range from -45 dB to -35 dB, while in other embodiments, a low crosstalk can be considered within a range from -15 dB to -5 dB. Accordingly, the level of crosstalk is not particularly limited. In some embodiments, the crosstalk can be less than or equal to -55 dB, -50 dB, -45 dB, -40 dB, -35 dB, -30 dB, -25 dB, -20 dB, -15 dB, -10 dB, 0 dB, or any values therebetween (e.g., less than or equal to -37 dB, -27 dB, -17 dB, -5 dB, etc.) In some embodiments, the crosstalk can be within a range from -50 dB to -40 dB, from -40 dB to -30 dB, from -30 dB to -20 dB, from -20 dB to -10 dB, from -10 dB to 0 dB, from -45 dB to -35 dB, from -35 dB to -25 dB, from -25 dB to -15 dB, from -15 dB to -5 dB, from -10 dB to 0 dB, any combinations of these ranges, or any ranges formed from any values from -55 dB to 0 dB (e.g., from -52 dB to -37 dB, from -48 dB to -32 dB, etc.).

The flexibility can also depend on the application of the array. For example, in some embodiments, good flexibility of the flexible portion 1050 can comprise bending of at least 90 degrees, while in other embodiments, a bending of at least 50 degrees may be acceptable. Accordingly, the flexibility is not particularly limited. In some embodiments, the flexibility can be at least 45 degrees, 50 degrees, 55 degrees, 60 degrees, 65 degrees, 70 degrees, 75 degrees, 80 degrees, 90 degrees, 100 degrees, 110 degrees, 120 degrees, or at least any value therebetween. In some embodiments, the flexible portion 1050 can bend in a range formed by any of these values, e.g., from 45 to 55 degrees, from 50 to 60 degrees, from 60 to 70 degrees, from 70 to 80 degrees, from 80 to 90 degrees, from 90 to 100 degrees, from 100 to 110 degrees, from 110 to 120 degrees, or any combinations of these ranges, or any ranges formed by any values within these ranges (e.g., from 50 to 65 degrees, from 50 to 85 degrees, from 65 to 90 degrees, etc.) In other embodiments, the flexible portion 1050 can bend more or less than these values. Bending can typically be associated with light scattering. However, various embodiments can be configured to bend as described herein (e.g., in one of the ranges described above) and achieve relatively low crosstalk as described herein (e.g., in one of the ranges described above).

In various applications, the flexible portion 1050 might not bend in use, however the flexibility can be desired for decoupling the first 1010 or second 1020 end from other parts of the coupler array 10450. For example, the flexible portion 1050 of the flexible PROFA coupler 10450 can provide mechanical isolation of the first end 1010 (e.g., a PROFA-PIC interface) from the rest of the PROFA, which results in increased stability with respect to environmental fluctuations, including temperature variations and mechanical shock and vibration.

In the example shown in FIG. 16, the coupler array 10450 can be operable to optically couple with a plurality of optical fibers 2000 and/or with an optical device 3000. The optical fibers 2000 and optical device 3000 can include any of those described herein. The coupler array 10450 can couple with the optical fibers 2000 via the plurality of waveguides 1100 at the first end 1010. In addition, the coupler array 10450 can couple with the optical device 3000 via the plurality of waveguides 1100 at the second end 1020. As described herein, the plurality of waveguides 1100 can include at least one VC waveguide 1101. FIG. 16 illustrates all of the waveguides 1100 as VC waveguides. However, one or more Non-VC waveguides may also be used. In addition, FIG. 16 illustrates 7 VC waveguides, yet any number of VC and/or Non-VC waveguides can be used.

As also shown in the cross sections, each of the waveguides 1100 can be disposed at an individual corresponding cross-sectional geometric position, relative to other waveguides of the plurality of waveguides 1100. Although FIG. 16 shows a waveguide surrounded by 6 other waveguides, the cross-sectional geometric waveguide arrangement is not limited and can include any arrangement known in the art or yet to be developed including any of those shown in FIGs. 12A-12L.

As described herein, the VC waveguide 1101 can include an inner core (e.g., an inner vanishing core) 1110, an outer core 1120, and an outer cladding 1130 with refractive indices N-1, N-2, and N-3 respectively. As shown in FIG. 16, the VC waveguide 1101 can also include a secondary outer core 1122 (e.g., between the outer core 1120 and the outer cladding 1130) having refractive index N-2A. As the outer core 1120 can longitudinally surround the inner core 1110, the secondary outer core 1122 can longitudinally surround the outer core 1120 with the outer cladding 1130 longitudinally surrounding the secondary outer core 1122. In various embodiments, the relationship between the refractive indices of the inner core 1110, outer core 1120, secondary outer core 1122, and outer cladding 1130 can advantageously be N-1 > N-2 > N2-A > N-3. With such a relationship, each surrounding layer can serve as an effective cladding to the layers within it (e.g., the outer core 1120 can serve as an effective cladding to the inner core 1110, and the secondary outer core 1122 can serve as an effective cladding to the outer core 1120). Hence, the use of the secondary outer core 1122 can provide an additional set of core and cladding.

By including the secondary outer core 1122 with a refractive index N-2A, certain embodiments can achieve a higher NA (e.g., compared to without the secondary outer core 1122). In various embodiments, the difference (N-2A minus N-3) can be larger than the differences (N-2 minus N-2A) or (N-1 minus N-2) to result in a relatively high NA. Increasing NA can reduce the MFD, allowing for the channels (e.g., waveguides 1100) to be closer to each other (e.g., closer spacing between the waveguides 1100) without compromising crosstalk. Accordingly, the coupler array 10450 can be reduced further in cross section (e.g., compared to without the secondary outer core 1122) to provide a reduced region when light is guided by the secondary outer core 1122. By providing a reduced region between the first end 1010 and the second end 1020, certain embodiments can include a flexible portion 1050 which can be more flexible than the regions proximal to the first end 1010 and the second end 1020.

For example, the inner core 1110 size, the outer core 1120 size, and the spacing between the waveguides 1100 can reduce (e.g., simultaneously and gradually in some instances) along the optical element 1000 from the first end 1010 to the intermediate location 1040 such that at the intermediate location 1040, the inner core 1110 size is insufficient to guide light therethrough and the outer core 1120 size is sufficient to guide at least one optical mode. In certain embodiments, each waveguide 1100 can have a capacity for at least one optical mode (e.g., single mode or multi-mode). For example, at the first end 1010, the VC waveguide 1101 can support a number of spatial modes (M1) within the inner core 1110. At the intermediate location 1040, in various embodiments, the inner core 1110 may no longer be able to support all the M1 modes (e.g., cannot support light propagation). However, in some such embodiments, at the intermediate location 1040, the outer core 1120 can be able to support all the M1 modes (and in some cases, able to support additional modes). In this example, light traveling within the inner core 1110 from the first end 1010 to the intermediate location 1040 can escape from the inner core 1110 into the outer core 1120 such that light can propagate within both the inner core 1110 and outer core 1120.

In addition, the outer core 1120 size, the secondary outer core 1122 size, and the spacing between the waveguides 1100 can reduce (e.g., simultaneously and gradually in some instances) along said optical element 1000, for example, from the intermediate location 1040 to the flexible portion 1050 such that at the flexible portion 1050, the outer core 1120 size is insufficient to guide light therethrough and the secondary outer core 1122 size is sufficient to guide at least one optical mode therethrough. In certain embodiments, at the intermediate location 1040, the VC waveguide 1101 can support all the M1 modes within the outer core 1120. At the flexible portion 1050, in various embodiments, the outer core 1120 may be no longer able to support all the M1 modes (e.g., cannot support light propagation). However, in some such embodiments, at the flexible portion 1050, the secondary outer core 1122 can be able to support all the M1 modes (and in some cases, able to support additional modes). In this example, light traveling within the outer core 1120 from the intermediate location 1040 to the flexible portion 1050 can escape from the outer core 1120 into the secondary outer core 1122 such that light can propagate within the inner core 1110, the outer core 1120, and secondary outer core 1122.

Furthermore, the outer core 1120 size, the secondary outer core 1122 size, and the spacing between the waveguides 1100 can expand (e.g., simultaneously and gradually in some instances) along the optical element 1000 from the flexible portion 1050 to the second end 1020 such that at the second end 1020, the secondary outer core 1122 size is insufficient to guide light therethrough and the outer core 1120 size is sufficient to guide at least one optical mode therethrough. In certain embodiments, at the second end 1020, in various embodiments, the secondary outer core 1122 may no longer be able to support all the M1 modes (e.g., cannot support light propagation). However, in some such embodiments, at the second end 1020, the outer core 1120 can be able to support all the M1 modes (and in some cases, able to support additional modes). In this example, light traveling within the secondary outer core 1122 from the flexible portion 1050 to the second end 1020 can return and propagate only within the inner core 1110 and the outer core 1120.

It would be appreciated that light travelling from the second end 1020 to the first end 1010 can behave in the reverse manner. For example, the outer core 1120 size, the secondary outer core 1122 size, and spacing between the waveguides 1100 can reduce (e.g., simultaneously and gradually in some instances) along the optical element 1000 from the second end 1020 to the flexible portion 1050 such that at the flexible portion 1050, the outer core 1120 size is insufficient to guide light therethrough and the secondary outer core 1122 size is sufficient to guide at least one optical mode therethrough.

The reduction in cross-sectional core and cladding sizes can advantageously provide rigidity and flexibility in a coupler array 10450. Since optical fibers 2000 and/or an optical device 3000 can be fused to the ends 1010, 1020 of the coupler array 10450, rigidity at the first 1010 and second 1020 ends can be desirable. However, it can also be desirable for coupler arrays to be flexible so that they can bend to connect with low profile integrated circuits. In certain embodiments, the flexible portion 1050 between the first 1010 and second 1020 ends can allow the first 1010 and second 1020 ends to be relatively rigid, while providing the flexible portion 1050 therebetween. The flexible portion can extend over a length of the optical element 1000 and can mechanically isolate the first 1010 and second 1020 ends. For example, the flexible portion 1050 can mechanically isolate the first end 1010 from a region between the flexible portion 1050 and the second end 1020. As another example, the flexible portion 1050 can mechanically isolate the second end 1020 from a region between the first end 1010 and the flexible portion 1050. Such mechanical isolation can provide stability to the first 1010 and second 1020 ends, e.g., with respect to environmental fluctuations, including temperature variations and mechanical shock and vibration. The length of the flexible portion 1050 is not particularly limited and can depend on the application. In some examples, the length can be in a range from 2 to 7 mm, from 3 to 8 mm, from 5 to 10 mm, from 7 to 12 mm, from 8 to 15 mm, any combination of these ranges, or any range formed from any values from 2 to 20 mm (e.g., 3 to 13 mm, 4 to 14 mm, 5 to 17 mm, etc.). In other examples, the length of the flexible portion 1050 can be shorter or longer.

At the same time, the flexible portion 1050 can provide flexibility. In many instances, the flexible portion 1050 can have a substantially similar cross-sectional size (e.g., the cross-sectional size of the waveguides 1100) extending over the length of the flexible portion 1050. In certain embodiments, the cross-section size at the flexible portion 1050 can comprise a smaller cross-sectional size than the cross-sectional size at the first 1010 and second 1020 ends. Having a smaller cross-sectional size, this flexible portion 1050 can be more flexible than a region proximal to the first 1010 and second 1020 ends. The smaller cross-sectional size can result from the reduction in core and cladding sizes. An optional etching post-process may be desirable to further reduce the diameter of the flexible length of the flexible PROFA coupler 10450.

In some embodiments, the flexible portion 1050 can be more flexible than a standard SMF 28 fiber. In some embodiments, the flexible portion 1050 can bend at least 45 degrees, 50 degrees, 55 degrees, 60 degrees, 65 degrees, 70 degrees, 75 degrees, 80 degrees, 90 degrees, 100 degrees, 110 degrees, 120 degrees, or at least any value therebetween. In some embodiments, the flexible portion 1050 can bend in a range formed by any of these values, e.g., from 45 to 55 degrees, from 50 to 60 degrees, from 60 to 70 degrees, from 70 to 80 degrees, from 80 to 90 degrees, from 90 to 100 degrees, from 100 to 110 degrees, from 110 to 120 degrees, or any combinations of these ranges, or any ranges formed by any values within these ranges (e.g., from 50 to 65 degrees, from 50 to 85 degrees, from 65 to 90 degrees, etc.) In other embodiments, the flexible portion 1050 can bend more or less than these values. As described herein, in various applications, the flexible portion 1050 might not bend in use, however the flexibility can be desired for decoupling the first 1010 or second 1020 end from other parts of the coupler array 10450.

The coupler array 10450 can include a coupler housing structure 1060. For example, the coupler housing structure 1060 can include a common single coupler housing structure. In certain embodiments, the coupler housing structure 1060 can include a medium 1140 (e.g., having a refractive index N-4) surrounding the waveguides 1100. In some instances, N-4 is greater than N-3. In other examples, N-4 is equal to N-3. The medium 1140 can include any medium as described herein (e.g., pure-silica). The medium can also include glass such that the coupler array 10450 can be an all-glass coupler array. The waveguides 1100 can be embedded within the medium 1040 of the housing structure 1060. In some examples, a total volume of the medium 1140 of the coupler housing structure 1060 can be greater than a total volume of all the inner and outer cores 1110, 1120, 1122 of the VC waveguides confined within the coupler housing structure 1060.

In some embodiments, each waveguide can couple to the optical fibers 2000 and/or optical device 3000 at a location inside, outside, or at a boundary region of the coupler housing structure 1060, e.g., as shown in FIGS. 10A to 11D. Because the optical fibers 2000 and optical device 3000 can be different at each end, the first end 1010 and the second end 1020 can each be configured for the optical fibers 2000 or optical device 3000 with which it is coupled. For example, the MFD of the VC waveguide at the first 1010 and/or second 1020 ends can be configured (e.g., using the sizes of the cores) to match or substantially match the MFD of the optical fiber 2000 or optical device 3000 with which it is coupled. In addition, the NA of the VC waveguide at the first 1010 and/or second 1020 ends can be configured (e.g., using the refractive indices) to match or substantially match the NA of the optical fiber 2000 or optical device 3000 with which it is coupled. The refractive indices can be modified in any way known in the art (e.g., doping the waveguide glass) or yet to be developed. In various embodiments, as described herein, the difference (N-1 minus N-2) can be greater than the difference (N-2 minus N-2A) such that the NA at the first end 1010 is greater than the NA at the second end 1020. In other embodiments, the difference (N-1 minus N-2) can be less than the difference (N-2 minus N-2A) such that the NA at the first end 1010 is less than the NA at the second end 1020. In yet other embodiments, the difference (N-1 minus N-2) can be equal to (N-2 minus N-2A) such that the NA at the first end 1010 is equal to the NA at the second end 1020. The VC waveguide can include any of the fiber types described herein including but not limited to a single mode fiber, a multi-mode fiber, and/or a polarization maintaining fiber.

The core and cladding (1110, 1120, 1122, 1130) sizes (e.g., outer cross-sectional diameters if circular or outer cross-sectional dimensions if not circular) are not particularly limited. In some embodiments, the inner 1110 and/or outer 1120 core sizes can be in a range from 1 to 3 microns, from 2 to 5 microns, from 4 to 8 microns, from 5 to 10 microns, any combination of these ranges, or any range formed from any values from 1 to 10 microns (e.g., 2 to 8 microns, 3 to 9 microns, etc.). However, the sizes can be greater or less. For example, the inner 1110 and/or outer 1120 core sizes can range from submicrons to many microns, to tens of microns, to hundreds of microns depending, for example, on the wavelength and/or number of modes desired.

In addition, the difference in the refractive indices (e.g., between N-1 and N-2, between N-2 and N-2A, and/or between N-2A and N-3) is not particularly limited. In some examples, the index difference can be in a range from $1.5 \times 10^{-3}$ to $2.5 \times 10^{-3}$, from $1.7 \times 10^{-3}$ to $2.3 \times 10^{-3}$, from $1.8 \times 10^{-3}$ to $2.2 \times 10^{-3}$, from $1.9 \times 10^{-3}$ to $2.1 \times 10^{-3}$, from $1.5 \times 10^{-3}$ to $1.7 \times 10^{-3}$, from $1.7 \times 10^{-3}$ to $1.9 \times 10^{-3}$, from $1.9 \times 10^{-3}$ to $2.1 \times 10^{-3}$, from $2.1 \times 10^{-3}$ to $2.3 \times 10^{-3}$, from $2.3 \times 10^{-3}$ to $2.5 \times 10^{-3}$, any combination of these ranges, or any range formed from any values from $1.5 \times 10^{-3}$ to $2.5 \times 10^{-3}$. In other examples, the index difference can be greater or less.

As described herein, the optical device 3000 can include a PIC. The PIC can include an array of VGCs. Also, as described in U.S. Patent Application Publication 2012/0257857, entitled "HIGH DENSITY OPTICAL PACKAGING HEADER APPARATUS", multiple flexible PROFA couplers (such as the coupler 10450), each having multiple optical channels, can be combined together to advantageously form an optical multi-port input/output (IO) interface. As such, an optical multi-port IO interface can include a plurality of optical coupler arrays, at least one of the optical coupler arrays can include an optical coupler array 10450 as described herein.

With reference now to FIG. 17 and FIG. 18, example cross sectional views of the housing structure not being part of the claimed invention at a proximity to a first end of a multichannel optical coupler array are shown. The cross-sectional view is orthogonal to the longitudinal direction or length of the optical coupler array. Some such configurations may have improved cross sectional or transverse (or lateral) positioning of waveguides at the first end allowing for self-aligning waveguide arrangement at a close proximity to a first end (e.g., hexagonal close packed arrangement in a housing structure having circular (as shown in FIG. 17) or hexagonal inner cross section) and improved (precise or near precise in some cases) cross sectional positioning of the waveguides at a second end. Such configurations may also provide alignment during manufacturing such that the cross sectional positioning of the waveguides at a second end may be more precisely disposed as desired.

Although various features of the example optical coupler arrays may be described with respect to FIG. 17 and 18, any feature described above (for example, in connection with any of the figures or embodiments describe above) can be implemented in any combination with a multichannel optical coupler array. For example, any of the features described with respect to FIGs. 10A-14 and 16 may be utilized in a multichannel optical coupler array and may be combined with any feature described with respect to FIGs. 17 and 18.

For example, referring to the example embodiments shown in Figures 10A-11D, there are two ends of the coupler array: a first (larger) end, and a second (smaller) end. The two ends are spaced apart in the longitudinal direction (along the z direction). For example, in FIG. 10A, the first end is proximate to position B and the second end is proximate to positions C and D.

In certain embodiments, one of the functions of the first end (proximate to position B) is to encapsulate the waveguides 10030A, 10032A-1, 10032A-2 with increased or approximate positioning accuracy. For example, the coupler housing structure 10014A at a proximity to the first end (proximate to position B) may encapsulate, e.g., circumferentially surround a portion of the length of the waveguides 10030A, 10032A-1, 10032A-2, but not necessarily completely enclose the ends of the waveguides 10030A, 10032A-1, 10032A-2. In some such instances, the waveguides 10030A, 10032A-1, 10032A-2 may or may not extend (e.g., longitudinally) outside the coupler housing structure 10014A. In FIG. 10A, proximate the first end, the end of waveguide 10030A is disposed within the coupler housing structure 10014A, but the ends of waveguides 10032A-1 and 10032A-2 extend, e.g., longitudinally (in a direction parallel to the z-direction) outside of the coupler housing structure 10014A. In FIG. 11B, proximate the first end, the ends of waveguides 10130B-1, 10130B-2 are disposed at an outer cross sectional boundary region of the coupler housing structure 10014A and do not extend, e.g., longitudinally (in a direction parallel to the z-direction) outside of the coupler housing structure 10014A.

In various embodiments, one of the functions of the second end (proximate to positions C and D) is to have the waveguides 10030A, 10032A-1, 10032A-2 embedded in a housing structure (e.g., a common housing structure in some instances) with improved (precise or near precise in some cases) cross sectional positioning. For example, the waveguides 10030A, 10032A-1, 10032A-2 at a proximity to the second end (proximate to positions C and D) may be embedded, e.g., be circumferentially surrounded by the contiguous coupler housing structure 10014A. In FIG. 10A, proximate the second end, the ends of waveguides 10030A, 10032A-1, 10032A-2 are longitudinally disposed at an outer cross sectional boundary region of the coupler housing structure 10014A. In some embodiments, proximate the second end, one or more ends of the waveguides may be disposed within or may longitudinally extend outside the coupler housing structure 10014A.

To achieve improved positioning, some embodiments can include the example cross sectional configuration of the housing structure shown in FIG. 17 at a proximity to the first end. The cross section is orthogonal to the longitudinal direction or length of the optical coupler array. As shown in FIG. 17, the coupler array 800 can include a housing structure 801 having a transverse (or lateral) configuration of a ring surrounding the plurality of longitudinal waveguides 805 at a close longitudinal proximity to the first end. A gap, such as an air gap, may separate the plurality of longitudinal waveguides 805 from the surrounding ring. Some such configurations may allow for self-aligning waveguide arrangement at a close proximity to a first end (e.g., hexagonal close packed arrangement in a housing structure having circular (as shown in FIG. 17) or hexagonal inner cross section)

In an example configuration shown in FIG. 17, the waveguides 805 are in a hexagonal arrangement. Other arrangements are possible, e.g., square, rectangular, etc.

The ring may have an inner cross section 801a (in the transverse direction, i.e., orthogonal to the longitudinal direction or length of the optical coupler array) that is circular or non-circular. For example, the inner cross section 801a may be circular, elliptical, D-shaped, square, rectangular, hexagonal, pentagonal, octagonal, other polygonal shape, etc. The inner cross section 801a does not necessarily follow the arrangement of the waveguides 805. For example, four waveguides arranged in a square arrangement can be confined in an inner circular cross section. As another example, as shown in FIG. 17, the inner cross section 801a is circular, while the waveguides 805 are hexagonally arranged. In some embodiments, a circular inner cross section, as shown in FIG. 17, may be a preferred shape, which can allow for a close-pack hexagonal arrangement. Also, other inner cross sectional shapes may also be used, such as square or rectangular, which can allow for non-hexagonal waveguide arrangements. In some instances, the inner cross section 801a may be similar as the arrangement of the waveguides 805 to reduce empty space. For example, for waveguides 805 in a hexagonal arrangement, the inner cross section 801a of the ring may be hexagonal to reduce empty space between the inner cross section 801a and the waveguides 805.

The outer cross section 801b (in the transverse direction, e.g., orthogonal to the longitudinal direction or length of the optical coupler array) may be circular or non-circular. For example, the outer cross section 801b may be circular, elliptical, hexagonal, D-shaped (e.g., to provide for passive axial alignment of the coupler since the flat surface allow for an easy rotational alignment), square, rectangular, pentagonal, octagonal, other polygonal shape, etc. In FIG. 17, the outer cross section 801b (e.g., circular) follows the shape of the inner cross section 801a (e.g., circular). However, in some embodiments, the outer cross section 801b need not be similar as the inner cross section 801a. One of the functions of the inner cross sectional shape is to allow for an improvement in the transverse positional accuracy at the proximity to the second end, while one of the functions of the outer cross sectional shape is to allow for a passive axial alignment of the coupler (e.g., the alignment can be done without launching light into the coupler). In some configurations it may be preferred to substantially preserve the outer cross sectional shape from the first end to the second end to facilitate the passive alignment at one of the ends or at both ends of the coupler array.

FIG. 18 shows another example cross sectional configuration of the housing structure at a proximity to the first end. As shown in FIG. 18, the coupler array 850 can include a housing structure 851 having a configuration of a structure (e.g., a contiguous structure in some cases) with a plurality of holes 852. At least one of the holes 852 may contain at least one of the longitudinal waveguides 855. A gap, such as an air gap, may separate the plurality of longitudinal waveguides 855 from the surrounding housing structure 851. Similarly to the description related to the example shown in FIG. 17, the outer cross section may be circular, elliptical, hexagonal, D-shaped, square, rectangular, pentagonal, octagonal, other polygonal shape, etc. Some of such configurations may allow for passive alignment at one of the ends or at both ends of the coupler array. While the example configuration shown in FIG. 17 may allow for simpler fabrication in some cases, the example configuration shown in FIG. 18 may allow for arbitrary transverse waveguide positioning.

FIG. 18 shows an example configuration with six holes 852, yet other number of holes is possible. The holes 852 in this example configuration may be isolated or some or even all holes 852 may be connected. For example, as shown in FIG. 18, a first hole 852-1 is isolated from a second hole 852-2. However, in some configurations, the first hole 852-1 may be connected to at least one second hole 852-2. The arrangement of the holes 852 is shown as a $3 \times 2$ array, yet other arrangements are possible. For example, the hole arrangement pattern may be hexagonal, square, rectangular, or defined by an XY array defining positions of the holes in the transverse plane.

Figure 18 shows all the holes 852 with a waveguide 855 illustrated as a vanishing core (VC) waveguide. However, while at least one of the waveguide in this example is a VC waveguide, one or more of the holes 852 may include a non-vanishing core (Non-VC) waveguide. The VC or Non-VC waveguide 855 can include any of the waveguides described herein, e.g., single mode fiber, multi-mode fiber, polarization maintaining fiber, etc. In some embodiments, one or more of the holes 852 may be empty, or populated with the other (e.g., non-waveguide) material, e.g., to serve as fiducial marks. One or more of the holes 852 may be populated with a single waveguide 855 (in some preferred configurations) as shown in FIG. 18 or with multiple waveguides 855. Depending on the design, one or more of the holes 852 may be identical or different than another hole 852 to accommodate, for example, waveguides 855 of different shapes and dimensions (e.g., cross sectional shapes, diameters, major/minor elliptical dimensions, etc.). The cross sections of the holes 852 may be circular or non-circular. For example, the cross section may be circular, elliptical, hexagonal or D-shaped (e.g., to provide for passive axial alignment of polarization maintaining (PM) channels), square, rectangular, pentagonal, octagonal, other polygonal shape, etc. As illustrated, in many cases, the cross section of the hole 852 at close proximity to the first end is larger than the cross section of the waveguides 855 such that a gap is disposed between an inner surface 851a of the coupler housing structure 851 and the waveguide 855.

The coupler housing structure (e.g., 801 in FIG. 17 or 851 in FIG. 18) can include a medium from a wide range of materials as described herein. As also described herein, the medium of the coupler housing structure 801, 851 can have refractive index (N-4). The medium can be a transversely contiguous medium. This can allow for a robust housing structure with improved transverse positioning accuracy in some embodiments. In some embodiments, the total volume of the medium of the coupler housing structure 801, 851 can be greater than a total volume of all the inner and outer cores of the VC waveguides confined within the coupler housing structure 801, 851 to provide that in some embodiments, all VC waveguides are reliably embedded in the housing structure allowing for stable performance).

In certain embodiments, the example configurations shown in FIG. 17 and FIG. 18 may allow for improved manufacturability of the devices with improved cross sectional (transverse) positioning of the waveguides e.g., at the second end. This transverse position, may for example, be defined in the x and/or y directions, while z is the direction along the length coupler array (e.g., from the first end to the second end). In various fabrication approaches, the assembly, comprising the waveguides (e.g., 805 in FIG. 17 and 855 in FIG. 18) and coupler housing structure (e.g., 801 in FIG. 17 or 851 in FIG. 18), may be heated and drawn to form a second end as shown in the lateral cross sectional views shown in Figs.12A-12L. Referring to FIG. 17, the waveguides 805 can be inserted into the coupler housing structure 801 having a configuration of a ring (in the cross section orthogonal to the longitudinal direction or length of the optical coupler array, e.g., in the x-y plane shown). As described above, a gap such as an air gap can be disposed between the coupler housing structure 801 and the waveguide 805 to permit lateral movement (in x and/or y directions) of the waveguide with respect to the coupler housing structure 801. Referring to FIG. 18, one or more waveguides 855 can be inserted into the coupler housing structure 851 having a plurality of holes 852 (e.g., as seen in the cross section orthogonal to the longitudinal direction or length of the optical coupler array, e.g., in the x-y plane shown) where the waveguides 855 can be passively aligned within the housing structure 851. A gap such as an air gap can be disposed between the coupler housing structure 851 and the waveguide 855 to permit transverse movement (in x and/or y directions) of the waveguide with respect to the coupler housing structure 851. In the case of close packed waveguide arrangement (e.g., hexagonal), this ability to move can result in more precise cross sectional positioning at the second end after manufacturing.

Referring to FIG. 10A, the coupler array can include a plurality of longitudinal waveguides 10030A, 10032A-1, 10032A-2 with at least one VC waveguide 10030A having an inner core 10020A and an outer core 10022A. The inner core 10020A, the outer core 10022A, and the spacing between the plurality of waveguides 10030A, 10032A-1, 10032A-2 can reduce (e.g., simultaneously and gradually in some cases) from the first end (proximate to position B) to the second end (proximate to positions C and D), e.g., from S-1 to S-2. In various embodiments, the cross sectional configuration at the first end (proximate position B) is shown as in FIG. 17 or FIG. 18, while the cross sectional configuration at the second end (proximate positions C and D) can be shown in FIGs. 12A-12L or FIG. 16. In some embodiments, proximate to the second end, there is substantially no gap between the coupler housing structure and the waveguides, some gaps being filled by housing material and some gaps being filled by waveguide cladding material. As a result of the described cross sectional configuration at the first end, the cross sectional or transverse positioning of the waveguides at the second end can be improved. The waveguides at the second end can thus be properly aligned in the transverse direction (e.g., x and/or y direction) with an optical device.

With reference now to FIG. 19 and FIG. 20, further example embodiments of optical coupler arrays 4000, 5000 are shown. The coupler arrays 4000, 5000 can be configured to couple to and from a plurality of optical fibers, such as to and from optical fibers with different mode fields and/or core sizes. In some instances, the coupler arrays 4000, 5000 can be configured to provide coupling between a set of individual isolated optical fibers 2000 and an optical device 3000 having at least one optical channel allowing for propagation of more than one optical mode. In some preferred embodiments, all isolated optical fibers 2000 can be identical (or some different in some instances) and the optical device 3000 can include at least one few-mode fiber, multimode fiber, multicore single mode fiber, multicore few-mode fiber, and/or multicore multimode fiber. Compared to certain embodiments described herein with respect to FIGs. 10A-14, various embodiments 4000, 5000 include a further reduction of the taper diameter, which can allow light to escape the outer core 4120, 5120 and propagate in a combined waveguide 4150, 5150, formed by at least two neighboring cores. Accordingly, various embodiments described herein can be configured to optically couple between fibers with dissimilar mode fields and/or core shapes or sizes. Advantageously, some embodiments of the coupler arrays can improve and/or optimize optical coupling between one or more of single mode fibers, few-mode fibers, multimode fibers, multicore single mode fibers, multicore few-mode fibers, and/or multicore multimode fibers.

Although various features of the example coupler arrays will now be described with respect to FIGs. 19 and 20, any described feature can be implemented in any combination with the coupler arrays described with respect to FIGs. 10A-14 and 16. Further, any feature described with respect to FIGs. 10A-14 and 16 may be combined with any feature described with respect to FIGs. 19 and 20. For instance, the example coupler arrays 4000, 5000 are illustrated utilizing housing structures 4060, 5060 similar to the housing structures 801, 851 shown in FIGs. 17-18. In these examples, the cross sectional configuration of the housing structure 4060, 5060 may include a structure with a plurality of holes (e.g., multi-hole) as shown in FIG. 19, or may include one hole (e.g., single-hole surrounded by a ring), as shown in FIG. 20. However, other housing structures can also be used. For example, the housing structures described with respect to FIGs. 10A-14 and 16 may be used.

Referring to FIG. 19, certain embodiments of a multichannel optical coupler array 4000 can include an elongated optical element 4001 having a first end 4010, an intermediate location or cross section 4050, and a second end 4020. The optical element 4001 can include a coupler housing structure 4060 and a plurality of longitudinal waveguides 4100 disposed in the housing structure 4060. The waveguides 4100 can be arranged with respect to one another in a cross-sectional geometric waveguide arrangement. In FIG. 19, the example cross-sectional geometric waveguide arrangements of the waveguides 4100 for the first end 4010, the intermediate cross section 4050, and the second end 4020 are shown. As illustrated by the shaded regions within the cross sections and as will be described herein, light can be guided through the optical element 4001 from the first end 4010, through the intermediate cross section 4050, and to the second end 4020.

As shown in FIG. 19, proximally (e.g. proximately) to the first end 4010, the housing structure 4060 (e.g., a common single coupler housing structure in some cases) can have a cross sectional configuration of a structure (e.g., transversely contiguous structure in some cases) with a plurality of holes 4062. FIG. 19 shows an example configuration with three circular holes 4062-1, 4062-2, 4062-3. However, the shape of the holes, number of holes, and/or arrangement of the holes are not particularly limited and can include any other shape, number, and/or arrangement including those described with respect to FIG. 18. At least one of the holes 4062 may contain at least one of the longitudinal waveguides 4100. A gap, such as an air gap, may separate the plurality of longitudinal waveguides 4100 from the surrounding housing structure 4060 proximally to the first end 4010. In some embodiments, there may be substantially no gap between the coupler housing structure 4060 and the waveguides 4100 at the intermediate location 4050 and/or at the second end 4020. For example, one or more gaps may be filled by housing material and/or waveguide cladding material. As described herein, in some embodiments, proximate to the first end 4010, there may be a gap between the coupler housing structure 4060 and the waveguides 4100, but proximate to the second end 4020, there may be substantially no gap between the coupler housing structure 4060 and the waveguides 4100 (or vice versa). In some embodiments, there may be substantially no gap between the coupler housing structure 4060 and the waveguides 4100 proximate the first end 4010, the intermediate location 4050, and/or at the second end 4020.

As described herein, the coupler array 4000 can be operable to optically couple with a plurality of optical fibers 2000 and/or with an optical device 3000. The coupler array 4000 can couple with the optical fibers 2000 via the plurality of waveguides 4100 proximate the first end 4010 (e.g., via a fusion splice 2001), and/or with the optical device 3000 via the plurality of waveguides 4100 proximate the second end 4020 (e.g., via a fusion splice not shown). In FIG. 19, three waveguides 4100 are shown in each of the three holes 4062-1, 4062-2, 4062-3. However, any number of waveguides 4100 for each of the holes 4062 can be used. In some embodiments, the number of waveguides 4100 may equal the number of optical fibers 2000 (e.g., 9 waveguides to couple with 9 optical fibers). In some other embodiments, the number of waveguides 4100 in at least one hole may equal the number of optical modes supported by a corresponding few-mode or multi-mode waveguide of the device 3000 (e.g. 3 waveguides in each of 3 holes to couple with three 3-mode cores of a multicore fiber). In various embodiments, the waveguides 4100 can be positioned within each hole 4062 at a spacing (e.g., predetermined in some instances) from one another. In some preferred embodiments of the multi-hole configuration, the individual holes 4062-1, 4062-2, 4062-3 may contain all the waveguides (e.g., fibers) intended to couple to at least one particular core of a few-mode, multimode and/or multicore fiber of an optical device. In some other embodiments, one or more additional fibers and/or dummy fibers (e.g., which might not guide light) may be utilized to create a particular geometrical arrangement of the active, light-guiding fiber waveguides.

According to the claimed invention, the plurality of waveguides 4100 have a capacity for at least one optical mode (e.g., a predetermined mode field profile in some cases). The plurality of waveguides 4100 include at least two vanishing core (VC) waveguides 4101. FIG. 19 illustrates all of the waveguides 4100 as VC waveguides. However, one or more Non-VC waveguides may also be used. As described herein, the VC waveguide 4101 includes an inner vanishing core 4110, an outer core 4120, and an outer cladding 4130 with refractive indices N-1, N-2, and N-3 respectively. The outer core 4120 longitudinally surrounds the inner core 4110, and the outer cladding 4130 longitudinally surrounds the outer core 4120. As described herein, the relative magnitude relationship between the refractive indices of the inner core 4110, outer core 4120, and the outer cladding 4130 is N-1 > N-2 > N-3.

The housing structure 4060 surrounds the waveguides 4100. The coupler housing structure 4060 includes a medium 4140 having an index of refraction N-4. The medium 4140 can include any of those described herein. A total volume of the medium 4140 of the coupler housing structure 4060 is greater than a total volume of all the inner and outer cores 4110, 4120 of the VC waveguides confined within the coupler housing structure 4060. The waveguides 4100 are embedded in the housing structure 4060 (e.g., proximate the second end 4020).

In certain embodiments, the inner core 4110 waveguide dimensions, the outer core 4120 waveguide dimensions, refractive indices, and/or numerical apertures (NAs) are selected to increase and/or optimize coupling to the individual fibers 2000. In various embodiments, the outer core 4120 waveguide dimensions, refractive indices, NAs, and/or the cladding 4130 dimensions are selected to increase and/or optimize coupling to the optical device 3000. Various embodiments described herein can also include reflection reduction features of the pitch-reducing optical fiber array described in U.S. Application Number 14/677,810, entitled "OPTIMIZED CONFIGURABLE PITCH REDUCING OPTICAL FIBER COUPLER ARRAY". For polarization control, some of the outer cores 4120 can be made with a non-circular cross section (e.g., elliptical as shown in FIG. 19) and a particular orientation of the outer cores 4120 can be used to increase and/or optimize optical coupling. Various embodiments described herein can also include features of any of the optical polarization mode couplers described in U.S. Application Number 15/617,684, entitled "CONFIGURABLE POLARIZATION MODE COUPLER".

According to the claimed invention, the inner core 4110 size, the outer core 4120 size, the cladding 4130 size, and/or the spacing between the waveguides 4100 reduce simultaneously and gradually along the optical element 4001 from the first end 4010 to an intermediate location or cross section 4050. In some embodiments, a predetermined reduction profile may be used. According to the claimed invention, as shown in FIG. 19, at the intermediate location 4050, the inner core 4110 is insufficient to guide light therethrough and the outer core 4120 is sufficient to guide at least one optical mode (e.g., spatial mode).

Each core of a waveguide 4100 has a capacity for at least one optical mode (e.g., single mode, few-mode, or multi-mode). For example, at the first end 4010, the VC waveguide 4101 can support a number of spatial modes (M1) within the inner core 4110. At the intermediate location 4050, the inner core 4110 is no longer be able to support all the M1 modes and cannot support light propagation. However, at the intermediate location 4050, the outer core 4120 supports all the M1 modes (and in some cases, able to support additional modes). Light traveling within the inner core 4110 from the first end 4010 to the intermediate location 4050 escapes from the inner core 4110 into the outer core 4120 such that light propagates within the outer core 4120.

According to the claimed invention, the inner core 4110 size, the outer core 4120 size, the cladding 4130 size, and the spacing between the waveguides 4100 is further reduced simultaneously and gradually along the optical element 4001 from the intermediate location 4050 to the second end 4020. According to the claimed invention, as shown in FIG. 19, at the second end 4020, the outer core 4120 is insufficient to guide light therethrough.

At the intermediate location 4050, the VC waveguide 4101 supports all the M1 modes within the outer core 4120. At the second end 4020, the outer core 4120 is no longer able to support all the M1 modes and cannot support light propagation. However, at the second end 4020, a combined core 4150 of at least two cores supports all the M1 modes of all waveguides 4101 combined (and in some cases, able to support additional modes). Light traveling within the outer core 4120 from the intermediate location 4050 to the second end 4020 escapes from the outer core 4120 into a combined waveguide 4150 formed by at least two neighboring outer cores such that light propagates within the combined cores. In the example shown in FIG. 19, each of the combined waveguides 4150 is formed by three outer cores. However, the combined waveguides 4150 may be formed with at least two outer cores.

It would be appreciated that light travelling from the second end 4020 to the first end 4010 can behave in the reverse manner. For example, in some embodiments, light can move from the combined waveguide 4150 formed by at least two neighboring outer cores into the at least one outer core 4120 proximally to the intermediate cross section 4050, and can move from the outer core 4120 into corresponding inner core 4110 proximally to the first end 4010. In the example shown in FIG. 19, each of the combined waveguides 4150 can support three propagation modes. Travelling from the second end 4020 to the first end 4010, each propagation mode can be coupled to a corresponding outer core 4120 proximally to the intermediate cross section 4050 and move from the outer core 4120 into a corresponding inner core 4110 proximally to the first end 4010.

Referring now to FIG. 20, the example embodiment 5000 includes similar features as the example embodiment 4000 shown in FIG. 19. One difference is that the cross sectional configuration of the housing structure 5060 includes a structure with a single hole 5062 instead of a plurality of holes 4062. According to the claimed invention and similar to the example embodiment 4000 shown in FIG. 19, the optical element 5001 includes a coupler housing structure 5060 including a medium 5140 and a plurality of longitudinal waveguides 5100 disposed in the housing structure 5060. The waveguides 5100 can be arranged with respect to one another in a cross-sectional geometric waveguide arrangement within the hole 5062. As illustrated, light can be guided through the optical element 5001 from the first end 5010, through the intermediate cross section 5050, and to the second end 5020.

As described herein, a gap may separate the plurality of longitudinal waveguides 5100 from the surrounding housing structure 5060. In some embodiments, there may be substantially no gap between the coupler housing structure 5060 and the waveguides 5100 proximate the intermediate location 5050 and/or the second end 5020. For example, in FIG. 20, although a gap is shown proximate the second end 5020, in preferred embodiments, there may be substantially no gap between the coupler housing structure 5060 and the waveguides 5100. In some embodiments, there may be substantially no gap between the coupler housing structure 5060 and the waveguides 5100 proximate the first end 5010, the intermediate location 5050, and/or the second end 5020.

According to the claimed invention, the plurality of waveguides 5100 includes at least two VC waveguide 5101. FIG. 20 illustrates all thirty seven of the waveguides 5100 as VC waveguides 5101 in a hexagonal arrangement. However, any arrangement may be used. In addition, any number of VC waveguides, Non-VC waveguides, and/or dummy fibers may be used as long as the number of VC waveguides is at least two. As described herein, one or more dummy fibers may be utilized to create a particular geometrical arrangement of the active, light-guiding fiber waveguides. As described herein, the VC waveguides 5101 include an inner vanishing core 5110, an outer core 5120, and an outer cladding 5130.

In certain embodiments, the inner core 5110 waveguide dimensions, the outer core 5120 waveguide dimensions, the cladding 5130 dimensions, refractive indices, and/or the numerical apertures (NAs) can be selected to increase and/or optimize coupling to the individual fibers 2000 and/or optical device 3000. According to the claimed invention, the inner core 5110 size, the outer core 5120 size, the cladding 5130 size, and/or the spacing between the waveguides 5100 reduce along the optical element 5001 from the first end 5010 to the second end 5020. According to the claimed invention and as shown in FIG. 20, at the intermediate location 5050, the inner core 5110 of certain waveguides 5100 is insufficient to guide light therethrough and the outer core 5120 of certain waveguides 5100 is sufficient to guide at least one optical mode (e.g., spatial mode). Proximate the second end 5020, the outer core 5120 is insufficient to guide light therethrough. Accordingly, light traveling within the outer core 5120 from the intermediate location 5050 to the second end 5020 escapes from the outer core 5120 into a combined waveguide 5150 formed by at least two neighboring outer cores such that light propagates within the combined cores. In the example shown in FIG. 20, although each of the combined waveguides 5150 is formed by three outer cores, the combined waveguides 5150 may be formed by another number of outer cores. The remaining cores (e.g., cores of waveguides or dummy fibers) may or may not guide light. Light travelling from the second end 5020 to the first end 5010 can behave in the reverse manner.

## Claims

1. An optical coupler array for optical coupling of a plurality of optical fibers to an optical device, comprising:

an elongated optical element having a first end operable to optically couple with said plurality of optical fibers, an intermediate cross section, and a second end operable to optically couple with said optical device, and comprising:
a common single coupler housing structure; a plurality of longitudinal waveguides each positioned at a predetermined spacing from one another, each having a capacity for at least one optical mode of a predetermined mode field profile, each embedded in said common single housing structure proximally to said second end, wherein at least two of said plurality of longitudinal waveguides are vanishing core waveguides, each one of said at least two vanishing core waveguides comprising:
an inner vanishing core, having a first refractive index, N-1, and having a first inner core size, ICS-1, at said first end, an intermediate inner core size, ICS-IN, at said intermediate cross section, and a second inner core size, ICS-2, at said second end; an outer core, longitudinally surrounding said inner vanishing core, having a second refractive index, N-2, and having a first outer core size, OCS-1, at said first end, an intermediate outer core size, OCS-IN, at said intermediate cross section, and a second outer core size, OCS-2, at said second end, and an outer cladding, longitudinally surrounding said outer core, having a third refractive index, N-3, a first cladding size at said first end, and a second cladding size at said second end; and wherein said common single coupler housing structure comprises a transversely contiguous medium having a fourth refractive index, N-4, surrounding said plurality of longitudinal waveguides, wherein a predetermined relative magnitude relationship between said first, second, and third refractive indices, N-1, N-2 and N-3, respectively, comprises the following magnitude relationship: N-1 > N- 2 > N-3, wherein a total volume of said medium of said common single coupler housing structure is greater than a total volume of all said inner vanishing cores and said outer cores of the vanishing core waveguides confined within said common single coupler housing structure, and wherein said first inner core size, ICS-1, said first outer core size, OCS-1, and said predetermined spacing between said plurality of longitudinal waveguides, are simultaneously and gradually reduced, in accordance with a predetermined reduction profile, between said first end and said second end along said optical element, until said second inner core size, ICS-2, and said second outer core size, OCS-2, are reached, wherein said intermediate inner core size, ICS-IN, is selected to be insufficient to guide light therethrough, and said intermediate outer core size, OCS-IN, is selected to be sufficient to guide at least one optical mode, **characterized in that** said second outer core size, OCS-2, is selected to be insufficient to guide light therethrough such that:
light traveling from said first end to said second end escapes from said inner vanishing core into said corresponding outer core proximally to said intermediate cross section, and escapes from said outer core into a combined waveguide formed by at least two neighboring outer cores of the at least two vanishing core waveguides proximally to said second end, and
at least one waveguide mode of light traveling from said second end to said first end moves from the combined waveguide formed by the at least two neighboring outer cores into said outer core proximally to said intermediate cross section, and moves from said outer core into said corresponding inner vanishing core proximally to said first end.

2. The optical coupler array of claim 1, wherein said common single coupler housing structure proximally to said first end has a cross sectional configuration comprising a transversely contiguous structure with at least one hole, wherein the at least one hole contains at least one of said plurality of longitudinal waveguides creating a gap between the coupler housing structure and the at least one of said plurality of longitudinal waveguides.

3. The optical coupler array of claim 1 or 2, wherein the at least one waveguide mode comprises at least one spatial mode.

4. The optical coupler array of claim 1 or 2, wherein the at least two vanishing core waveguides comprise at least two polarization maintaining vanishing core waveguides, and wherein the at least one waveguide mode comprises a first polarization mode and a second polarization mode.

5. The optical coupler array of claim 1 or 2,

wherein said at least two vanishing core waveguides are polarization maintaining vanishing core waveguides comprising a non-circular outer core, each operable to guide at least one optical polarization mode, and wherein for said at least two polarization maintaining vanishing core waveguides, the following parameters:

cross sectional shape of the first non-circular outer core, and
cross sectional shape of the second non-circular outer core,

are selected to provide polarization maintaining properties to said at least two polarization maintaining vanishing core waveguides, and wherein said second outer core sizes, OCS-2, of said polarization maintaining vanishing core waveguides and said predetermined spacing between waveguides at said second end, are selected to be sufficient to guide at least two optical polarization modes, first and second polarization modes, in said combined waveguide formed by said two outer cores, such that:
at least one of said polarization modes of light traveling from said first end to said second end escapes from said inner vanishing core into said corresponding outer core and then is coupled into said combined waveguide formed by said two outer cores proximally to said second end, and
said first polarization mode of light traveling from said second end to said first end moves from said combined waveguide formed by said two outer cores into a first outer core and then into said corresponding inner vanishing core proximally to said first end, and
said second polarization mode of light traveling from said second end to said first end moves from said combined waveguide formed by said two outer cores into a second outer core and then into said corresponding inner vanishing core proximally to said first end.

**Patentansprüche**

1. Optische Koppleranordnung zur optischen Kopplung einer Vielzahl von Lichtwellenleitern an eine optische Vorrichtung, umfassend:

ein längliches optisches Element mit einem ersten Ende, das für die optische Kopplung mit der Vielzahl von Lichtwellenleitern bereitsteht, einem mittleren Querschnitt, und einem zweiten Ende, das für die optische Kopplung mit der optischen Vorrichtung bereitsteht, und umfassend:

eine gemeinsame einzelne Koppler-Gehäusestruktur; eine Vielzahl von longitudinalen Wellenleitern, die jeweils in einem vorbestimmten Abstand voneinander angeordnet sind, wobei jeder eine Kapazität für mindestens einen optischen Modus eines vorbestimmten Modus-Feldprofils aufweist, wobei jeder in die gemeinsame einzelne Gehäusestruktur nahe dem zweiten Ende eingebettet ist, wobei mindestens zwei der Vielzahl von longitudinalen Wellenleitern Wellenleiter mit schwindendem Kern sind, wobei jeder der mindestens zwei Wellenleiter mit schwindendem Kern umfasst:

einen inneren schwindenden Kern, der einen ersten Brechungsindex N-1 und eine erste innere Kerngröße ICS-1 an dem ersten Ende, eine mittlere innere Kerngröße ICS-IN an dem mittleren Querschnitt und eine zweite innere Kerngröße ICS-2 an dem zweiten Ende aufweist; einen äußeren Kern, der den inneren schwindenden Kern in Längsrichtung umschließt, der einen zweiten Brechungsindex N-2 aufweist, und eine erste äußere Kerngröße, OCS-1, an dem ersten Ende, eine mittlere äußere Kerngröße, OCS-IN, an dem mittleren Querschnitt und eine zweite äußere Kerngröße, OCS-2, an dem zweiten Ende aufweist, und eine äußere Ummantelung, die den äußeren Kern in Längsrichtung umgibt, mit einem dritten Brechungsindex, N-3, einer ersten Ummantelungsgröße an dem ersten Ende und einer zweiten Ummantelungsgröße an dem zweiten Ende; und wobei die gemeinsame einzelne Koppler-Gehäusestruktur ein quer verlaufend angrenzendes Medium mit einem vierten Brechungsindex N-4 umfasst, das die Vielzahl von longitudinalen Wellenleitern umgibt, wobei eine vorbestimmte relative Größenbeziehung zwischen dem ersten, zweiten und dritten Brechungsindex N-1, N-2 bzw. N-3 die folgende Größenbeziehung umfasst: N-1 > N- 2 > N-3, wobei ein Gesamtvolumen des Mediums der gemeinsamen einzelnen Koppler-Gehäusestruktur größer ist als ein Gesamtvolumen aller inneren schwindenden Kerne und der äußeren Kerne der Wellenleiter mit schwindendem Kern, die in der gemeinsamen einzelnen Koppler-Gehäusestruktur eingeschlossen sind, und wobei die erste innere Kerngröße, ICS-1, die erste äußere Kerngröße, OCS-1, und der vorbestimmte Abstand zwischen der Vielzahl von longitudinalen Wellenleitern simultan und fortschreitend entsprechend eines vorbestimmten Reduktionsprofils zwischen dem ersten Ende und dem zweiten Ende entlang des optischen Elements verringert sind, bis die zweite innere Kerngröße , ICS-2, und die zweite äußere Kerngröße, OCS-2, erreicht sind, wobei die mittlere innere Kerngröße, ICS-IN, so gewählt ist, dass sie nicht ausreicht, um Licht durch sie hindurch zu leiten, und die mittlere äußere Kerngröße, OCS-IN, so gewählt ist, dass sie ausreicht, um mindestens einen optischen Modus zu leiten, **dadurch gekennzeichnet, dass** die zweite äußere Kerngröße, OCS-2, so gewählt ist, dass sie nicht ausreicht, um Licht durch sie hindurch zu leiten, so dass:

Licht, das von dem ersten Ende zu dem zweiten Ende wandert, nahe dem mittleren Querschnitt aus dem inneren schwindenden Kern in den entsprechenden äußeren Kern austritt, und aus dem äußeren Kern in einen kombinierten Wellenleiter austritt, der von mindestens zwei benachbarten äußeren Kernen der mindestens zwei Wellenleiter mit schwindendem Kern in der Nähe des zweiten Endes gebildet wird, und mindestens ein Wellenleitermodus des Lichts, das von dem zweiten Ende zu dem ersten Ende wandert, von dem kombinierten Wellenleiter, der durch die mindestens zwei benachbarten äußeren Kerne gebildet wird, nahe dem mittleren Querschnitt in den äußeren Kern übertritt und nahe dem ersten Ende von dem äußeren Kern in den entsprechenden inneren schwindenden Kern übertritt.

2. Optische Koppleranordnung nach Anspruch 1, wobei die gemeinsame einzelne Koppler-Gehäusestruktur nahe dem ersten Ende eine Querschnittskonfiguration aufweist, die eine quer verlaufend angrenzende Struktur mit mindestens einem Loch umfasst, wobei das mindestens eine Loch mindestens einen der mehreren longitudinalen Wellenleiter enthält, wodurch ein Spalt zwischen der Koppler-Gehäusestruktur und dem mindestens einen der mehreren longitudinalen Wellenleiter entsteht.

3. Optische Koppleranordnung nach Anspruch 1 oder 2, wobei der mindestens eine Wellenleitermodus mindestens einen räumlichen Modus umfasst.

4. Optische Koppleranordnung nach Anspruch 1 oder 2, wobei die mindestens zwei Wellenleiter mit schwindendem Kern mindestens zwei polarisationserhaltende Wellenleiter mit schwindendem Kern umfassen, und wobei der mindestens eine Wellenleitermodus einen ersten Polarisationsmodus und einen zweiten Polarisationsmodus umfasst.

5. Optische Koppleranordnung nach Anspruch 1 oder 2,
wobei die mindestens zwei Wellenleiter mit schwindendem Kern polarisationserhaltende Wellenleiter mit schwindendem Kern sind, die einen nicht kreisförmigen äußeren Kern umfassen, wobei jeder so betrieben werden kann, dass er mindestens einen optischen Polarisationsmodus führt, und wobei für die mindestens zwei polarisationserhaltenden Wellenleiter mit schwindendem Kern die folgenden Parameter:

Querschnittsform des ersten nicht kreisförmigen äußeren Kerns und Querschnittsform des zweiten nicht-kreisförmigen äußeren Kerns so gewählt sind, dass sie den mindestens zwei polarisationserhaltenden Wellenleitern mit schwindendem Kern polarisationserhaltende Eigenschaften verleihen, und wobei die Größen des zweiten äußeren Kerns, OCS-2, der polarisationserhaltenden Wellenleiter mit schwindendem Kern und der vorgegebene Abstand zwischen den Wellenleitern am zweiten Ende so gewählt werden, dass sie ausreichen, um mindestens zwei optische Polarisationsmodi,
einen ersten und einen zweiten Polarisationsmodus, in dem kombinierten Wellenleiter zu führen, der durch die beiden äußeren Kerne gebildet wird, so dass mindestens einer der Polarisationsmodi des Lichts, das von dem ersten Ende zu dem zweiten Ende wandert, aus dem inneren schwindenden Kern in den entsprechenden äußeren Kern austritt und dann in den kombinierten Wellenleiter, der durch die beiden äußeren Kerne gebildet wird, nahe dem zweiten Endes eingekoppelt wird, und
der erste Polarisationsmodus des Lichts, das von dem zweiten Ende zu dem ersten Ende wandert, von dem kombinierten Wellenleiter, der von den zwei äußeren Kernen gebildet wird, in einen ersten äußeren Kern und dann nahe dem ersten Ende in den entsprechenden inneren schwindenden Kern übertritt, und
der zweite Polarisationsmodus des Lichts, das von dem zweiten Ende zu dem ersten Ende wandert, von dem kombinierten Wellenleiter, der von den zwei äußeren Kernen gebildet wird, in einen zweiten äußeren Kern und dann nahe dem ersten Ende in den entsprechenden inneren schwindenden Kern übertritt.

## Revendications

1. Réseau de coupleurs optiques pour coupler optiquement une pluralité de fibres optiques à un dispositif optique, comprenant :
un élément optique allongé ayant une première extrémité pouvant fonctionner pour couplage optique avec ladite pluralité de fibres optiques, une section transversale intermédiaire, et une seconde extrémité pouvant fonctionner pour couplage optique avec ledit dispositif optique, et comprenant :
une structure de logement de coupleur unique commune ; une pluralité de guides d'onde longitudinaux chacun positionné à un espacement prédéterminé les uns des autres, chacun ayant une capacité pour au moins un mode optique d'un profil de champ de mode prédéterminé, chacun incorporé dans ladite structure de logement unique commune à proximité de ladite seconde extrémité, dans lequel au moins deux de ladite pluralité de guides d'onde longitudinaux sont des guides d'onde à noyau de fuite, chacun desdits au moins deux guides d'onde à noyau de fuite comprenant :
un noyau de fuite interne, ayant un premier indice de réfraction, N-1, et ayant une première taille de noyau interne, ICS-1, au niveau de ladite première extrémité, une taille de noyau interne intermédiaire, ICS-IN, au niveau de ladite section transversale intermédiaire, et une seconde taille de noyau interne, ICS-2, au niveau de ladite seconde extrémité ; un noyau externe, entourant longitudinalement ledit noyau de fuite interne, ayant un second indice de réfraction, N-2, et ayant une première taille de noyau externe, OCS-1, au niveau de ladite première extrémité, une taille de noyau externe intermédiaire, OCS-IN, au niveau de ladite section transversale intermédiaire, et une seconde taille de noyau externe, OCS-2, au niveau de ladite seconde extrémité, et une gaine externe, entourant longitudinalement ledit noyau externe, ayant un troisième indice de réfraction, N-3, une première taille de gaine au niveau de ladite première extrémité, et une seconde taille de gaine au niveau de ladite seconde extrémité ; et dans lequel ladite structure de logement de coupleur unique commune comprend un milieu transversalement contigu ayant un quatrième indice de réfraction, N-4, entourant ladite pluralité de guides d'onde longitudinaux, dans lequel une relation d'amplitude relative prédéterminée entre lesdits premier, second, et troisième indices de réfraction, N-1, N-2 et N-3, respectivement, comprend la relation d'amplitude suivante : N-1 > N-2 > N-3, dans lequel un volume total dudit milieu de ladite structure de logement de coupleur unique commune est supérieur à un volume total de tous lesdits noyaux de fuite internes et lesdits noyaux externes des guides d'onde à noyau de fuite confinés dans ladite structure de logement de coupleur unique commune, et dans lequel ladite première taille de noyau interne, ICS-1, ladite première taille de noyau externe, OCS-1, et ledit espacement prédéterminé entre ladite pluralité de guides d'onde longitudinaux, sont réduits simultanément et progressivement, selon un profil de réduction prédéterminé, entre ladite première extrémité et ladite seconde extrémité le long dudit élément optique, jusqu'à ce que ladite seconde taille de noyau interne, ICS-2, et ladite seconde taille de noyau externe, OCS-2, soient atteintes, dans lequel ladite taille de noyau interne intermédiaire, ICS-IN, est sélectionnée pour être insuffisante pour guider la lumière à travers elle, et ladite taille de noyau externe intermédiaire, OCS-IN, est sélectionnée pour être suffisante pour guider au moins un mode optique, **caractérisé en ce que** ladite seconde taille de noyau externe, OCS-2, est sélectionnée pour être insuffisante pour guider de la lumière à travers elle de telle manière que :

la lumière allant de ladite première extrémité à ladite seconde extrémité s'échappe dudit noyau de fuite interne dans ledit noyau externe correspondant à proximité de ladite section transversale intermédiaire, et s'échappe dudit noyau externe dans un guide d'onde combiné formé par au moins deux noyaux externes voisins des au moins deux guides d'onde à noyau de fuite interne à proximité de ladite seconde extrémité, et
au moins un mode de guide d'onde de la lumière allant de ladite seconde extrémité à ladite première extrémité se déplace du guide d'onde combiné formé par les au moins deux noyaux externes voisins dans ledit noyau externe à proximité de ladite section transversale intermédiaire, et se déplace dudit noyau externe dans ledit noyau de fuite interne correspondant à proximité de ladite première extrémité.

2. Réseau de coupleurs optiques selon la revendication 1, dans lequel ladite structure de logement de coupleur unique commune à proximité de ladite première extrémité a une configuration en section transversale comprenant une structure transversalement contigüe avec au moins un trou, dans lequel l'au moins un trou contient au moins un de ladite pluralité de guides d'onde longitudinaux créant un espace entre la structure de logement de coupleurs et l'au moins un de ladite pluralité de guides d'onde longitudinaux.

3. Réseau de coupleurs optiques selon la revendication 1 ou 2, dans lequel l'au moins un mode guide d'onde comprend au moins un mode spatial.

4. Réseau de coupleurs optiques selon la revendication 1 ou 2, dans lequel les au moins deux guides d'onde à noyau de fuite comprennent au moins deux guides d'onde à noyau de fuite à maintien de polarisation, et dans lequel l'au moins un mode de guide d'onde comprend un premier mode de polarisation et un second mode de polarisation.

5. Réseau de coupleurs optiques selon la revendication 1 ou 2, dans lequel lesdits au moins deux guides d'onde à noyau de fuite sont des guides d'onde à noyau de fuite à maintien de polarisation comprenant un noyau externe non circulaire, chacun pouvant fonctionner pour guider au moins un mode polarisation optique, et dans lequel pour lesdits au moins deux guides d'onde à noyau de fuite à maintien de polarisation, les paramètres suivants :

forme en section transversale du premier noyau externe non circulaire, et
forme en section transversale du second noyau externe non circulaire,
sont sélectionnés pour fournir des propriétés de maintien de polarisation auxdits au moins deux guides d'onde à noyau de fuite à maintien de polarisation, et dans lequel lesdites secondes tailles de noyaux externes, OCS-2, desdits guides d'onde à noyau de fuite à maintien de polarisation et ledit espacement prédéterminé entre les guides d'onde au niveau de ladite seconde extrémité, sont sélectionnés pour être suffisants pour guider au moins deux modes de polarisation optique, des premier et second modes de polarisation, dans ledit guide d'onde combiné formé par lesdits deux noyaux externes, de telle manière que :

au moins un desdits modes de polarisation de la lumière passant de ladite première extrémité vers ladite seconde extrémité s'échappe dudit premier noyau de fuite interne dans ledit noyau externe correspondant et est ensuite couplé dans ledit guide d'onde combiné formé par lesdits deux noyaux externes à proximité de ladite seconde extrémité, et
ledit premier mode de polarisation de la lumière passant de ladite seconde extrémité vers ladite première extrémité se déplace depuis ledit guide d'onde combiné formé par lesdits deux noyaux externes dans un premier noyau externe et ensuite dans ledit noyau de fuite interne correspondant à proximité de ladite première extrémité, et
ledit second mode de polarisation de la lumière passant de ladite seconde extrémité vers ladite première extrémité se déplace depuis ledit guide d'onde combiné formé par lesdits deux noyaux externes dans un second noyau externe et ensuite dans ledit noyau de fuite interne correspondant à proximité de ladite première extrémité.

## FIG. 1A

A  12A  B  36A-1  30A  **10A**  C  D

36A-2  32A-1  20A  22A  24A  14A  S2

34A-2  16A  42A

S1

34A-1  N-1  N-2  N-3  N-4  26A  40A

34A-3  18A  INT-2

36A-2

32A-2

28A  INT-1

## FIG. 1B

**10B**

14B

30B  INT-2

S2'  42B  40B

S1  INT-1  18B

32B  C'

## FIG: 1C

## FIG: 1D

**FIG. 2A**

**FIG. 2B**

**FIG. 2C**

100C

102C        104C

132C-1     130C-1

INT-2

134C-1

INT-1

132C-2

INT-1

134C-2

130C-2

INT-2

**FIG. 2D**

150

160a

160b

154   156

152

INT-1

INT-2

**FIG. 3A**

200A

210A

202A

X

Y

204A-(1..n)

Z

**FIG. 3B**

200B

206B-(1..n)

202B

204B

## FIG. 3C

200C

202C

204C

206C-(1..n)

## FIG. 3D

200D

202D

206D-(1-..N)

204D-(1..n)

**FIG. 3E**

**200E**

202E

204E-(1..N)

206E'

206E-(1..n)

**FIG. 3F**

**200F**

204F'

202F

204F-(1..n)

206F-(1..n)

**FIG. 3G**

200G

202G

204G

206G-(1..n)

**FIG. 3H**

200H

202H

204H

206H-(1..n)

**FIG. 3I**

**200I**

204I

202I

206I-(1..n)

**FIG. 3J**

**200J**

202J

208J

204J

206J-(1..n)

**FIG. 3K**

**FIG. 3L**

*FIG.4*

INT-1

300

302

INT-2

304

306

320

326

324

INT-1

322

INT-2

*FIG.5*

# FIG. 6 (Prior Art)

**400**

408

Material with refractive index lower than that of standard fiber cladding

Cores of standard fibers

Standard, matched cladding fibers

Claddings of standard fibers

# FIG. 7

410

Fusion splice

Common housing structure (n4)

"Vanishing" inner cores (n1)

Port 1

Port 3

Standard fibers

Specialty fiber cladding (n3)

Port 2

Outer (new) cores (n2)

Specialty, "vanishing core" fibers

Light guiding areas

Light guiding areas

Light guiding area

# FIG. 8

# FIG. 9

**FIG. 10A**

**FIG. 10B**

**FIG. 10C**

100 10C

100 32C-1
100 32C-a
100 32C-2
INT-1
100 30C-2
INT-1
100 30C-1

INT-2
INT-2
INT-2

**FIG. 10D**

100 50

100 10D-1
100 52
100 10D-2

INT-2
INT-2'

INT-1
100 54-1
100 54-2
INT-1'

**FIG. 11A**

**FIG. 11B**

**FIG. 11C**

*lo***100C**

*lo***102C**          *lo***104C**

*lo***132C-1**

*lo***130C-1**

INT-2

*lo***134C-1**

INT-1

*lo***134C-2**

INT-1

INT-2

*lo***132C-2**

*lo***130C-2**

**FIG. 11D**

*lo***160a**

*lo***150**

*lo***160b**

*lo***154**   *lo***156**

INT-1

INT-2

*lo***152**

**FIG. 12A**

**FIG. 12B**

**FIG. 12C**

*ι∂* **200C**

*ι∂* 202C

*ι∂* 204C

*ι∂* 206C-(1..n)

**FIG. 12D**

*ι∂* **200D**

*ι∂* 202D

*ι∂* 206D-(1 ..N)

*ι∂* 204D-(1..n)

**FIG. 12E**

*IO* **200E**

*IO* 202E

*IO* 204E-(1..N)

*IO* 206E'

*IO* 206E-(1..n)

**FIG. 12F**

*IO* **200F**

*IO* 204F'

*IO* 202F

*IO* 204F-(1..n)

*IO* 206F-(1..n)

**FIG. 12G**

FIG. 12G — 200G, 202G, 204G, 206G-(1..n)

**FIG. 12H**

FIG. 12H — 200H, 202H, 204H, 206H-(1..n)

EP 3 635 459 B1

**FIG. 12I**

**FIG. 12J**

67

**FIG. 12K**

208K-a

200K

204K

206K-(1..n)

202K

208K-b

**FIG. 12L**

208L-a

200L

202L

206L-(1..n)

204L

y

FIG. 13

INT-1

10300

10302

INT-2

10304

10306

10320

INT-1

10322

10326

INT-2

10324

FIG. 14

# FIG. 15 (Prior Art)

*10400*

*10408*

Material with refractive index lower than that of standard fiber cladding

Cores of standard fibers

Standard, matched cladding fibers

Claddings of standard fibers

## FIG. 16

**FIG. 17**

**FIG. 18**

**FIG. 19**

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7308173 B
- US 8326099 B
- US 8712199 A
- US 20160245992 A1
- US 20130216184
- US 20120257857
- US 677810
- US 617684